# EUROPEAN PATENT APPLICATION

(11) **EP 1 424 554 A1**
(43) Date of publication of application: **02.06.2004**
(21) Application number: 02755787.5
(22) Date of filing: 02.08.2002
(51) Int. Cl.: G01N 31/00, G01N 31/22, G01N 21/77

(54) **REAGENT FOR DETERMINING HYDROGEN PEROXIDE**

(30) Priority: 02.08.2001 JP 2001234597
(71) Applicant: KYOWA MEDEX CO., LTD., Tokyo 104-0042 (JP); Fuji Photo Film Co. Ltd., Kanagawa 250-0193 (JP)
(72) Inventor: OKABE, Kazuaki Kyowa Med.Res. Lab. Medex Co. Ltd., Sunto-gun, (JP); KADOTA, Akira HEAD OFF., KYOWA MEDEX CO., LTD., Tokyo 104-0042 (JP); AOKI, Kozo HEAD OFFICE, FUJI PHOTO FILM CO., Ltd., Tokyo 106-8620 (JP); TAKAHASHI, Kazunobu FUJI PHOTO FILM CO., LTD., Minami-ashigara-shi, Kanagawa 250-0193 (JP); SAKURADA, Masami FUJI PHOTO FILM CO., LTD., Minami-ashigara-shi, Kanagawa 250-0193 (JP); NAKAMURA, Kouki FUJI PHOTO FILM CO., LTD., Minami-ashigara-shi, Kanagawa 250-0193 (JP)
(74) Representative: Tanner, James Percival
(86) International application number: PCT/JP2002/007905
(87) International publication number: WO 2003/014725

(57) **Abstract**

A reagent for determination of hydrogen peroxide which comprises (A) a compound represented by the following general formula (I):

**R**^{**1**}**-NH-R**^{**2**} **(I)**

(wherein R¹ represents a carbamoyl group or the like, and R² represents an arylamino group, a heteroarylamino group, or a substituent represented by the following general formula (II): 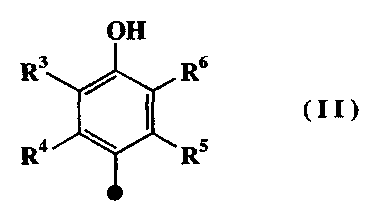 [wherein R³ to R⁶ represent X-Y-R^{a} {R^{a} represents a hydrogen atom, an alkyl group or the like, X represents a single bond, O or the like, and Y represents a single bond, (C=O) or the like}, a cyano group, a halogen atom or the like]> ; (B) a compound represented by the general formula (III): 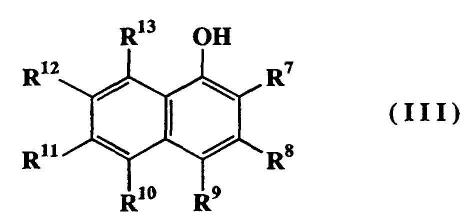 [wherein R⁹ represents a group which can be eliminated by oxidative coupling color-developing reaction with the compound represented by the formula (I), and R⁷, R⁸, and R¹⁰ to R¹³ have the same meaning as that of R³], or the like; and (C) a peroxidative substance.

## Description

### Technical Field

The present invention relates to a method for determination of hydrogen peroxide, a method for determination of a peroxidative substance, a method for determination of a substance or an enzyme to be determined in a sample, a reagent for determination of hydrogen peroxide, a reagent for determination of a peroxidative substance, a reagent for determination of a substance or an enzyme to be determined in a sample, a kit for determination of hydrogen peroxide, a kit for determination of a peroxidative substance, and a kit for determination of a substance or an enzyme to be determined in a sample.

### Background Art

In the field of clinical examination, a method, in which an objective substance is determined by colorimetry has been widely used so far, wherein the objective substance is converted into hydrogen peroxide using an oxidizing enzyme, and then the hydrogen peroxide is led to a dye in the presence of peroxidase and a chromogen. The chromogens used in this colorimetry method are roughly classified into a coupling type of chromogens and a leuco type of chromogens. As the coupling type of chromogen, a combination of 4-aminoantipyrin (hereinafter sometimes abbreviated as "4-AA" in the specification) and a phenol derivative or an aniline derivative, a combination of a hydrazine derivative and a phenol derivative or a naphthol derivative (Japanese Published Unexamined Patent Application No. 209360/1987) and the like are known.

As the phenol derivative which can be combined with 4-AA, examples include phenol, 3-hydroxy-2,4,6-triiodobenzoic acid and the like. As the aniline derivative which can be combined with 4-AA, examples include N-ethyl-N-(3-methylphenyl)-N'-succinylethylenediamine (EMSE), N-(3,5-dimethoxyphenyl)-N'-succinylethylenediamine sodium salt (DOSE), N-ethyl-N-(2-hydroxy-3-sulfopropyl)-3-methylaniline sodium salt dihydrate (TOOS), N-ethyl-N-(2-hydroxy-3-sulfopropyl)-3,5-dimethoxyaniline (DAOS), N-(2-hydroxy-3-sulfopropyl)-3,5-dimethoxyaniline sodium salt (HSDA) and the like.

As the leuco type of chromogen, phenothiazine derivatives (Japanese Published Unexamined Patent Application No. 29297/1982), triarylmethane derivatives (Japanese Published Unexamined Patent Application Nos. 31641/1981, 296/1987, 184400/1985, 36196/1992, and 197795/1994) and the like are known.

Japanese Published Unexamined Patent Application No. 209360/1987 discloses a method for determination of hydrogen peroxide, wherein hydrogen peroxide is allowed to react with a hydrazine derivative (a dye generating compound), and a phenol derivative or a naphthol derivative (a coloring coupler) in the presence of a cationic mordant and peroxidase, and then the hydrogen peroxide is determined based upon absorbance of the generated dye.

In clinical diagnoses, the amount of a test sample has been decreasing and is becoming very small, and as for a form of a reagent, conventional lyophilized reagents are being replaced with liquid reagents. In order to meet this trend in clinical diagnoses, development of a chromogen has been strongly desired which exists stably in a solution, has high sensitivity, and is hardly influenced by coexisting substances in a sample (hemoglobin, bilirubin and the like).

### Disclosure of the Invention

An object of the present invention is to provide a method for determination of hydrogen peroxide using a coupling type of chromogen with high sensitivity, and a reagent and a kit to be used in the method. The inventors of the present invention conducted various studies to achieve the foregoing object. As a result, they have succeeded in providing the following invention.

The present invention thus provides
[1] a reagent for determination of hydrogen peroxide which comprises the following ingredients (A), (B), and (C):
   (A) a compound represented by the following general formula (I) or a salt thereof (hereinafter referred to as "compound (I)" in the specification):

      **R**^{**1**}**-NH-R**^{**2**} **(I)**

      <wherein R¹ represents a substituted or unsubstituted carbamoyl group, a substituted or unsubstituted sulfamoyl group, or a substituted or unsubstituted sulfino group; and R² represents a substituted or unsubstituted arylamino group, a substituted or unsubstituted heteroarylamino group, or a substituent represented by the following general formula (II) (hereinafter referred to as "substituent II" in the specification): 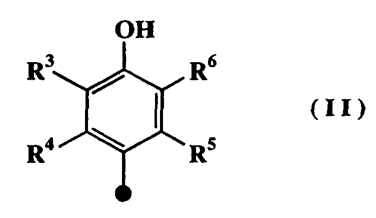 [wherein R³, R⁴, R⁵, and R⁶ are the same or different and represent X-Y-R^{a} {wherein R^{a} represents a hydrogen atom, a substituted or unsubstituted alkyl group, a substituted or unsubstituted cycloalkyl group, a substituted or unsubstituted aralkyl group, a substituted or unsubstituted alkenyl group, a substituted or unsubstituted cycloalkenyl group, a substituted or unsubstituted alkynyl group, a substituted or unsubstituted aryl group, a substituted or unsubstituted heteroaryl group, or a substituted or unsubstituted aliphatic heterocyclic group; X represents a single bond, O or (N(R^{b}))ₘN(R^{c}) (wherein m represents 0 or 1, and R^{b} and R^{c} are the same or different and each has the same meaning as that of the aforementioned R^{a}); and Y represents a single bond or Z-Q [wherein Z represents (C=O), (C=S), (C=N(R^{d})) (wherein R^{d} has the same meaning as that of the aforementioned R^{a}), (C=N(OR^{e})) (wherein R^{e} has the same meaning as that of the aforementioned R^{a}), or SO₂; and Q represents a single bond, O, S, or N(R^{f}) (wherein R^{f} has the same meaning as that of the aforementioned R^{a})], and X and Y combine together to form X-Y which represents S(O)ₙ (wherein n represents 0 or 1), and any two of R^{a}, R^{b}, R^{c}, R^{d}, R^{e}, and R^{f} may form a ring together with atoms adjacent thereto, respectively}, a cyano group, a nitroso group, a nitro group, an isonitrile group, isocyanate group, a thioisocyanate group, a halogen atom, a phosphono group, or a substituted or unsubstituted silyl group]>; (B) a compound selected from the group consisting of a compound represented by the general formula (III) or a salt thereof (hereinafter referred to as "compound (III)"): 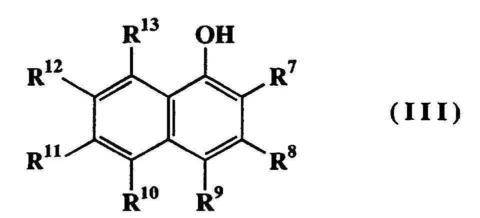 [wherein R⁹ represents a group which can be eliminated by oxidative coupling color-developing reaction with the aforementioned compound (I), and R⁷, R⁸, R¹⁰, R¹¹, R¹², and R¹³ are the same or different and each has the same meaning as that of the aforementioned R³] [provided that when R¹ is a sulfino group substituted with a substituted or unsubstituted aryl group, and R² is a substituted or unsubstituted 2-pyridylamino group, compounds, wherein (1) R⁷, R⁸, R⁹, R¹⁰, R¹¹, R¹², and R¹³ are all hydrogen atoms; (2) R⁷, R⁸, R⁹, R¹⁰, R¹¹, and R¹³ are hydrogen atoms and R¹² is a hydroxyl group; (3) R⁷, R⁸, R⁹, R¹⁰, R¹¹, and R¹² are hydrogen atoms and R¹³ is a sulfo group; and (4) R⁷, R⁸, R⁹, R¹⁰, R¹¹, and R¹² are hydrogen atoms and R¹³ is an amino group, are excluded];
      and a compound represented by the general formula (IV) or a salt thereof (hereinafter referred to as "compound (IV)" in the specification): 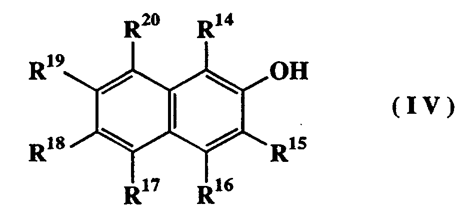 [wherein R¹⁴ represents a group which can be eliminated by oxidative coupling color-developing reaction with the aforementioned compound (I), R¹⁵, R¹⁶, R¹⁷, R¹⁸, R¹⁹, and R²⁰ are the same or different and each has the same meaning as that of the aforementioned R³] [provided that when R¹ is a sulfino group substituted with a substituted or unsubstituted aryl group, and R² is a substituted or unsubstituted 2-pyridylamino group, compounds wherein (1) R¹⁴, R¹⁵, R¹⁶, R¹⁷, R¹⁸, and R¹⁹ are hydrogen atoms, and R²⁰ is a hydroxyl group; (2) R¹⁴, R¹⁵, R¹⁶, R¹⁷, R¹⁸, and R²⁰ are hydrogen atoms, and R¹⁹ is a hydroxyl group; and (3) R¹⁴, R¹⁵, R¹⁶, R¹⁷, R¹⁸, and R¹⁹ are hydrogen atoms, and R²⁰ is an amino group, are excluded]; and
   (C) a peroxidative substance.

The present invention also provides
[2] a reagent for determination of a peroxidative substance which comprises the following ingredients (A), (B), and (D):
   (A) the aforementioned compound (I);
   (B) a compound selected from the group consisting of the aforementioned compound (III) and the compound (IV); and
   (D) hydrogen peroxide.

The present invention further provides
[3] a reagent for determination of a substance or an enzyme to be determined in a sample which comprises:
   (A) the aforementioned compound (I);
   (B) a compound selected from the group consisting of the aforementioned compound (III) and the compound (IV);
   (C) a peroxidative substance; and
   (E) a reagent for directly or indirectly converting the substance to be determined in a sample into hydrogen peroxide or a reagent for directly or indirectly generating hydrogen peroxide by reacting with the enzyme to be determined in a sample.

As preferred embodiments of these reagents, provided are:
[4] the reagent according to any one of [1] to [3], wherein R¹ is a substituted or unsubstituted carbamoyl group or a substituted or unsubstituted sulfino group;
[5] the reagent according to [4], wherein the substituent of the substituted carbamoyl group or the substituent of the substituted sulfino group in R¹ is a substituted or unsubstituted alkyl group, a substituted or unsubstituted aryl group, a substituted or unsubstituted heteroaryl group, or a substituted or unsubstituted aliphatic heterocyclic group;
[6] the reagent according to any one of [1] to [5], wherein R² is a substituted or unsubstituted 4-quinazolinylamino group;
[7] the reagent according to any one of [1] to [6], wherein R² is the substituent (II), and at least one of R³ and R⁶ in the substituent (II) has the Hammett constant sp of a positive value;
[8] the reagent according to any one of [1] to [7], wherein R⁷ is Z¹-N(R^{f})-R^{a} (wherein R^{a} and R^{f} each have the same meanings as those mentioned above, and Z¹ represents (C=O) or SO₂), a substituted or unsubstituted alkanoylamino group, or a halogen atom;
[9] the reagent according to any one of [1] to [8], wherein R⁹ is a hydrogen atom, a halogen atom, a substituted or unsubstituted aryloxy group, a substituted or unsubstituted heteroaryloxy group, a substituted or unsubstituted aliphatic heterocycle-oxy group, a substituted or unsubstituted alkanoyloxy group, a substituted or unsubstituted aroyloxy group, a substituted or unsubstituted heteroaroyloxy group, a substituted or unsubstituted aliphatic heterocycle carbonyloxy group, a substituted or unsubstituted alkoxycarbonyloxy group, a substituted or unsubstituted heteroaryloxycarbonyloxy group, a substituted or unsubstituted aliphatic heterocycle-oxycarbonyloxy group, a substituted or unsubstituted carbamoyloxy group, a substituted or unsubstituted sulfamoyloxy group, a substituted or unsubstituted arylthio group, a substituted or unsubstituted heteroarylthio group, or a substituted or unsubstituted aliphatic heterocycle-thio group;
[10] the reagent according to any one of [1] to [9], wherein R¹⁰ is a substituted or unsubstituted alkanoylamino group, a substituted or unsubstituted alkylsulfonylamino group, a substituted or unsubstituted arylsulfonylamino group, a substituted or unsubstituted heteroarylsulfonylamino group, a substituted or unsubstituted aliphatic heterocycle-sulfonylamino group, or a substituted or unsubstituted alkoxycarbonylamino group;
[11] the reagent according to any one of [1] to [10], wherein the peroxidative substance is peroxidase;
[12] a kit for determination of hydrogen peroxide which comprises:
   (F) a reagent comprising the aforementioned compound (I) and a peroxidative substance; and
   (G) a reagent comprising a compound selected from the group consisting of the aforementioned compound (III) and the compound (IV);
[13] a kit for determination of a peroxidative substance which comprises:
   (H) a reagent comprising the aforementioned compound (I) and hydrogen peroxide; and
   (G) a reagent comprising a compound selected from the group consisting of the aforementioned compound (III) and the compound (IV);
[14] a kit for determination of a substance or an enzyme to be determined in a sample which comprises:
   (F) a reagent comprising the aforementioned compound (I) and a peroxidative substance; and
   (G) a reagent comprising a compound selected from the group consisting of the aforementioned compound (III) and the compound (IV);
      wherein the aforementioned (F) and/or (G) comprises
      (E) a reagent for directly or indirectly converting the substance to be determined in a sample into hydrogen peroxide or a reagent for directly or indirectly generating hydrogen peroxide by reacting with the enzyme to be determined in a sample;
[15] a kit for determination of hydrogen peroxide which comprises:
   (J) a reagent comprising the aforementioned compound (I); and
   (K) a reagent comprising a compound selected from the group consisting of the aforementioned compound (III) and the compound (IV), and a peroxidative substance;
[16] a kit for determination of a peroxidative substance which comprises:
   (J) a reagent comprising the aforementioned compound (I); and
   (L) a reagent comprising a compound selected from the group consisting of the aforementioned compound (III) and the compound (IV), and hydrogen peroxide;
[17] a kit for determination of a substance or an enzyme to be determined in a sample which comprises:
   (J) a reagent comprising the aforementioned compound (I); and
   (K) a reagent comprising a compound selected from the group consisting of the aforementioned compound (III) and the compound (IV), and a peroxidative substance;
      wherein the aforementioned (J) and/or (K) comprises
      (E) a reagent for directly or indirectly converting the substance to be determined in a sample into hydrogen peroxide or a reagent for directly or indirectly generating hydrogen peroxide by reacting with the enzyme to be determined in a sample;
[18] a kit for determination of hydrogen peroxide which comprises:
   (F) a reagent comprising the aforementioned compound (I) and a peroxidative substance; and
   (K) a reagent comprising a compound selected from the group consisting of the aforementioned compound (III) and the compound (IV), and a peroxidative substance;
[19] a kit for determination of a peroxidative substance which comprises:
   (H) a reagent comprising the aforementioned compound (I) and hydrogen peroxide; and
   (L) a reagent comprising a compound selected from the group consisting of the aforementioned compound (III) and the compound (IV), and hydrogen peroxide;
[20] a kit for determination of a substance or an enzyme to be determined in a sample which comprises:
   (F) a reagent comprising the aforementioned compound (I) and a peroxidative substance; and
   (K) a reagent comprising a compound selected from the group consisting of the aforementioned compound (III) and the compound (IV), and a peroxidative substance;
      wherein the aforementioned (F) and/or (K) comprises
      (E) a reagent for directly or indirectly converting the substance to be determined in a sample into hydrogen peroxide or a reagent for directly or indirectly generating hydrogen peroxide by reacting with the enzyme to be determined in a sample;
[21] the kit according to any one of [12] to [20], wherein R¹ is a substituted or unsubstituted carbamoyl group or a substituted or unsubstituted sulfino group;
[22] the kit according to [21], wherein the substituent of the substituted carbamoyl group or the substituent of the substituted sulfino group in R¹ is a substituted or unsubstituted alkyl group, a substituted or unsubstituted aryl group, a substituted or unsubstituted heteroaryl group, or a substituted or unsubstituted aliphatic heterocyclic group;
[23] the kit according to any one of [12] to [22], wherein R² is a substituted or unsubstituted 4-quinazolinylamino group;
[24] the kit according to any one of [12] to [23], wherein R² is the substituent (II), and at least one of R³ and R⁶ in the substituent (II) has the Hammett constant σₚ of a positive value;
[25] the kit according to any one of [12] to [24], wherein R⁷ is Z¹-N(R^{f})-R^{a} (wherein Z¹, R^{a} and R^{f} each have the same meanings as those mentioned above), a substituted or unsubstituted alkanoylamino group or a halogen atom;
[26] the kit according to any one of [12] to [25], wherein R⁹ is a hydrogen atom, a halogen atom, a substituted or unsubstituted aryloxy group, a substituted or unsubstituted heteroaryloxy group, a substituted or unsubstituted aliphatic heterocycle-oxy group, a substituted or unsubstituted alkanoyloxy group, a substituted or unsubstituted aroyloxy group, a substituted or unsubstituted heteroaroyloxy group, a substituted or unsubstituted aliphatic heterocycle-carbonyloxy group, a substituted or unsubstituted alkoxycarbonyloxy group, a substituted or unsubstituted heteroaryloxycarbonyloxy group, a substituted or unsubstituted aliphatic heterocycle-oxycarbonyloxy group, a substituted or unsubstituted carbamoyloxy group, a substituted or unsubstituted sulfamoyloxy group, a substituted or unsubstituted arylthio group, a substituted or unsubstituted heteroarylthio group, or a substituted or unsubstituted aliphatic heterocycle-thio group;
[27] the kit according to any one of [12] to [26], wherein R¹⁰ is a substituted or unsubstituted alkanoylamino group, a substituted or unsubstituted alkylsulfonylamino group, a substituted or unsubstituted arylsulfonylamino group, a substituted or unsubstituted heteroarylsulfonylamino group, a substituted or unsubstituted aliphatic heterocycle-sulfonylamino group, or a substituted or unsubstituted alkoxycarbonylamino group;
[28] the kit according to any one of [12] to [27], wherein the peroxidative substance is peroxidase;
[29] a method for determination of hydrogen peroxide which comprises the following steps:
   (1) a step of reacting hydrogen peroxide with the following compounds (A) and (B) in the presence of a peroxidative substance:
      (A) the aforementioned compound (I)
      (B) a compound selected from the group consisting of the aforementioned compound (III) and the compound (IV); and
   (2) a step of carrying out colorimetry of a dye generated in the aforementioned step (1);
[30] a method for determination of a peroxidative substance which comprises the following steps:
   (1) a step of reacting a peroxidative substance with the following (A) and (B) in the presence of hydrogen peroxide:
      (A) the aforementioned compound (I)
      (B) a compound selected from the group consisting of the aforementioned compounds (III) and (IV); and
   (2) a step of carrying out colorimetry of a dye generated in the aforementioned step (1);
[31] a method for determination of a substance or an enzyme to be determined in a sample which comprises the following steps:
   (1) a step of reacting a sample containing a substance or an enzyme to be determined with the following (A), (B) and (E) in the presence of a peroxidative substance:
      (A) the aforementioned compound (I)
      (B) a compound selected from the group consisting of the aforementioned compound (III) and the compound (IV)
      (E) a reagent for directly or indirectly converting the substance to be determined in a sample into hydrogen peroxide or a reagent for directly or indirectly generating hydrogen peroxide by reacting with the enzyme to be determined in a sample; and
   (2) a step of carrying out colorimetry of a dye generated in the aforementioned step (1);
[32] the method according to any one of [29] to [31], wherein R¹ is a substituted or unsubstituted carbamoyl group or a substituted or unsubstituted sulfino group;
[33] the method according to [32], wherein the substituent of the substituted carbamoyl group or the substituent of the substituted sulfino group in R¹ is a substituted or unsubstituted alkyl group, a substituted or unsubstituted aryl group, a substituted or unsubstituted heteroaryl group, or a substituted or unsubstituted aliphatic heterocyclic group;
[34] the method according to any one of [29] to [33], wherein R² is a substituted or unsubstituted 4-quinazolinylamino group;
[35] the method according to any one of [29] to [34], wherein R² is the substituent (II), and at least one of R³ and R⁶ in the substituent (II) has the Hammett constant σₚ of a positive value;
[36] the method according to any one of [29] to [35], wherein R⁷ is Z¹-N(R^{f})-R^{a} (wherein Z¹, R^{a} and R^{f} each have the same meanings as those mentioned above), a substituted or unsubstituted alkanoylamino group, or a halogen atom;
[37] the method according to any one of [29] to [36], wherein R⁹ is a hydrogen atom, a halogen atom, a substituted or unsubstituted aryloxy group, a substituted or unsubstituted heteroaryloxy group, a substituted or unsubstituted aliphatic heterocycle-oxy group, a substituted or unsubstituted alkanoyloxy group, a substituted or unsubstituted aroyloxy group, a substituted or unsubstituted heteroaroyloxy group, a substituted or unsubstituted aliphatic heterocycle-carbonyloxy group, a substituted or unsubstituted alkoxycarbonyloxy group, a substituted or unsubstituted heteroaryloxycarbonyloxy group, a substituted or unsubstituted aliphatic heterocycle-oxycarbonyloxy group, a substituted or unsubstituted carbamoyloxy group, a substituted or unsubstituted sulfamoyloxy group, a substituted or unsubstituted arylthio group, a substituted or unsubstituted heteroarylthio group, or a substituted or unsubstituted aliphatic heterocycle-thio group;
[38] the method according to any one of [29] to [37], wherein R¹⁰ is a substituted or unsubstituted alkanoylamino group, a substituted or unsubstituted alkylsulfonylamino group, a substituted or unsubstituted arylsulfonylamino group, a substituted or unsubstituted heteroarylsulfonylamino group, a substituted or unsubstituted aliphatic heterocycle-sulfonylamino group, or a substituted or unsubstituted alkoxycarbonylamino group; and
[39] the method according to any one of [29] to [38], wherein the peroxidative substance is peroxidase.

### Brief Description of the Drawings

Fig.1 shows correlation between the uric acid concentration and absorbance in the determination experiment of uric acid using the compounds (1-12) and (III-4).
Fig.2 shows correlation between the uric acid concentration and absorbance in the determination experiment of uric acid using the compounds (I-12) and (III-7).
Fig.3 shows correlation between the uric acid concentration and absorbance in the determination experiment of uric acid using the compounds (1-12) and (III-10).
Fig.4 shows correlation between the uric acid concentration and absorbance in the determination experiment of uric acid using the compounds (I-12) and (III-11).
Fig.5 shows correlation between the uric acid concentration and absorbance in the determination experiment of uric acid using the compounds (1-12) and (III-12).
Fig.6 shows correlation between the uric acid concentration and absorbance in the determination experiment of uric acid using the compounds (I-13) and (III-4).
Fig.7 shows correlation between the uric acid concentration and absorbance in the determination experiment of uric acid using the compounds (I-14) and (III-4).
Fig.8 shows correlation between the uric acid concentration and absorbance in the determination experiment of uric acid using the compounds (1-15) and (III-4).
Fig.9 shows correlation between the uric acid concentration and absorbance in the determination experiment of uric acid using the compounds (1-16) and (III-4).
Fig.10 shows correlation between the uric acid concentration and absorbance in the determination experiment of uric acid using the compounds (1-28) and (III-21).
Fig.11 shows correlation between the uric acid concentration and absorbance in the determination experiment of uric acid using the compounds (1-33) and (III-10).
Fig.12 shows correlation between the uric acid concentration and absorbance in the determination experiment of uric acid using the compounds (I-34) and (III-21).
Fig.13 shows correlation between the uric acid concentration and absorbance in the determination experiment of uric acid using 4-AA and EMSE.
Fig.14 shows correlation between the creatinine concentration and absorbance in the determination experiment of creatinine using the compounds (1-15) and (III-4).

### Best Mode for Carrying out the Invention

### (Each group in each formula)

In the definition of each group in the formulae (I), (II), (III) and (IV) and the like, examples of the alkyl group in the alkyl group, the alkanoylamino group, the alkylsulfonylamino group, the alkanoyloxy group, the alkoxycarbonyloxy group and the alkoxycarbonylamino group include linear or branched alkyl groups having 1 to 10 carbon atoms such as a methyl group, an ethyl group, a 1-propyl group, a 2-propyl group, a 1-butyl group, a 2-butyl group, a 2-methylpropyl group, a 1,1-dimethylethyl group, a 1-pentyl group, a 2-pentyl group, a 3-pentyl group, a 3-methyl-1-but group, a 2,2-dimethylpropyl group, a 1,1-dimethyl-1-propyl group, a 1-hexyl group, a 2-hexyl group, a 3-hexyl group, a 4-methyl-1-pentyl group, a 3,3-dimethyl-1-butyl group, a 1,1-dimethyl-1-butyl group, a 1-heptyl group, a 2-heptyl group, a 3-heptyl group, a 4-heptyl group, a 5-methyl-1-hexyl group, a 4,4-dimethyl-1-pentyl group, a 1,1-dimethyl-1-pentyl group, a 1-octyl group, a 2-octyl group, a 3-octyl group, a 4-octyl group, a 6-methyl-1-heptyl group, a 5,5-dimethyl-1-hexyl group, a 1,1-dimethyl-1-hexyl group, a 2-ethyl-1-hexyl group, a 2,2,4-trimethyl-4-pentyl group, a 1-nonyl group, a 2-nonyl group, a 3-nonyl group, a 4-nonyl group, a 5-nonyl group, a 7-methyl-1-octyl group, a 6,6-dimethyl-1-heptyl group, a 1,1-dimethyl-1-heptyl group, a 2-ethyl-1-heptyl group, a 2,2,5-trimethyl-4-hexyl group, a 1-decyl group, a 2-decyl group, a 3-decyl group, a 4-decyl group, a 5-decyl group, a 8-methyl-1-nonyl group, a 7,7-dimethyl-1-octyl group, a 1,1-dimethyl-1-octyl group, a 2-ethyl-1-octyl group, and a 2,2,6-trimethyl-4-heptyl group.

Examples of the cycloalkyl group include cycloalkyl groups having 3 to 8 carbon atoms such as a cyclopropyl group, a cyclobutyl group, a cyclopentyl group, a cyclohexyl group, a cycloheptyl group, and a cyclooctyl group.

Examples of the aralkyl group include aralkyl groups having 7 to 15 carbon atoms such as a benzyl group, a phenethyl group, a benzhydryl group, a 1-naphthylmethyl group, and a 2-naphthylmethyl group.

Examples of the alkenyl group include linear or branched alkenyl groups having 2 to 8 carbon atoms such as a vinyl group, a propenyl group, an isopropenyl group, an allyl group, a 1-buten-1-yl group, a 1-buten-2-yl group, a 1-buten-3-yl group, a 1-buten-4-yl group, a 2-buten-1-yl group, a 2-buten-2-yl group, a 2-methyl-1-propenyl group, a 2-methyl-2-propenyl group, a 1-penten-1-yl group, a 1-penten-2-yl group, a 1-penten-3-yl group, a 1-penten-4-yl group, a 1-penten-5-yl group, a 2-penten-1-yl group, a 2-penten-2-yl group, a 2-penten-3-yl group, a 2-penten-4-yl group, a 2-penten-5-yl group, a 2-methyl-2-buten-1-yl group, a 3-methyl-2-buten-2-yl group, a 3-methyl-2-buten-1-yl group, a 1-hexen-1-yl group, a 1-hexen-2-yl group, a 1-hexen-3-yl group, a 1-hexen-4-yl group, a 1-hexen-5-yl group, a 1-hexen-6-yl group, a 2-hexen-1-yl group, a 2-hexen-2-yl group, a 2-hexen-3-yl group, a 2-hexen-4-yl group, a 2-hexen-5-yl group, a 2-hexen-6-yl group, a 3-hexen-1-yl group, a 3-hexen-2-yl group, a 3-hexen-3-yl group, a 2-methyl-2-penten-1-yl group, a 2-methyl-2-penten-3-yl group, a 2-methyl-2-penten-4-yl group, a 2-methyl-2-penten-5-yl group, a 1-hepten-1-yl group, a 1-hepten-2-yl group, a 1-hepten-3-yl group, a 1-hepten-4-yl group, a 1-hepten-5-yl group, a 1-hepten-6-yl group, a 1-hepten-7-yl group, a 2-hepten-1-yl group, a 2-hepten-2-yl group, a 2-hepten-3-yl group, a 2-hepten-4-yl group, a 2-hepten-5-yl group, a 2-hepten-6-yl group, a 2-hepten-7-yl group, a 3-hepten-1-yl group, a 3-hepten-2-yl group, a 3-hepten-3-yl group, a 3-hepten-4-yl group, a 3-hepten-5-yl group, a 3-hepten-6-yl group, a 3-hepten-7-yl group, a 2-methyl-2-hexen-1-yl group, a 2-methyl-2-hexen-3-yl group, a 2-methyl-2-hexen-4-yl group, a 2-methyl-2-hexen-5-yl group, a 2-methyl-2-hexen-6-yl group, a 1-octen-1-yl group, a 1-octen-2-yl group, a 1-octen-3-yl group, a 1-octen-4-yl group, a 1-octen-5-yl group, a 1-octen-6-yl group, a 1-octen-7-yl group, a 1-octen-8-yl group, a 2-octen-1-yl group, a 2-octen-2-yl group, a 2-octen-3-yl group, a 2-octen-4-yl group, a 2-octen-5-yl group, a 2-octen-6-yl group, a 2-octen-7-yl group, a 2-octen-8-yl group, a 3-octen-1-yl group, a 3-octen-2-yl group, a 3-octen-3-yl group, a 3-octen-4-yl group, a 3-octen-5-yl group, a 3-octen-6-yl group, a 3-octen-7-yl group, a 3-octen-8-yl group, a 4-octen-1-yl group, a 4-octen-2-yl group, a 4-octen-3-yl group, a 4-octen-4-yl group, a 2-methyl-2-hepten-1-yl group, a 2-methyl-2-hepten-3-yl group, a 2-methyl-2-hepten-4-yl group, a 2-methyl-2-hepten-5-yl group, a 2-methyl-2-hepten-6-yl group, and 2-methyl-2-hepten-7-yl group.

Examples of the cycloalkenyl group include cycloalkenyl groups having 4 to 8 carbon atoms such as a 1-cyclobutenyl group, a 3-cyclobutenyl group, a 1-cyclopentenyl group, a 3-cyclopentenyl group, a 4-cyclopentenyl group, a 1-cyclohexenyl group, a 3-cyclohexenyl group, a 4-cyclohexenyl group, a 1-cycloheptenyl group, a 3-cycloheptenyl group, a 4-cycloheptenyl group, a 5-cycloheptenyl group, a 1-cyclooctenyl group, a 3-cyclooctenyl group, a 4-cyclooctenyl group, and a 5-cyclooctenyl group.

Examples of the alkynyl group include linear or branched alkynyl groups having 2 to 8 carbon atoms such as an ethynyl group, a propargyl group, a 1-propyn-1-yl group, a 1-butyn-1-yl group, a 1-butyn-3-yl group, a 1-butyn-4-yl group, a 2-butyn-1-yl group, a 1-pentyn-1-yl group, a 1-pentyn-3-yl group, a 1-pentyn-4-yl group, a 1-pentyn-5-yl group, a 2-pentyn-1-yl group, a 2-pentyn-4-yl group, a 2-pentyn-5-yl group, a 1-hexyn-1-yl group, a 1-hexyn-3-yl group, a 1-hexyn-4-yl group, a 1-hexyn-5-yl group, a 1-hexyn-6-yl group, a 2-hexyn-1-yl group, a 2-hexyn-4-yl group, a 2-hexyn-5-yl group, a 2-hexyn-6-yl group, a 4-methyl-2-pentyn-1-yl group, a 4-methyl-2-pentyn-4-yl group, a 4-methyl-2-pentyn-5-yl group, a 1-heptyn-1-yl group, a 1-heptyn-3-yl group, a 1-heptyn-4-yl group, a 1-heptyn-5-yl group, a 1-heptyn-6-yl group, a 1-heptyn-7-yl group, a 2-heptyn-1-yl group, a 2-heptyn-4-yl group, a 2-heptyn-5-yl group, a 2-heptyn-6-yl group, a 2-heptyn-7-yl group, a 3-heptyn-1-yl group, a 3-heptyn-2-yl group, a 3-heptyn-5-yl group, a 3-heptyn-6-yl group, a 3-heptyn-7-yl group, a 5-methyl-2-hexyn-1-yl group, a 5-methyl-2-hexyn-4-yl group, a 5-methyl-2-hexyn-5-yl group, a 5-methyl-2-hexyn-6-yl group, a 1-octyn-1-yl group, a 1-octyn-3-yl group, a 1-octyn-4-yl group, a 1-octyn-5-yl group, a 1-octyn-6-yl group, a 1-octyn-7-yl group, a 1-octyn-8-yl group, a 2-octyn-1-yl group, a 2-octyn-4-yl group, a 2-octyn-5-yl group, a 2-octyn-6-yl group, a 2-octyn-7-yl group, a 2-octyn-8-yl group, a 3-octyn-1-yl group, a 3-octyn-2-yl group, a 3-octyn-5-yl group, a 3-octyn-6-yl group, a 3-octyn-7-yl group, a 3-octyn-8-yl group, a 4-octyn-1-yl group, a 4-octyn-2-yl group, a 4-octyn-3-yl group, a 6-methyl-2-heptyn-1-yl group, a 6-methyl-2-heptyn-4-yl group, a 6-methyl-2-heptyn-5-yl group, a 6-methyl-2-heptyn-6-yl group, and a 6-methyl-2-heptyn-7-yl group.

Examples of the aryl group in the aryl group, the arylamino group, the aryloxy group, the aroyloxy group, the arylsulfonylamino group and the arylthio group include aryl groups having 6 to 15 carbon atoms such as a phenyl group, a naphthyl group, and an anthryl group.

Examples of the heteroaryl group in the heteroaryl group, the heteroarylamino group, the heteroaryloxy group, the heteroaroyloxy group, the heteroaryloxycarbonyloxy group, the heteroarylthio group and the heteroarylsulfonylamino group include 5 to 10 membered monocyclic heteroaryl groups containing at least one atom selected from nitrogen atoms, oxygen atoms and sulfur atoms, condensed heteroaryl groups which are a bicyclic or tricyclic group formed by condensation of 3 to 8 membered rings and contain at least one atom selected from nitrogen atoms, oxygen atoms and sulfur atoms, and the like. Examples of the monocyclic heteroaryl group include a 1-pyrrolyl group, a 2-pyrrolyl group, a 3-pyrrolyl group, a 2-furyl group, a 3-furyl group, a 2-thienyl group, a 3-thienyl group, a 1-imidazolyl group, a 2-imidazolyl group, a 4-imidazolyl group, a 1-pyrazolyl group, a 3-pyrazolyl group, a 4-pyrazolyl group, a 2-oxazolyl group, a 4-oxazolyl group, a 5-oxazolyl group, a 3-isoxazolyl group, a 4-isoxazolyl group, a 5-isoxazolyl group, a 2-thiazolyl group, a 4-thiazolyl group, a 5-thiazolyl group, a 3-isothiazolyl group, a 4-isothiazolyl group, a 5-isothiazolyl group, a 1H-1,2,4-triazol-1-yl group, a 1H-1,2,4-triazol-3-yl group, a 1H-1,2,3-triazol-1-yl group, a 1H-1,2,3-triazol-4-yl group, a 2H-1,2,3-triazol-2-yl group, a 1H-tetrazol-1-yl group, a 1H-tetrazol-5-yl group, a 2-pyridyl group, a 3-pyridyl group, a 4-pyridyl group, a 3-pyridazinyl group, a 4-pyridazinyl group, a 2-pyrimidinyl group, a 4-pyrimidinyl group, a 5-pyrimidinyl group, a pyrazinyl group and the like. Examples of the condensed heteroaryl group include a 1-indolyl group, a 2-indolyl group, a 3-indolyl group, a 4-indolyl group, a 5-indolyl group, a 6-indolyl group, a 7-indolyl group, a 1-isoindolyl group, a 2-isoindolyl group, a 4-isoindolyl group, a 5-isoindolyl group, a 2-benzo[b]furanyl group, a 3-benzo[b]furanyl group, a 4-benzo[b]furanyl group, a 5-benzo[b]furanyl group, a 6-benzo[b]furanyl group, a 7-benzo[b]furanyl group, a 1-benzo[c]furanyl group, a 4-benzo[c]furanyl group, a 5-benzo[c]furanyl group, a Z-benzo[b]thienyl group, a 3-benzo[b]thienyl group, a 4-benzo[b]thienyl group, a 5-benzo[b]thienyl group, a 6-benzo[b]thienyl group, a 7-benzo[b]thienyl group, a 1-benzo[c]thienyl group, a 4-benzo[c]thienyl group, a 5-benzo[c]thienyl group, a 1-benzimidazolyl group, a 2-benzimidazolyl group, a 4-benzimidazolyl group, a 5-benzimidazolyl group, a 2-benzoxazolyl group, a 4-benzoxazolyl group, a 5-benzoxazolyl group, a 6-benzoxazolyl group, a 7-benzoxazolyl group, a 2-benzothiazolyl group, a 4-benzothiazolyl group, a 5-benzothiazolyl group, a 6-benzothiazolyl group, a 7-benzothiazolyl group, a 1-indolidinyl group, a 2-indolidinyl group, a 3-indolidinyl group, a 5-indolidinyl group, a 6-indolidinyl group, a 7-indolidinyl group, a 8-indolidinyl group, a 1H-indazol-1-yl group, a 1H-indazol-3-yl group, a 1H-indazol-4-yl group, a 1H-indazol-5-yl group, a 1H-indazol-6-yl group, a 1H-indazol-7-yl group, a 2H-indazol-2-yl group, a 7-azaindol-1-yl group, a 7-azaindol-2-yl group, a 7-azaindol-3-yl group, a 7-azaindol-4-yl group, a 7-azaindol-5-yl group, a 7-azaindol-6-yl group, a 2-purinyl group, a 6-purinyl group, a 7-purinyl group, a 8-purinyl group, a 9-purinyl group, a 2-quinolyl group, a 3-quinolyl group, a 4-quinolyl group, a 5-quinolyl group, a 6-quinolyl group, a 7-quinolyl group, a 8-quinolyl group, a 1-isoquinolyl group, a 3-isoquinolyl group, a 4-isoquinolyl group, a 5-isoquinolyl group, a 6-isoquinolyl group, a 7-isoquinolyl group, a 8-isoquinolyl group, a 2-quinoxalinyl group, a 5-quinoxalinyl group, a 6-quinoxalinyl group, a 2-quinazolinyl group, a 4-quinazolinyl group, a 5-quinazolinyl group, a 6-quinazolinyl group, a 7-quinazolinyl group, a 8-quinazolinyl group, a 3-cinnolinyl group, a 4-cinnolinyl group, a 5-cinnolinyl group, a 6-cinnolinyl group, a 7-cinnolinyl group, a 8-cinnolinyl group, a 1-phthalazinyl group, a 5-phthalazinyl group, a 6-phthalazinyl group, a 2-pteridinyl group, a 4-pteridinyl group, a 6-pteridinyl group, a 7-pteridinyl group, a 1-carbazolyl group, a 2-carbazolyl group, a 3-carbazolyl group, a 4-carbazolyl group, a 9-carbazolyl group, a 1-acridinyl group, a 2-acridinyl group, a 3-acridinyl group, a 4-acridinyl group, a 9-acridinyl group, a 1-phenanthridinyl group, a 2-phenanthridinyl group, a 3-phenanthridinyl group, a 4-phenanthridinyl group, a 6-phenanthridinyl group, a 7-phenanthridinyl group, a 8-phenanthridinyl group, a 9-phenanthridinyl group, a 10-phenanthridinyl group, a 1-phenadinyl group, a 2-phenadinyl group, a 1-phenoxazinyl group, a 2-phenoxazinyl group, a 3-phenoxazinyl group, a 4-phenoxazinyl group, a 10-phenoxazinyl group, a 1-phenothiazinyl group, a 2-phenothiazinyl group, a 3-phenothiazinyl group, a 4-phenothiazinyl group, a 10-phenothiazinyl group, and the like.

Examples of the aliphatic heterocyclic group in the aliphatic heterocyclic group, the aliphatic heterocycle-oxy group, the aliphatic heterocycle-carbonyloxy group, the aliphatic heterocycle-oxycarbonyloxy group, the aliphatic heterocycle-thio group and the aliphatic heterocycle-sulfonylamino group include a 3-pyrrolin-1-yl group, a 3-pyrrolin-2-yl group, a 3-pyrrolin-3-yl group, a 2-pyrrolin-1-yl group, a 2-pyrrolin-2-yl group, a 2-pyrrolin-3-yl group, a 2-pyrrolin-4-yl group, a 2-pyrrolin-5-yl group, a 1-pyrrolidinyl group, a 2-pyrrolidinyl group, a 3-pyrrolidinyl group, a 2,3-dihydrofuran-2-yl group, a 2,3-dihydrofuran-3-yl group, a 2,3-dihydrofuran-4-yl group, a 2,3-dihydrofuran-5-yl group, a 2,5-dihydrofuran-2-yl group, a 2,5-dihydrofuran-3-yl group, a 2-tetrahydrofuranyl group, a 3-tetrahydrofuranyl group, a 2,3-dihydrothiophen-2-yl group, a 2,3-dihydrothiophen-3-yl group, a 2,3-dihydrothiophen-4-yl group, a 2,3-dihydrothiophen-5-yl group, a 2,5-dihydrothiophen-2-yl group, a 2,5-dihydrothiophen-3-yl group, a tetrahydrothiophene oxide-2-yl group, a tetrahydrothiophene oxide-3-yl group, a tetrahydrothiophene 1,1-dioxide-2-yl group, a tetrahydrothiophene 1,1-dioxide-3-yl group, a 2-tetrahydrothienyl group, a 3-tetrahydrothienyl group, a 2,3-dihydroimidazol-1-yl group, a 2,3-dihydroimidazol-2-yl group, a 2,3-dihydroimidazol-4-yl group, a 2,5-dihydroimidazol-1-yl group, a 2,5-dihydroimidazol-2-yl group, a 2,5-dihydroimidazol-4-yl group, a 2,5-dihydroimidazol-5-yl group, a 4,5-dihydroimidazol-1-yl group, a 4,5-dihydroimidazol-2-yl group, a 4,5-dihydroimidazol-4-yl group, a 1-imidazolidinyl group, a 2-imidazolidinyl group, a 4-imidazolidinyl group, a 2,3-dihydropyrazol-1-yl group, a 2,3-dihydropyrazol-2-yl group, a 2,3-dihydropyrazol-3-yl group, a 2,3-dihydropyrazol-4-yl group, a 2,3-dihydropyrazol-5-yl group, a 2,5-dihydropyrazol-1-yl group, a 2,5-dihydropyrazol-2-yl group, a 2,5-dihydropyrazol-3-yl group, a 2,5-dihydropyrazol-4-yl group, a 2,5-dihydropyrazol-5-yl group, a 4,5-dihydropyrazol-1-yl group, a 4,5-dihydropyrazol-3-yl group, a 4,5-dihydropyrazol-4-yl group, a 4,5-dihydropyrazol-5-yl group, a 1-pyrazolidinyl group, a 3-pyrazolidinyl group, a 4-pyrazolidinyl group, a 2,3-dihydroxazol-2-yl group, a 2,3-dihydroxazol-3-yl group, a 2,3-dihyroxazol-4-yl group, a 2,3-dihydroxazol-5-yl group, a 2,5-dihydroxazol-2-yl group, a 2,5-dihydroxazol-4-yl group, a 2,5-dihydroxazol-5-yl group, a 4,5-dihydroxazol-2-yl group, a 4,5-dihydroxazol-4-yl group, a 4,5-dihydroxazol-5-yl group, a 2-oxazolidinyl group, a 3-oxazolidinyl group, a 4-oxazolidinyl group, a 5-oxazolidinyl group, a 2,3-dihydroisoxazol-2-yl group, a 2,3-dihydroisoxazol-3-yl group, a 2,3-dihydroisoxazol-4-yl group, a 2,3-dihydroisoxazol-5-yl group, a 2,5-dihydroisoxazol-2-yl group, a 2,5-dihydroisoxazol-3-yl group, a 2,5-dihydroisoxazol-4-yl group, a 2,5-dihydroisoxazol-5-yl group, a 4,5-dihydroisoxazol-3-yl group, a 4,5-dihydroisoxazol-4-yl group, a 4,5-dihydroisoxazol-5-yl group, a 2-isoxazolidinyl group, a 3-isoxazolidinyl group, a 4-isoxazolidinyl group, a 5-isoxazolidinyl group, a 2,3-dihydrothiazol-2-yl group, a 2,3-dihydrothiazol-3-yl group, a 2,3-dihydrothiazol-4-yl group, a 2,3-dihydrothiazol-5-yl group, a 2,5-dihydrothiazol-2-yl group, a 2,5-dihydrothiazol-4-yl group, a 2,5-dihydrothiazol-5-yl group, a 4,5-dihydrothiazol-2-yl group, a 4,5-dihydrothiazol-4-yl group, a 4,5-dihydrothiazol-5-yl group, a 2-thiazolidinyl group, a 3-thiazolidinyl group, a 4-thiazolidinyl group, a 5-thiazolidinyl group, a 2,3-dihydroisothiazol-2-yl group, a 2,3-dihydroisothiazol-3-yl group, a 2,3-dihydroisothiazol-4-yl group, a 2,3-dihydroisothiazol-5-yl group, a 2,5-dihydroisothiazol-2-yl group, a 2,5-dihydroisothiazol-3-yl group, a 2,5-dihydroisothiazol-4-yl group, a 2,5-dihydroisothiazol-5-yl group, a 4,5-dihydroisothiazol-3-yl group, a 4,5-dihydroisothiazol-4-yl group, a 4,5-dihydroisothiazol-5-yl group, a 2-isothiazolidinyl group, a 3-isothiazolidinyl group, a 4-isothiazolidinyl group, a 5-isothiazolidinyl group, a 1,2,3,4-tetrahydropyridin-1-yl group, a 1,2,3,4-tetrahydropyridin-2-yl group, a 1,2,3,4-tetrahydropyridin-3-yl group, a 1,2,3,4-tetrahydropyridin-4-yl group, a 1,2,3,4-tetrahydropyridin-5-yl group, a 1,2,3,4-tetrahydropyridin-6-yl group, a 1,2,5,6-tetrahydropyridin-1-yl group, a 1,2,5,6-tetrahydropyridin-2-yl group, a 1,2,5,6-tetrahydropyridin-3-yl group, a 1,2,5,6-tetrahydropyridin-4-yl group, a 1,2,5,6-tetrahydropyridin-5-yl group, a 1,2,5,6-tetrahydropyridin-6-yl group, a piperidino group, a 2-piperidyl group, a 3-piperidyl group, a 4-piperidyl group, a 1,2,3,6-tetrahydropyridazin-1-yl group, a 1,2,3,6-tetrahydropyridazin-3-yl group, a 1,2,3,6-tetrahydropyridazin-4-yl group, a 1,2,5,6-tetrahydropyridazin-1-yl group, a 1,2,5,6-tetrahydropyridazin-2-yl group, a 1,2,5,6-tetrahydropyridazin-3-yl group, a 1,2,5,6-tetrahydropyridazin-4-yl group, a 1,2,5,6-tetrahydropyridazin-5-yl group, a 1,2,5,6-tetrahydrapyridazin-6-yl group, a 1,4,5,6-tetrahydropyridazin-1-yl group, a 1,4,5,6-tetrahydropyridazin-3-yl group, a 1,4,5,6-tetrahydropyridazin-4-yl group, a 1,4,5,6-tetrahydropyridazin-5-yl group, a 1,4,5,6-tetrahydropyridazin-6-yl group, a 3,4,5,6-tetrahydropyridazin-3-yl group, a 3,4,5,6-tetrahydropyridazin-4-yl group, a 1,2,3,4,5,6-hexahydropyridazin-1-yl group, a 1,2,3,4,5,6-hexahydropyridazin-3-yl group, a 1,2,3,4,5,6-hexahydropyridazin-4-yl group, a 1,2,3,6-tetrahydropyrimidin-1-yl group, a 1,2,3,6-tetrahydropyrimidin-2-yl group, a 1,2,3,6-tetrahydropyrimidin-3-yl group, a 1,2,3,6-tetrahydropyrimidin-4-yl group, a 1,2,3,6-tetrahydropyrimidin-5-yl group, a 1,2,3,6-tetrahydropyrimidin-6-yl group, a 1,2,5,6-tetrahydropyrimidin-1-yl group, a 1,2,5,6-tetrahydropyrimidin-2-yl group, a 1,2,5,6-tetrahydropyrimidin-4-yl group, a 1,2,5,6-tetrahydropyrimidin-5-yl group, a 1,2,5,6-tetrahydropyrimidin-6-yl group, a 1,4,5,6-tetrahydropyrimidin-1-yl group, a 1,4,5,6-tetrahydropyrimidin-2-yl group, a 1,4,5,6-tetrahydropyrimidin-4-yl group, a 1,4,5,6-tetrahydropyrimidin-5-yl group, a 1,4,5,6-tetrahydropyrimidin-6-yl group, a 1,2,3,4,5,6-hexahydropyrimidin-1-yl group, a 1,2,3,4,5,6-hexahydropyrimidin-2-yl group, a 1,2,3,4,5,6-hexahydropyrimidin-4-yl group, a 1,2,3,4,5,6-hexahydropyrimidin-5-yl group, a 1,2,3,4-tetrahydropyrazin-1-yl group, a 1,2,3,4-tetrahydropyrazin-2-yl group, a 1,2,3,4-tetrahydropyrazin-5-yl group, a 1,2,5,6-tetrahydropyrazin-1-yl group, a 1,2,5,6-tetrahydropyrazin-2-yl group, a 1,2,5,6-tetrahydropyrazin-3-yl group, a 1,2,5,6-tetrahydropyrazin-5-yl group, a 1,2,5,6-tetrahydropyrazin-6-yl group, a 1-piperazinyl group, a 2-piperazinyl group, a morpholino group, a 2-morpholinyl group, a 3-morpholinyl group, a thiomorpholino group, a 2-thiomorpholinyl group, a 3-thiomorpholinyl group, a 1-homopiperazinyl group, a 2-homopiperazinyl group, a 5-homopiperazinyl group, a 6-homopiperazinyl group, a 3,4-dihydro-2H-pyran-2-yl group, a 3,4-dihydro-2H-pyran-3-yl group, a 3,4-dihydro-2H-pyran-4-yl group, a 3,4-dihydro-2H-pyran-5-yl group, a 3,4-dihydro-2H-pyran-6-yl group, a 5,6-dihydro-2H-pyran-2-yl group, a 5,6-dihydro-2H-pyran-3-yl group, a 5,6-dihydro-2H-pyran-4-yl group, a 5,6-dihydro-2H-pyran-5-yl group, a 5,6-dihydro-2H-pyran-6-yl group, a 2-tetrahydropyranyl group, a 3-tetrahydropyranyl group, a 4-tetrahydropyranyl group, a 3,4-dihydro-2H-thiopyran-2-yl group, a 3,4-dihydro-2H-thiopyran-3-yl group, a 3,4-dihydro-2H-thiopyran-4-yl group, a 3,4-dihydro-2H-thiopyran-5-yl group, a 3,4-dihydro-2H-thiopyran-6-yl group, a 5,6-dihydro-2H-thiopyran-2-yl group, a 5,6-dihydro-2H-thiopyran-3-yl group, a 5,6-dihydro-2H-thiopyran-4-yl group, a 5,6-dihydro-2H-thiopyran-5-yl group, a 5,6-dihydro-2H-thiopyran-6-yl group, a 2-tetrahydrothiopyranyl group, a 3-tetrahydrothiopyranyl group, a 4-tetrahydrothiopyranyl group, a 1-indolinyl group, a 2-indolinyl group, a 3-indolinyl group, a 1,2,3,4-tetrahydroquinolin-1-yl group, a 1,2,3,4-tetrahydroquinolin-2-yl group, a 1,2,3,4-tetrahydroquinolin-3-yl group, a 1,2,3,4-tetrahydroquinolin-4-yl group, a 1,2,3,4-tetrahydroisoquinolin-1-yl group, a 1,2,3,4-tetrahydroisoquinolin-2-yl group, a 1,2,3,4-tetrahydroisoquinolin-3-yl group, a 1,2,3,4-tetrahydroisoquinolin-4-yl group, and the like.

The halogen atom means each atom of fluorine, chlorine, bromine, and iodine.

Examples of the ring formed by any two of R^{a}, R^{b}, R^{c}, R^{d}, R^{e}, and R^{f}, together with atoms adjacent thereto, respectively, include aziridine ring, azetidine ring, pyrrolidine ring, pyrazolidine ring, imidazolidine ring, piperidine ring, piperazine ring, morpholine ring, thiomorpholine ring, homopiperazine ring, imidazoline ring, 1,4,5,6-tetrahydro-2-pyrimidine ring, 4,5-dihydro-1,2,4-oxadiazole ring, 4,5-dihydro-6H-1,2,4-oxadiazine ring, 1,2,3,4-tetrahydroquinoline ring, 1,2,3,4-tetrahydroisoquinoline ring, and the like.

The group having the Hammett constant σₚ of a positive value is not particularly limited so long as the group has σₚ of a positive value, and examples include electron withdrawing groups. Typical examples of the electron withdrawing group include a trifluoromethyl group, a substituted or unsubstituted alkoxycarbonyl group, a substituted or unsubstituted aryloxycarbonyl group, a substituted or unsubstituted carbamoyl group, a carboxyl group, a cyano group, a nitro group, a substituted or unsubstituted alkylsulfonyl group, a substituted or unsubstituted arylsulfonyl group, a substituted or unsubstituted sulfamoyl group, a halogen atom, and the like. The halogen atom has the same meaning as that of the aforementioned halogen atom. The alkyl group in the alkoxycarbonyl group and the alkylsulfonyl group has the same meaning as that of the aforementioned alkyl group. The aryl group in the aryloxycarbonyl group and the arylsulfonyl group has the same meaning as that of the aforementioned aryl group. The substituent in the substituted alkoxycarbonyl group and the substituted alkylsulfonyl group has the same meaning as that of the substituent of the alkyl group in R^{D} and R^{J}. The substituent in the substituted aryloxycarbonyl group and the substituted arylsulfonyl group has the same meaning as that of the after-mentioned substituent of the aryl group in R^{D} and RJ. The substituents in the substituted carbamoyl group and the substituted sulfamoyl group have the same meanings as those of the after-mentioned substituents in the substituted carbamoyl group and the substituted sulfamoyl group, respectively. As for the Hammett constant σₚ, details are described in, for example, "Hammett Rule - Structure and Reactivity", INAMOTO Naoki (Maruzen) (1983), "New Experimental Chemistry Lecture 14 · Synthesis and Reaction of Organic Compounds V", p.2605 (Chemical Society of Japan, Maruzen) (1978), Chemical Review (Vol. 91), p.165-195 (1991), and the like.

Examples of the group which can be eliminated by oxidative coupling color-developing reaction with the compound (I) include a hydrogen atom, a halogen atom, a formyl group, a carboxyl group, a substituted or unsubstituted carbamoyl group, a substituted or unsubstituted alkoxyl group, a substituted or unsubstituted aryloxy group, a substituted or unsubstituted heteroaryloxy group, a substituted or unsubstituted aliphatic heterocycle-oxy group, a substituted or unsubstituted alkanoyloxy group, a substituted or unsubstituted aroyloxy group, a substituted or unsubstituted heteroaroyloxy group, a substituted or unsubstituted aliphatic heterocycle-carbonyloxy group, a substituted or unsubstituted alkoxycarbonyloxy group, a substituted or unsubstituted aryloxycarbonyloxy group, a substituted or unsubstituted heteroaryloxycarbonyloxy group, a substituted or unsubstituted aliphatic heterocycle- oxycarbonyloxy group, a substituted or unsubstituted carbamoyloxy group, a substituted or unsubstituted sulfamoyloxy group, a substituted or unsubstituted alkylthio group, a substituted or unsubstituted arylthio group, a substituted or unsubstituted heteroarylthio group, a substituted or unsubstituted aliphatic heterocycle-thio group, a sulfo group, and the like. The halogen atom has the same meaning as that of the aforementioned halogen atom. The alkyl group in the alkoxyl group, the alkanoyloxy group, the alkoxycarbonyloxy group and the alkylthio group has the same meaning as that of the aforementioned alkyl group. The aryl group in the aryloxy group, the aroyloxy group, the aryloxycarbonyloxy group and the arylthio group has the same meaning as that of the aforementioned aryl group. The heteroaryl group in the heteroaryloxy group, the heteroaroyloxy group, the heteroaryloxycarbonyloxy group and the heteroarylthio group has the same meaning as that of the aforementioned heteroaryl group. The aliphatic heterocyclic group in the aliphatic heterocycle-oxy group, the aliphatic heterocycle-carbonyloxy group, the aliphatic heterocycle-oxycarbonyloxy group and the aliphatic heterocycle-thio group has the same meaning as that of the aforementioned aliphatic heterocyclic group. The substituents in the carbamoyl group, the carbamoyloxy group, and the sulfamoyloxy group have the same meanings as those of the after-mentioned substituents in the substituted carbamoyl group, the substituted carbamoyloxy group, and the substituted sulfamoyloxy group, respectively.

### (Substituent in each group)

### (Substituent in the substituted sulfino group)

Examples of the substituent in the substituted sulfino group include A¹-R^{A} [wherein R^{A} represents a hydrogen atom, a substituted or unsubstituted alkyl group, a substituted or unsubstituted cycloalkyl group, a substituted or unsubstituted aralkyl group, a substituted or unsubstituted alkenyl group, a substituted or unsubstituted cycloalkenyl group, a substituted or unsubstituted alkynyl group, a substituted or unsubstituted aryl group, a substituted or unsubstituted heteroaryl group, or a substituted or unsubstituted aliphatic heterocyclic group; and A¹ represents a single bond, O or (N(R^{B}))_{M}N(R^{C}) (wherein M represents 0 or 1, and R^{B} and R^{C} are the same or different and each has the same meaning as that of the aforementioned R^{A}), or any two of R^{A}, R^{B} and R^{C} may form a ring together with atoms adjacent thereto, respectively, excluding when A¹ and R^{A} represent a single bond and a hydrogen atom, respectively], a halogen atom, and the like.

The alkyl group, the cycloalkyl group, the aralkyl group, the alkenyl group, the cycloalkenyl group, the alkynyl group, the aryl group, the heteroaryl group, and the aliphatic heterocyclic group which are mentioned as the substituents in the substituted sulfino group have the same meanings as those of the aforementioned alkyl group, cycloalkyl group, aralkyl group, alkenyl group, cycloalkenyl group, alkynyl group, aryl group, heteroaryl group, and aliphatic heterocyclic group, respectively.

The substituents of the alkyl group, the cycloalkyl group, the aralkyl group, the alkenyl group, the cycloalkenyl group, the alkynyl group, the aryl group, the heteroaryl group, and the aliphatic heterocyclic group which are mentioned as the substituents in the substituted sulfino group have the same meanings as those of the after-mentioned substituents of the alkyl group, the cycloalkyl group, the aralkyl group, the alkenyl group, the cycloalkenyl group, the alkynyl group, the aryl group, the heteroaryl group, and the aliphatic heterocyclic group in R^{D} and R^{J}, respectively.

The halogen atom mentioned as the substituent in the substituted sulfino group has the same meaning as that of the aforementioned halogen atom. Examples of the ring formed by any two of R^{A}, R^{B}, and R^{C}, together with atoms adjacent thereto, respectively, include an aziridine ring, an azetidine ring, a pyrrolidine ring, a pyrazolidine ring, an imidazolidine ring, a piperidine ring, a piperazine ring, a morpholine ring, a thiomorpholine ring, a homopiperazine ring, an imidazoline ring, a 1,4,5,6-tetrahydro-2-pyrimidine ring, a 1,2,3,4-tetrahydroquinoline ring, a 1,2,3,4-tetrahydroisoquinoline ring, and the like.

### (Substituent in the substituted silyl group)

Examples of the substituent in the substituted silyl group include an alkyl group, an aryl group, and the like. The alkyl group and the aryl group have the same meanings as those of the aforementioned alkyl group and aryl group, respectively.

### (Substituent in the substituted alkyl group, the substituted alkanoylamino group, the substituted alkanoyloxy group, the substituted alkoxycarbonyl group, the substituted alkylsulfonylamino group, the substituted alkoxycarbonylamino group, the substituted cycloalkyl group, the substituted alkenyl group, the substituted cycloalkenyl group, and the substituted alkynyl group)

As to the substituent of the alkyl group in the substituted alkyl group, the substituted alkanoylamino group, the substituted alkanoyloxy group, the substituted alkoxycarbonyl group, the substituted alkylsulfonylamino group and the substituted alkoxycarbonylamino group, the substituent in the substituted cycloalkyl group, the substituent in the substituted alkenyl group, the substituent in the substituted cycloalkenyl group, and the substituent in the substituted alkynyl group, the number of the substituents of each group is from 1 to 3, the substituents are the same or different, and examples of the substituents include:
A²-A³-A⁴-R^{D} [wherein R^{D} represents a hydrogen atom, a substituted or unsubstituted alkyl group, a substituted or unsubstituted cycloalkyl group, a substituted or unsubstituted aralkyl group, a substituted or unsubstituted alkenyl group, a substituted or unsubstituted cycloalkenyl group, a substituted or unsubstituted alkynyl group, a substituted or unsubstituted aryl group, a substituted or unsubstituted heteroaryl group, or a substituted or unsubstituted aliphatic heterocyclic group, A² represents a single bond, O or (N(R^{E}))_{P}N(R^{F}) (P represents 0 or 1, and R^{E} and R^{F} have the same meaning as that of the aforementioned R^{D}), A³ represents (C=O), (C=S), (C=N(R^{G})) (wherein R^{G} has the same meaning as that of the aforementioned R^{D}), (C=NOR^{H}) (wherein R^{H} has the same meaning as that of the aforementioned R^{D}) or SO₂, and A⁴ represents a single bond, O, NR^{I} (wherein R^{I} has the same meaning as that of the aforementioned R^{D}) or S, or, any two of R^{D}, R^{E}, R^{F}, R^{G}, R^{H} and R^{I} may form a ring together with atoms adjacent thereto, respectively],
A⁵-RJ [wherein R^{J} represents a hydrogen atom, a substituted or unsubstituted alkyl group, a substituted or unsubstituted cycloalkyl group, a substituted or unsubstituted aralkyl group, a substituted or unsubstituted alkenyl group, a substituted or unsubstituted cycloalkenyl group, a substituted or unsubstituted alkynyl group, a substituted or unsubstituted aryl group, a substituted or unsubstituted heteroaryl group, or a substituted or unsubstituted aliphatic heterocyclic group, and A⁵ represents O, (N(R^{K}))_{Q}N(R^{L}) (Q represents 0 or 1, and R^{K} and R^{L} have the same meaning as that of the aforementioned R^{J}) or S(O)_{R} (R represents 0 or 1), or any two of R^{J}, R^{K} and R^{L} may form a ring together with atoms adjacent thereto, respectively], a cyano group, a nitroso group, a nitro group, an isonitrile group, an isocyanate group, a thioisocyanate group, a halogen atom, a phosphono group, a substituted or unsubstituted silyl group, and the like.

The halogen atom has the same meaning as that of the aforementioned halogen atom, and the substituent in the substituted silyl group has the same meaning as that of the aforementioned substituent in the substituted silyl group.

In R^{D} and R^{J}, the alkyl group, the cycloalkyl group, the alkenyl group, the cycloalkenyl group, the alkynyl group, the aralkyl group, the aryl group, the heteroaryl group, and the aliphatic heterocyclic group have the same meanings as those of the aforementioned alkyl group, cycloalkyl group, alkenyl group, cycloalkenyl group, alkynyl group, aralkyl group, aryl group, heteroaryl group, and aliphatic heterocyclic group, respectively.

As to the substituent of the alkyl group, the cycloalkyl group, the alkenyl group, the cycloalkenyl group and the alkynyl group in R^{D} and R^{J}, the number of the substituents of each group is from 1 to 3, the substituents are the same or different, and examples of the substituent include a hydroxyl group, an alkoxyl group, an aryloxy group, a heteroaryloxy group, an amino group, an (N-alkyl)amino group, an (N-aryl)amino group, an (N-heteroaryl)amino group, an (N-alkyl-N'-alkyl)amino group (the two alkyl groups are the same or different), an (N-alkyl-N'-aryl)amino group, an (N-alkyl-N'-heteroaryl)amino group, an (N-aryl-N'-aryl)amino group (the two aryl groups are the same or different), an (N-aryl-N'-heteroaryl)amino group, an (N-heteroaryl-N'-heteroaryl)amino group (the two heteroaryl groups are the same or different), a substituted or unsubstituted heterocyclic group which is formed by containing N, a sulfhydryl group, an alkylthio group, an arylthio group, a heteroarylthio group, an alkylsulfinyl group, an arylsulfinyl group, a heteroarylsulfinyl group, a formyl group, an alkanoyl group, an aroyl group, a heteroaroyl group, a carboxyl group, an alkoxycarbonyl group, an aryloxycarbonyl group, a heteroaryloxycarbonyl group, a carbamoyl group, an (N-alkyl)carbamoyl group, an (N-aryl)carbamoyl group, an (N-heteroaryl)carbamoyl group, an (N-alkyl-N'-alkyl)carbamoyl group (the two alkyl groups are the same or different), an (N-alkyl-N'-aryl)carbamoyl group, an (N-alkyl-N'-heteroaryl)carbamoyl group, an (N-aryl-N'-aryl)carbamoyl group (the two aryl groups are the same or different), an (N-aryl-N'-heteroaryl)carbamoyl group, an (N-heteroaryl-N'-heteroaryl)carbamoyl group (the two heteroaryl groups are the same or different), an alkylsulfonyl group, an arylsulfonyl group, a heteroarylsulfonyl group, a sulfo group, an alkoxysulfonyl group, an aryloxysulfonyl group, a heteroaryloxysulfonyl group, a sulfamoyl group, an (N-alkyl)sulfamoyl group, an (N-aryl)sulfamoyl group, an (N-heteroaryl)sulfamoyl group, an (N-alkyl-N'-alkyl)sulfamoyl group (the two alkyl groups are the same or different), an (N-alkyl-N'-aryl)sulfamoyl group, an (N-alkyl-N'-heteroaryl)sulfamoyl group, an (N-aryl-N'-aryl)sulfamoyl group (the two aryl groups are the same or different), an (N-aryl-N'-heteroaryl)sulfamoyl group, an (N-heteroaryl-N'-heteroaryl)sulfamoyl group (the two heteroaryl groups are the same or different), a formyloxy group, an alkanoyloxy group, an aroyloxy group, a heteroaroyloxy group, an alkanoylamino group, an aroylamino group, a heteroaroylamino group, an (N-alkyl)alkanoylamino group, an (N-alkyl)aroylamino group, an (N-alkyl)heteroaroylamino group, an (N-aryl)alkanoylamino group, an (N-aryl)aroylamino group, an (N-aryl)heteroaroylamino group, an (N-heteroaryl)alkanoylamino group, an (N-heteroaryl)aroylamino group, an (N-heteroaryl)heteroaroylamino group, a carbamoyloxy group, an (N-alkyl)carbamoyloxy group, an (N-aryl)carbamoyloxy group, an (N-heteroaryl)carbamoyloxy group, an (N-alkyl-N'-alkyl)carbamoyloxy group (the two alkyl groups are the same or different), an (N-alkyl-N'-aryl)carbamoyloxy group, an (N-alkyl-N'-heteroaryl)carbamoyloxy group, an (N-aryl-N'-aryl)carbamoyloxy group (the two aryl groups are the same or different), an (N-aryl-N'-heteroaryl)carbamoyloxy group, an (N-heteroaryl-N'-heteroaryl)carbamoyloxy group (the two heteroaryl groups are the same or different), a sulfamoyloxy group, an (N-alkyl)sulfamoyloxy group, an (N-aryl)sulfamoyloxy group, an (N-heteroaryl)sulfamoyloxy group, an (N-alkyl-N'-alkyl)sulfamoyloxy group (the two alkyl groups are the same or different), an (N-alkyl-N'-aryl)sulfamoyloxy group, an (N-alkyl-N'-heteroaryl)sulfamoyloxy group, an (N-aryl-N'-aryl)sulfamoyloxy group (the two aryl groups are the same or different), an (N-aryl-N'-heteroaryl)sulfamoyloxy group, an (N-heteroaryl-N'-heteroaryl)sulfamoyloxy group (the two heteroaryl groups are the same or different), an alkylsulfonyloxy group, an arylsulfonyloxy group, a heteroarylsulfonyloxy group, an alkylsulfonylamino group, an arylsulfonylamino group, a heteroarylsulfonylamino group, an (N-alkyl)alkylsulfonylamino group, an (N-alkyl)arylsulfonylamino group, an (N-alkyl)heteroarylsulfonylamino group, an (N-aryl)alkylsulfonylamino group, an (N-aryl)arylsulfonylamino group, an (N-aryl)heteroarylsulfonylamino group, an (N-heteroaryl)alkylsulfonylamino group, an (N-heteroaryl)arylsulfonylamino group, an (N-heteroaryl)heteroarylsulfonylamino group, a cyano group, a nitro group, a phosphono group, a halogen atom, and the like.

The halogen atom has the same meaning as that of the aforementioned halogen atom.

The alkyl group in the alkoxyl group, the alkylthio group, the alkylsulfinyl group, the alkanoyl group, the alkoxycarbonyl group, the alkylsulfonyl group, the alkoxysulfonyl group, the alkanoyloxy group, the alkanoylamino group, the alkylsulfonyloxy group, and the alkylsulfonylamino group has the same meaning as that of the aforementioned alkyl group.

The aryl group in the aryloxy group, the arylthio group, the arylsulfinyl group, the aroyl group, the aryloxycarbonyl group, the arylsulfonyl group, the aryloxysulfonyl group, the aroyloxy group, the aroylamino group, the arylsulfonyloxy group, and the arylsulfonylamino group has the same meaning as that of the aforementioned aryl group.

The heteroaryl group in the heteroaryloxy group, the heteroarylthio group, the heteroarylsulfinyl group, the heteroaroyl group, the heteroaryloxycarbonyl group, the heteroarylsulfonyl group, the heteroaryloxysulfonyl group, the heteroaroyloxy group, the heteroaroylamino group, the heteroarylsulfonyloxy group, and the heteroarylsulfonylamino group has the same meaning as that of the aforementioned heteroaryl group.

The alkyl group on the nitrogen atom in the (N-alkyl)amino group, the (N-alkyl-N'-alkyl)amino group (the two alkyl groups are the same or different), the (N-alkyl-N'-aryl)amino group, the (N-alkyl-N'-heteroaryl)amino group, the (N-alkyl)carbamoyl group, the (N-alkyl-N'-alkyl)carbamoyl group (the two alkyl groups are the same or different), the (N-alkyl-N'-aryl)carbamoyl group, the (N-alkyl-N'-heteroaryl)carbamoyl group, the (N-alkyl)sulfamoyl group, the (N-alkyl-N'-alkyl)sulfamoyl group (the two alkyl groups are the same or different), the (N-alkyl-N'-aryl)sulfamoyl group, the (N-alkyl-N'-heteroaryl)sulfamoyl group, the (N-alkyl)alkanoylamino group, the (N-alkyl)aroylamino group, the (N-alkyl)heteroaroylamino group, the (N-alkyl)carbamoyloxy group, the (N-alkyl-N'-alkyl)carbamoyloxy group (the two alkyl groups are the same or different), the (N-alkyl-N'-aryl)carbamoyloxy group, the (N-alkyl-N'-heteroaryl)carbamoyloxy group, the (N-alkyl)sulfamoyloxy group, the (N-alkyl-N'-alkyl)sulfamoyloxy group (the two alkyl groups are the same or different), the (N-alkyl-N'-aryl)sulfamoyloxy group, the (N-alkyl-N'-heteroaryl)sulfamoyloxy group, the (N-alkyl)alkylsulfonylamino group, the (N-alkyl)arylsulfonylamino group, and the (N-alkyl)heteroarylsulfonylamino group has the same meaning as that of the aforementioned alkyl group.

The aryl group on the nitrogen atom in the (N-aryl)amino group, the (N-alkyl-N'-aryl)amino group, the (N-aryl-N'-aryl)amino group (the two aryl groups are the same or different), the (N-aryl-N'-heteroaryl)amino group, the (N-aryl)carbamoyl group, the (N-alkyl-N'-aryl)carbamoyl group, the (N-aryl-N'-aryl)carbamoyl group (the two aryl groups are the same or different), the (N-aryl-N'-heteroaryl)carbamoyl group, the (N-aryl)sulfamoyl group, the (N-alkyl-N'-aryl)sulfamoyl group, the (N-aryl-N'-aryl)sulfamoyl group (the two aryl groups are the same or different), the (N-aryl-N'-heteroaryl)sulfamoyl group, the (N-aryl)alkanoylamino group, the (N-aryl)aroylamino group, the (N-aryl)heteroaroylamino group, the (N-aryl)carbamoyloxy group, the (N-alkyl-N'-aryl)carbamoyloxy group, the (N-aryl-N'-aryl)carbamoyloxy group (the two aryl groups are the same or different), the (N-aryl-N'-heteroaryl)carbamoyloxy group, the (N-aryl)sulfamoyloxy group, the (N-alkyl-N'-aryl)sulfamoyloxy group, the (N-aryl-N'-aryl)sulfamoyloxy group (the two aryl groups are the same or different), the (N-aryl-N'-heteroaryl)sulfamoyloxy group, the (N-aryl)alkylsulfonylamino group, the (N-aryl)arylsulfonylamino group, and the (N-aryl)heteroarylsulfonylamino group has the same meaning as that of the aforementioned aryl group.

The heteroaryl group on the nitrogen atom in the (N-heteroaryl)amino group, the (N-alkyl-N'-heteroaryl)amino group, the (N-aryl-N'-heteroaryl)amino group, the (N-heteroaryl-N'-heteroaryl)amino group (the two heteroaryl groups are the same or different), the (N-heteroaryl)carbamoyl group, the (N-alkyl-N'-heteroaryl)carbamoyl group, the (N-aryl-N'-heteroaryl)carbamoyl group, the (N-heteroaryl-N'-heteroaryl)carbamoyl group (the two heteroaryl groups are the same or different), the (N-heteroaryl)sulfamoyl group, the (N-alkyl-N'-heteroaryl)sulfamoyl group, the (N-aryl-N'-heteroaryl)sulfamoyl group, the (N-heteroaryl-N'-heteroaryl)sulfamoyl group (the two heteroaryl groups are the same or different), the (N-heteroaryl)alkanoylamino group, the (N-heteroaryl)aroylamino group, the (N-heteroaryl)heteroaroylamino group, the (N-heteroaryl)carbamoyloxy group, the (N-alkyl-N'-heteroaryl)carbamoyloxy group, the (N-aryl-N'-heteroaryl)carbamoyloxy group, the (N-heteroaryl-N'-heteroaryl)carbamoyloxy group (the two heteroaryl groups are the same or different), the (N-heteroaryl)sulfamoyloxy group, the (N-alkyl-N'-heteroaryl)sulfamoyloxy group, the (N-aryl-N'-heteroaryl)sulfamoyloxy group, the (N-heteroaryl-N'-heteroaryl)sulfamoyloxy group (the two heteroaryl groups are the same or different), the (N-heteroaryl)alkylsulfonylamino group, the (N-heteroaryl)arylsulfonylamino group, and the (N-heteroaryl)heteroarylsulfonylamino group has the same meaning as that of the aforementioned heteroaryl group.

Examples of the heterocyclic group which is formed by containing N include a 1-aziridinyl group, a 1-azetidinyl group, a 1-pyrrolidinyl group, a 1-pyrazolidinyl group, a 1-imidazolidinyl group, a piperidino group, a 1-piperazinyl group, a morpholino group, a thiomorpholino group, a 1-homopiperazinyl group, a 3-oxazolidinyl group, a 3-thioxazolidinyl group, a 2-isoxazolidinyl group, a 3-thiazolidinyl group, a 2-isothiazolidinyl group, a 3-isothioxazolidinyl group, a 1,2,3,4-tetrahydroquinolin-1-yl group, a 1,2,3,4-tetrahydroisoquinolin-2-yl group, and the like.

As to the substituent of the heterocyclic group which is formed by containing N, the number of the substituents of the group is from 1 to 3, the substituents are the same or different, and examples of the substituent include a substituted or unsubstituted alkyl group, a formyl group, an alkanoyl group, a carboxyl group, an alkoxycarbonyl group, a carbamoyl group, an (N-alkyl)carbamoyl group, an (N-alkyl-N'-alkyl)carbamoyl group (the two alkyl groups are the same or different), a hydroxyl group, an alkoxyl group, an alkanoyloxy group, an alkylsulfonyloxy group, an amino group, an (N-alkyl)amino group, an (N-alkyl-N'-alkyl)amino group (the two alkyl groups are the same or different), an alkanoylamino group, an alkylsulfonylamino group, an alkylthio group, a sulfo group, a sulfamoyl group, an (N-alkyl)sulfamoyl group, an (N-alkyl-N'-alkyl)sulfamoyl group (the two alkyl groups are the same or different), a cyano group, a nitro group, a halogen atom, and the like. The halogen atom has the same meaning as that of the aforementioned halogen atom. The alkyl group in the alkyl group, the alkanoyl group, the alkoxycarbonyl group, the alkoxyl group, the alkanoyloxy group, the alkylsulfonyloxy group, the alkanoylamino group, the alkylsulfonylamino group, and the alkylthio group has the same meaning as that of the aforementioned alkyl group. The alkyl group on the nitrogen atom in the (N-alkyl)carbamoyl group, the (N-alkyl-N'-alkyl)carbamoyl group, the (N-alkyl)amino group, the (N-alkyl-N'-alkyl)amino group, the (N-alkyl)sulfamoyl group, and the (N-alkyl-N'-alkyl)sulfamoyl group has the same meaning as that of the aforementioned alkyl group. Examples of the substituent of the alkyl group include a carboxyl group, an alkoxycarbonyl group, a carbamoyl group, an (N-alkyl)carbamoyl group, an (N-alkyl-N'-alkyl)carbamoyl group (the two alkyl groups are the same or different), a hydroxyl group, an alkoxyl group, an alkanoyloxy group, an alkylsulfonyloxy group, an amino group, an (N-alkyl)amino group, an (N-alkyl-N'-alkyl)amino group (the two alkyl groups are the same or different), an alkanoylamino group, an alkylsulfonylamino group, an alkylthio group, a sulfo group, a sulfamoyl group, an (N-alkyl)sulfamoyl group, an (N-alkyl-N'-alkyl)sulfamoyl group (the two alkyl groups are the same or different), a cyano group, a nitro group, a halogen atom, and the like. The halogen atom mentioned as the substituent of the alkyl group has the same meaning as that of the aforementioned halogen atom. The alkyl group in the alkoxycarbonyl group, the alkoxyl group, the alkanoyloxy group, the alkylsulfonyloxy group, the alkanoylamino group, the alkylsulfonylamino group, and the alkylthio group which are mentioned as the substituents of the alkyl group has the same meaning as that of the aforementioned alkyl group. The alkyl group on the nitrogen atom in the (N-alkyl)carbamoyl group, the (N-alkyl-N'-alkyl)carbamoyl group, the (N-alkyl)amino group, the (N-alkyl-N'-alkyl)amino group, the (N-alkyl)sulfamoyl group, and the (N-alkyl-N'-alkyl)sulfamoyl group which are mentioned as the substituents of the alkyl group have the same meaning as that of the aforementioned alkyl group.

As to the substituent of the aralkyl group, the aryl group, the heteroaryl group, and the aliphatic heterocyclic group in R^{D} and R^{J}, the number of substituents is from 1 to 5, the substituents are the same or different, and examples of the substituent include a substituted or unsubstituted alkyl group, the aforementioned A²-A³-A⁴-R^{D}, the aforementioned A⁵-R^{J}, a cyano group, a nitroso group, a nitro group, a halogen atom, a substituted silyl group, and the like. The halogen atom has the same meaning as that of the aforementioned halogen atom. The substituent in the substituted silyl group has the same meaning as that of the aforementioned substituent in the substituted silyl group. The alkyl group has the same meaning as that of the aforementioned alkyl group. The substituent of the alkyl group has the same meaning as that of the aforementioned substituent of the alkyl group in R^{D} and R^{J}.

Examples of the ring formed by any two of R^{D}, R^{E}, R^{F}, R^{G}, RH, and R^{I}, together with atoms adjacent thereto, respectively, include the aforementioned rings formed by any two of R^{a}, R^{b}, R^{c}, R^{d}, R^{e}, and R^{f} together with atoms adjacent thereto, respectively.

Examples of the ring formed by any two of R^{J}, R^{K}, and R^{L}, together with atoms adjacent thereto, respectively, include the aforementioned ring formed by any two of R^{A}, R^{B}, and R^{C} together with atoms adjacent thereto, respectively.

### (Substituent in the substituted aralkyl group)

The substituent in the substituted aralkyl group has the same meaning as that of the aforementioned substituent of the aralkyl group in R^{D} and R^{J}, wherein the number of the substituents is from 1 to 5 wherein the substituents are the same or different.

### (Substituent of the aryl group in the substituted aryl group, the substituted arylamino group, the substituted aryloxy group, the substituted aroyloxy group, the substituted arylsulfonylamino group, and the substituted arylthio group)

The substituent of the aryl group in the substituted aryl group, the substituted arylamino group, the substituted aryloxy group, the substituted aroyloxy group, the substituted arylsulfonylamino group, and the substituted arylthio group has the same meaning as that of the aforementioned substituent of the aryl group in R^{D} and R^{J}, wherein the number of the substituents is from 1 to 5 wherein the substituents are the same or different.

### (Substituent of the heteroaryl group in the substituted heteroaryl group, the substituted heteroarylamino group, the substituted heteroaryloxy group, the substituted heteroaroyloxy group, the substituted heteroaryloxycarbonyloxy group, the substituted heteroarylthio group, the substituted heteroarylsulfonylamino group, the substituted 2-pyridylamino group, and the substituted 4-quinazolinylamino group)

The substituent of the heteroaryl group in the substituted heteroaryl group, the substituted heteroarylamino group, the substituted heteroaryloxy group, the substituted heteroaroyloxy group, the substituted heteroaryloxycarbonyloxy group, the substituted heteroarylthio group, the substituted heteroarylsulfonylamino group, the substituted 2-pyridylamino group, and the substituted 4-quinazolinylamino group has the same meaning as that of the aforementioned substituent of the heteroaryl group in R^{D} and R^{J}, wherein the number of the substituents is from 1 to 5 wherein the substituents are the same or different.

### (Substituent of the aliphatic heterocyclic group in the substituted aliphatic heterocyclic group, the substituted aliphatic heterocycle-oxy group, the substituted aliphatic heterocycle-carbonyloxy group, the substituted aliphatic heterocycle-oxycarbonyloxy group, the substituted aliphatic heterocycle-thio group, and the substituted aliphatic heterocycle-sulfonyl amino group)

The substituent of the aliphatic heterocyclic group in the substituted aliphatic heterocyclic group, the substituted aliphatic heterocycle-oxy group, the substituted aliphatic heterocycle-carbonyloxy group, the substituted aliphatic heterocycle-oxycarbonyloxy group, the substituted aliphatic heterocycle-thio group, and the substituted aliphatic heterocycle-sulfonylamino group has the same meaning as that of the aforementioned substituent of the aliphatic heterocyclic group in RD and R^{J}, wherein the number of the substituents is from 1 to 5 wherein the substituents are the same or different.

### (Substituent in the substituted carbamoyl group, the substituted carbamoyloxy group, the substituted sulfamoyl group, and the substituted sulfamoyloxy group)

The substituents in the substituted carbamoyl group, the substituted carbamoyloxy group, the substituted sulfamoyl group and the substituted sulfamoyloxy group, which are the same or different, represent a substituted or unsubstituted alkyl group, a substituted or unsubstituted cycloalkyl group, a substituted or unsubstituted aralkyl group, a substituted or unsubstituted alkenyl group, a substituted or unsubstituted cycloalkenyl group, a substituted or unsubstituted alkynyl group, a substituted or unsubstituted aryl group, a substituted or unsubstituted heteroaryl group, a substituted or unsubstituted aliphatic heterocyclic group, or a substituted or unsubstituted heterocyclic group which is formed by containing N. The alkyl group, the cycloalkyl group, the aralkyl group, the alkenyl group, the cycloalkenyl group, the alkynyl group, the aryl group, the heteroaryl group, and the aliphatic heterocyclic group have the same meanings as those of the aforementioned alkyl group, cycloalkyl group, aralkyl group, alkenyl group, cycloalkenyl group, alkynyl group, aryl group, heteroaryl group, and aliphatic heterocyclic group, respectively. The substituents of the the alkyl group, the cycloalkyl group, the alkenyl group, the cycloalkenyl group, and the alkynyl group have the same meanings as those of the aforementioned substituents of the alkyl group, the cycloalkyl group, the alkenyl group, the cycloalkenyl group, and the alkynyl group in R^{D} and R^{J}, respectively. The substituents of the aralkyl group, the aryl group, the heteroaryl group, and the aliphatic heterocyclic group have the same meanings as those of the aforementioned substituents of the aralkyl group, the aryl group, the heteroaryl group, and the aliphatic heterocyclic group in R^{D} and R^{J}, respectively. The heterocyclic group which is formed by containing N has the same meaning as that of the aforementioned heterocyclic group which is formed by containing N. The substituent of the heterocyclic group which is formed by containing N has the same meaning as that of the aforementioned substituent of the heterocyclic group which is formed by containing N.

### (Substituent on the nitrogen atom in the substituted alkanoylamino group, the substituted alkylsulfonylamino group, the substituted alkoxycarbonylamino group, the substituted arylamino group, the substituted arylsulfonylamino group, the substituted heteroarylamino group, the substituted heteroarylsulfonylamino group, and the substituted aliphatic heterocycle-sulfonylamino group)

Examples of the substituent on the nitrogen atom in the substituted alkanoylamino group, the substituted alkylsulfonylamino group, the substituted alkoxycarbonylamino group, the substituted arylamino group, the substituted arylsulfonylamino group, the substituted heteroarylamino group, the substituted heteroarylsulfonylamino group, and the substituted aliphatic heterocycle-sulfonylamino group include a substituted or unsubstituted alkyl group, a substituted or unsubstituted aryl group, and the like. The alkyl group and the aryl group have the same meanings as those of the aforementioned alkyl group and aryl group, respectively. The substituent of the alkyl group and the substituent of the aryl group have the same meanings as those of the aforementioned substituent of the alkyl group in R^{D} and R^{J} and the aforementioned substituent of the aryl group in R^{D} and R^{J}, respectively.

Examples of the salt in the compounds (I), (III) and (IV) include an acid addition salt such as a hydrochloride, a sulfate, a phosphate, an acetate, a fumarate, an oxalate, and a tartrate; an ammonium salt; an organic amine addition salt such as a triethylamine salt; a metal salt such as a lithium salt, a sodium salt, a potassium salt, a magnesium salt, and a calcium salt, and the like. The compounds (I), (III) and (IV) may sometimes have one or more asymmetric carbon atoms depending on types of their substituents, and stereoisomers such as enantiomers or diastereomers based on the asymmetric carbon atom(s) may exist. Any of the stereoisomers may be used in the present invention. The stereoisomers in a pure form, any mixtures of the stereoisomers, racemates, and the like can also be used. When the compounds (I), (III) and (IV) have one or more olefinic double bond(s), geometrical isomers based on the double bond(s) may sometimes exist. The geometrical isomers in a pure form or any mixtures of the geometrical isomers can be used in the present invention. Moreover, the compounds (I), (III) and (IV) may sometimes exist as hydrates or solvates, and any of these substances can be used in the present invention.

### (Compound (I))

Preferred examples of R¹ include a substituted or unsubstituted carbamoyl group and a substituted or unsubstituted sulfino group (the functional group selected from the group consisting of the foregoing groups is hereinafter referred to as "substituent 1"). More preferred examples of the substituted or unsubstituted carbamoyl group in R¹ include a carbamoyl group monosubstituted with a substituted or unsubstituted alkyl group, a carbamoyl group monosubstituted with a substituted or unsubstituted aryl group, a carbamoyl group monosubstituted with a substituted or unsubstituted heteroaryl group, and a carbamoyl group monosubstituted with a substituted or unsubstituted aliphatic heterocyclic group (the functional group selected from the group consisting of the foregoing groups is hereinafter referred to as "substituent 2"). More preferred examples of the substituted or unsubstituted sulfino group in R¹ include a substituted or unsubstituted alkylsulfonyl group, a substituted or unsubstituted arylsulfonyl group, a substituted or unsubstituted heteroarylsulfonyl group, and a substituted or unsubstituted aliphatic heterocycle-sulfonyl group (the functional group selected from the group consisting of the foregoing groups is hereinafter referred to as "substituent 3").

In R², the substituted or unsubstituted arylamino group is preferably a substituted or unsubstituted phenylamino group, and more preferably a phenylamino group substituted with an electron withdrawing group. In R², the substituted or unsubstituted heteroarylamino group is preferably a substituted or unsubstituted 4-quinazolinylamino group, a substituted or unsubstituted 4-pyrimidinylamino group, or a substituted or unsubstituted 2-benzothiazolylamino group, and more preferably a substituted or unsubstituted 4-quinazolinylamino group.

Preferred substituent (II) is a group wherein at least one of R³ and R⁶ has the Hammett constant σₚ of a positive value, and R⁴ and R⁵ are hydrogen atoms. As mentioned above, examples of the group having the Hammett constant σₚ of a positive value include an electron withdrawing group, and typical examples of the electron withdrawing group include a trifluoromethyl group, a substituted or unsubstituted alkoxycarbonyl group, a substituted or unsubstituted aryloxycarbonyl group, a substituted or unsubstituted carbamoyl group, a carboxyl group, a cyano group, a nitro group, a substituted or unsubstituted alkylsulfonyl group, a substituted or unsubstituted arylsulfonyl group, a substituted or unsubstituted sulfamoyl group, a halogen atom, and the like. More preferred substituent (II) is a group wherein at least one of R³ and R⁶ is a substituted or unsubstituted carbamoyl group, a substituted or unsubstituted sulfamoyl group, or a halogen atom, and R⁴ and R⁵ are hydrogen atoms.

In R², the functional group selected from the group consisting of a substituted or unsubstituted phenylamino group, a substituted or unsubstituted 4-quinazolinylamino group, a substituted or unsubstituted 4-pyrimidinylamino group, a substituted or unsubstituted 2-benzothiazolylamino group, and the substituent (II) wherein at least one of R³ and R⁶ has the Hammett constant σₚ of a positive value and R⁴ and R⁵ are hydrogen atoms is hereinafter referred to as "substituent 4". In R², the functional group selected from the group consisting of a phenylamino group substituted with an electron withdrawing group, a substituted or unsubstituted 4-quinazolinylamino group, and the substituent (II) wherein at least one of R³ and R⁶ is a substituted or unsubstituted carbamoyl group, a substituted or unsubstituted sulfamoyl group, or a halogen atom and R⁴ and R⁵ are hydrogen atoms is hereinafter referred to as "substituent 5".

Among the compound (I), preferred compounds are those wherein R¹ and R² in the formula (I) are the substituent 1 and the substituent 4, respectively [hereinafter referred to as "compound (IA)"], and more preferred compounds are those wherein R¹ and R² in the formula (I) are the substituent 2 and the substituent 5, respectively [hereinafter referred to as "compound (IA1)"], and those wherein R¹ and R² in the formula (I) are the substituent 3 and the substituent 5, respectively [hereinafter referred to as "compound (IA2)"].

Among the compound (I), particularly preferred compounds are those wherein R¹ and R² in the formula (I), respectively, are:
N-butylcarbamoyl and N-{4,5-dicyano-2-[(2-methylbutyl)sulfonyl]phenyl)amino [hereinafter referred to as "compound (I-1)"];
N-{3-[2,5-bis(1,1-dimethylpropyl)phenyloxy]propyl}carbamoyl and
N-{4,5-dicyano-2-[(2-methylbutyl)sulfonyl]phenyl}amino [hereinafter referred to as "compound (I-2)"];
N-{3-[2,5-bis(1,1-dimethylpropyl)phenyloxy]propyl}carbamoyl and
N-[4,5-dicyano-2-(isopropylsulfonyl)phenyl]amino [hereinafter referred to as "compound (I-3)"];
N-[3-(2-ethylhexyloxy)propyl]carbamoyl and
N-[4,5-dicyano-2-(isopropylsulfonyl)phenyl]amino [hereinafter referred to as "compound (I-4)"];
N-{3-[2,4-bis(1,1-dimethylpropyl)phenyloxy]propyl}carbamoyl and
N-{4,5-dicyano-2-[(2-methylphenyl)sulfonyl]phenyl}amino [hereinafter referred to as "compound (I-5)"];
N-{3-[2,4-bis(1,1-dimethylpropyl)phenyloxy]propyl}carbamoyl and
N-[2,4-bis(methanesulfonyl)-5-trifluoromethylphenyl]amino [hereinafter referred to as "compound (I-6)"];
N-(2-ethylhexyl)carbamoyl and N-[4,5-dicyano-2-(isoprogylsulfonyl)phenyl]amino [hereinafter referred to as "compound (I-7)"];
N-(1,1,3,3-tetramethylbutyl)carbamoyl and
N-[4,5-dicyano-2-(isopropylsulfonyl)phenyl]amino [hereinafter referred to as "compound (I-8)"];
N-{3-[2,4-bis(1,1-dimethylpropyl)phenyloxy]propyl}carbamoyl and
N-(4,5-dicyano-2-trifluoromethylphenyl)amino [hereinafter referred to as "compound (I-9)"];
N-butylcarbamoyl and N-(2-trifluoromethyl-4-quinazolinyl)amino [hereinafter referred to as "compound (I-10)"];
3,5-bis(methoxycarbonyl)phenylsulfonyl and N-(2-chloro-4,5-dicyanophenyl)amino [hereinafter referred to as "compound (I-11)"];
phenylsulfonyl and N-(2-trifluoromethyl-4-quinazolinyl)amino [hereinafter referred to as "compound (I-12)"];
phenylsulfonyl and N-(2-phenyl-4-quinazolinyl)amino [hereinafter referred to as "compound (I-13)"];
3-carboxyphenylsulfonyl and N-(2-phenyl-4-quinazolinyl)amino [hereinafter referred to as "compound (I-14)"];
methanesulfonyl and N-(4-quinazolinyl)amino [hereinafter referred to as "compound (I-15)"];
phenylsulfonyl and N-(4-quinazolinyl)amino [hereinafter referred to as "compound (I-16)"];
phenylsulfonyl and N-[4,5-dicyano-2-(methanesulfonyl)phenyl]amino [hereinafter referred to as "compound (I-17)"];
4-chlorophenylsulfonyl and N-(2-chloro-4,5-dicyanophenyl)amino [hereinafter referred to as "compound (I-18)"];
3-carboxylphenylsulfonyl and N-[4,5-dicyano-2-(phenylsulfonyl)phenyl]amino [hereinafter referred to as "compound (I-19)"];
3-(sodiumsulfo)phenylsulfonyl and N-(2-trifluoromethyl-4-quinazolinyl)amino [hereinafter referred to as "compound (I-20)"];
3-carboxylphenylsulfonyl and N-(2-trifluoromethyl-4-quinazolinyl)amino [hereinafter referred to as "compound (I-21)"];
trifluoromethanesulfonyl and N-(4-quinazolinyl)amino [hereinafter referred to as "compound (I-22)"];
isopropylsulfonyl and N-{2-[3-(methanesulfonylamino)phenyl]-4-quinazolinyl)amino [hereinafter referred to as "compound (I-23)"];
phenylsulfonyl and N-(5,6-dichloro-2-trifluoromethyl-4-pyrimidinyl)amino [hereinafter referred to as "compound (I-24)"];
3-(methanesulfonylamino)-4-(2-methoxyethyloxy)phenylsulfonyl and
N-(2-trifluoromethyl-4-quinazolinyl)amino [hereinafter referred to as "compound (I-25)"];
octylsulfonyl and N-(6-carboxy-2-trifluoromethyl-4-quinazolinyl)amino [hereinafter referred to as "compound (I-26)"]; and
3-(methoxycarbonyl)phenylsulfonyl and N-(2-benzothiazolyl)amino [hereinafter referred to as "compound (I-27)"].

The structures of the compounds (1-1) to (1-10) are shown in Tables 1 and 2. Those of the compounds (1-11) to (1-27) are shown in Tables 3 to 5.

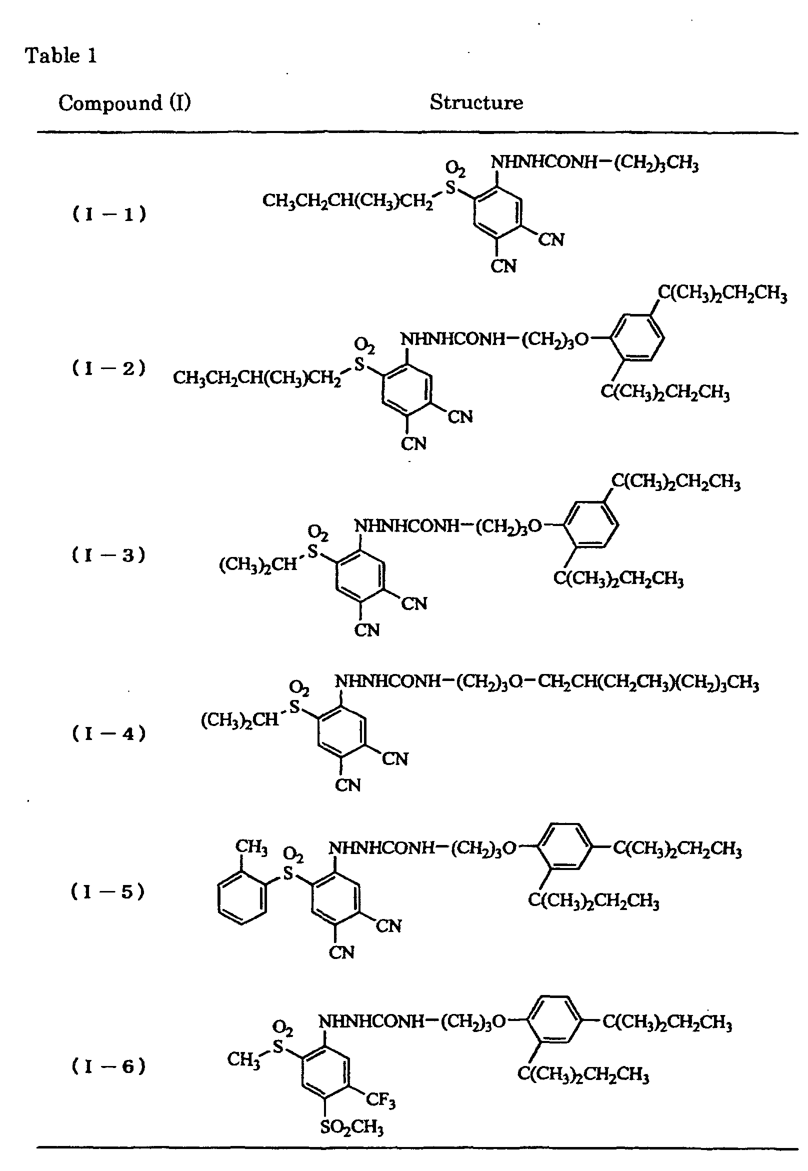

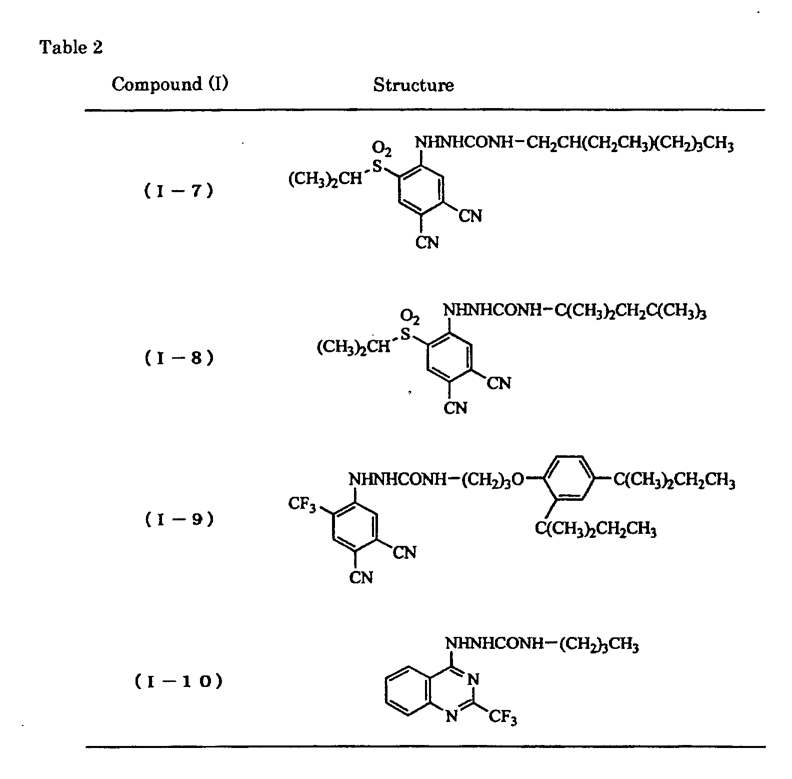

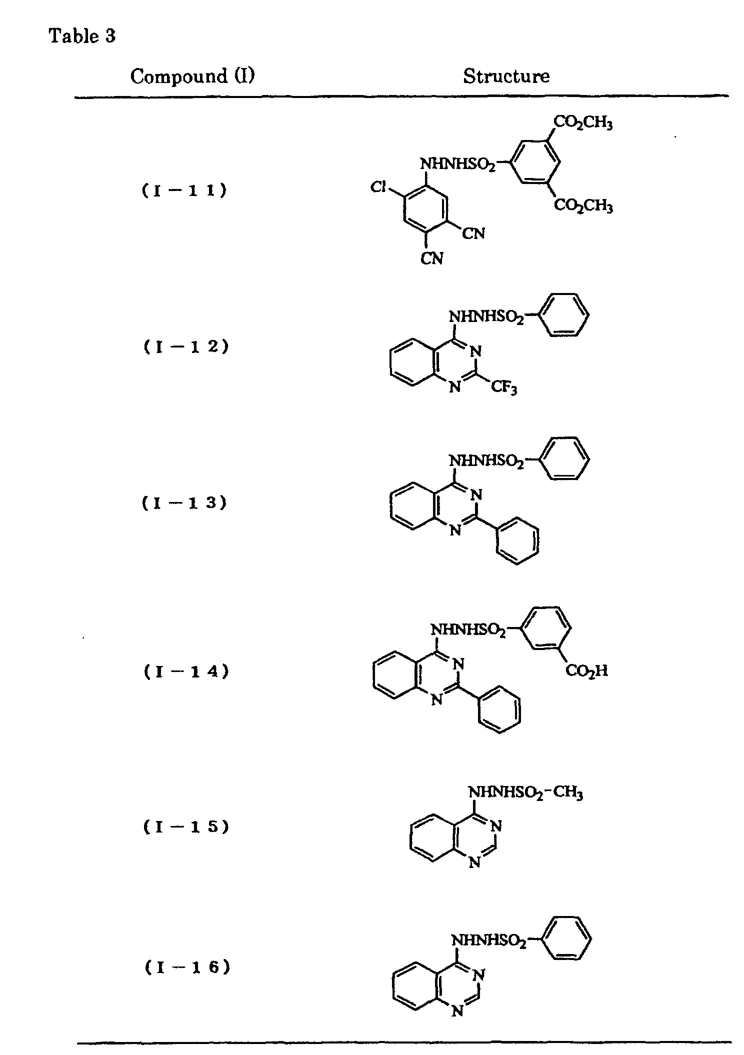

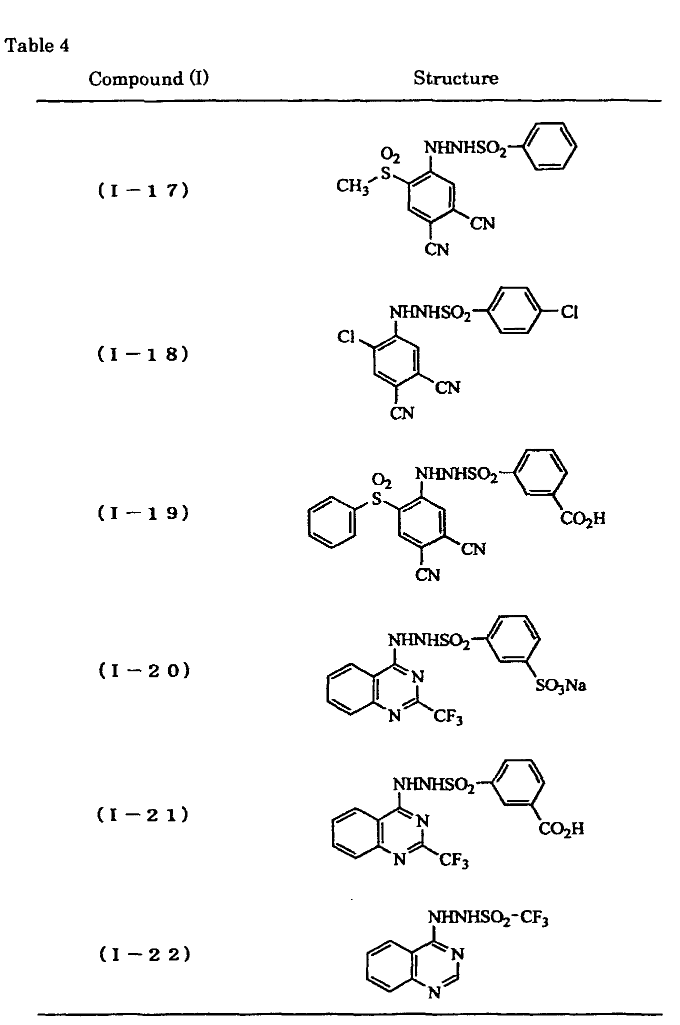

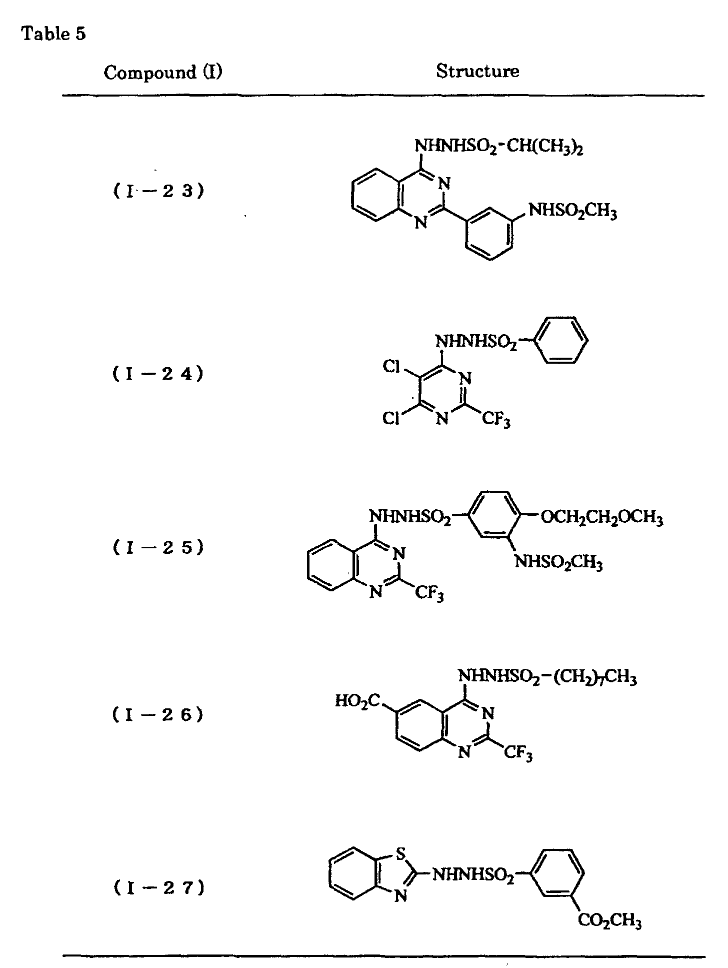

Among the compound (I), particularly preferred compounds are those wherein R¹, and R³, R⁴, R⁵, and R⁶ in the substituent (II), respectively, are
4-tert-butyl-2-methylphenylsulfonyl, and a chlorine atom, a hydrogen atom, a hydrogen atom, and a chlorine atom [hereinafter referred to as "compound (1-28)"]; phenylsulfonyl, and a chlorine atom, a hydrogen atom, a hydrogen atom, and a chlorine atom [hereinafter referred to as "compound (I-29)"];
phenylsulfonyl, and a bromine atom, a hydrogen atom, a hydrogen atom, and a bromine atom [hereinafter referred to as "compound (I-30)"];
2,4,6-trimethylphenylsulfonyl, and a bromine atom, a hydrogen atom, a hydrogen atom, and N,N-diethylcarbamoyl [hereinafter referred to as "compound (I-31)"];
2,4,6-triisopropylphenylsulfonyl, and a chlorine atom, a hydrogen atom, a hydrogen atom, and methyl [hereinafter referred to as "compound (I-32)"];
2,4,6-triisopropylphenylsulfonyl, and a chlorine atom, a hydrogen atom, a hydrogen atom, and N,N-diethylsulfamoyl [hereinafter referred to as "compound (I-33)"]; and
2-thienylsulfonyl, and a chlorine atom, a hydrogen atom, a hydrogen atom, and a chlorine atom [hereinafter referred to as "compound (I-34)"].

The structures of the compounds (I-28) to (I-34) are shown in Table 6.

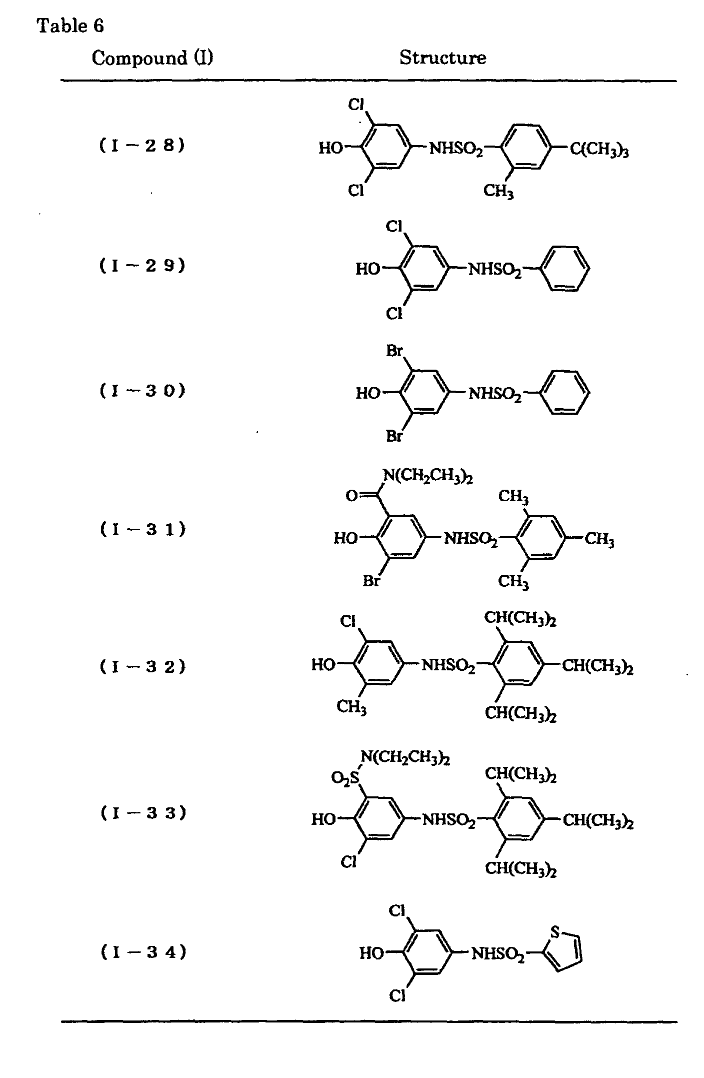

### (Compounds (III) and (IV))

Among the compounds (III) and (IV), the compound (III) is preferred. In the compound (III), preferred examples of R⁹ include a hydrogen atom, a halogen atom, a formyl group, a carboxyl group, a substituted or unsubstituted carbamoyl group, a substituted or unsubstituted alkoxyl group, a substituted or unsubstituted aryloxy group, a substituted or unsubstituted heteroaryloxy group, a substituted or unsubstituted aliphatic heterocycle-oxy group, a substituted or unsubstituted alkanoyloxy group, a substituted or unsubstituted aroyloxy group, a substituted or unsubstituted heteroarylcarbonyloxy group, a substituted or unsubstituted aliphatic heterocycle-carbonyloxy group, a substituted or unsubstituted alkoxycarbonyloxy group, a substituted or unsubstituted aryloxycarbonyloxy group, a substituted or unsubstituted heteroaryloxycarbonyloxy group, a substituted or unsubstituted aliphatic heterocycle-oxycarbonyloxy group, a substituted or unsubstituted carbamoyloxy group, a substituted or unsubstituted sulfamoyloxy group, a substituted or unsubstituted alkylthio group, a substituted or unsubstituted arylthio group, a substituted or unsubstituted heteroarylthio group, a substituted or unsubstituted aliphatic heterocycle-thio group, a sulfo group, and the like. In R⁹, the functional group selected from the group consisting of the foregoing groups is hereinafter referred to as "substituent 6".

More preferred examples of R⁹ include a hydrogen atom, a halogen atom, a substituted or unsubstituted aryloxy group, a substituted or unsubstituted heteroaryloxy group, a substituted or unsubstituted aliphatic heterocycle-oxy group, a substituted or unsubstituted alkanoyloxy group, a substituted or unsubstituted aroyloxy group, a substituted or unsubstituted heteroaroyloxy group, a substituted or unsubstituted aliphatic heterocycle-carbonyloxy group, a substituted or unsubstituted alkoxycarbonyloxy group, a substituted or unsubstituted heteroaryloxycarbonyloxy group, a substituted or unsubstituted aliphatic heterocycle-oxycarbonyloxy group, a substituted or unsubstituted carbamoyloxy group, a substituted or unsubstituted sulfamoyloxy group, a substituted or unsubstituted arylthio group, a substituted or unsubstituted heteroarylthio group, and a substituted or unsubstituted aliphatic heterocycle-thio group. In R⁹, the functional group selected from the group consisting of the foregoing groups is hereinafter referred to as "substituent 7".

R⁷ is preferably Z¹-N(R^{f})-R^{a} (wherein Z¹, R^{a} and R^{f} have the same meanings as those mentioned above, respectively), a substituted or unsubstituted alkanoylamino group, a substituted or unsubstituted aroylamino group, a substituted or unsubstituted heteroaroylamino group, a substituted or unsubstituted aliphatic heterocycle-carbonylamino group, or a halogen atom (in R⁷, the functional group selected from the group consisting of the foregoing groups is hereinafter referred to as "substituent 8"), and more preferably Z¹-N(R^{f})-R^{a} (wherein Z¹, R^{a} and R^{f} have the same meanings as those mentioned above, respectively), a substituted or unsubstituted alkanoylamino group, or a halogen atom (in R⁷, the functional group selected from the group consisting of the foregoing groups is hereinafter referred to as "substituent 9").

R¹⁰ is preferably a hydrogen atom, a substituted or unsubstituted alkanoylamino group, a substituted or unsubstituted aroylamino group, a substituted or unsubstituted heteroaroylamino group, a substituted or unsubstituted aliphatic heterocycle-carbonylamino group, a substituted or unsubstituted alkylsulfonylamino group, a substituted or unsubstituted arylsulfonylamino group, a substituted or unsubstituted heteroarylsulfonylamino group, a substituted or unsubstituted aliphatic heterocycle-sulfonylamino group, a substituted or unsubstituted alkoxycarbonylamino group, a substituted or unsubstituted aryloxycarbonylamino group, a substituted or unsubstituted heteroaryloxycarbonylamino group, a substituted or unsubstituted aliphatic heterocycle-oxycarbonylamino group, or NR^{c}-Z¹-N(R^{f})-R^{a} (wherein Z¹, R^{a}, R^{c} and R^{f} have the same meanings as those mentioned above, respectively) (in R¹⁰, the functional group selected from the group consisting of the foregoing groups is hereinafter referred to as "substituent 10"), and more preferably a substituted or unsubstituted alkanoylamino group, a substituted or unsubstituted alkylsulfonylamino group, a substituted or unsubstituted arylsulfonylamino group, a substituted or unsubstituted heteroarylsulfonylamino group, a substituted or unsubstituted aliphatic heterocycle-sulfonylamino group, or a substituted or unsubstituted alkoxycarbonylamino group (in R¹⁰, the functional group selected from the group consisting of the foregoing groups is hereinafter referred to as "substituent 11").

R⁸, R¹¹, R¹², and R¹³ are preferably hydrogen atoms.

Among the compound (III), preferred compounds are those wherein R⁷, R⁸, R⁹, R¹⁰, R¹¹, R¹², and R¹³ in the formula (III) are, respectively, the substituent 8, a hydrogen atom, the substituent 6, the substituent 10, a hydrogen atom, a hydrogen atom, and a hydrogen atom [hereinafter referred to as "compound (IIIA)"],
and more preferred compounds are those wherein the aforementioned substituents are, respectively, the substituent 9, a hydrogen atom, the substituent 7, the substituent 11, a hydrogen atom, a hydrogen atom, and a hydrogen atom [hereinafter referred to as "compound (IIIA1)"].

Among the compound (III), particularly preferred compounds are those wherein R⁷, R⁸, R⁹, R¹⁰, R¹¹, R¹², and R¹³ in the formula (III), respectively, are
N-methyl-N-(2-sodiumsulfoethyl)carbamoyl, a hydrogen atom, a hydrogen atom, methanesulfonylamino, a hydrogen atom, a hydrogen atom, and a hydrogen atom [hereinafter referred to as "compound (III-1)"];
N-(1-carboxyethyl)carbamoyl, a hydrogen atom, a hydrogen atom, (2-methylpropyloxy)carbonylamino, a hydrogen atom, a hydrogen atom, and a hydrogen atom [hereinafter referred to as "compound (III-2)"];
1-pyrrolidinylsulfonyl, a hydrogen atom, a hydrogen atom, methanesulfonylamino, a hydrogen atom, a hydrogen atom, and a hydrogen atom [hereinafter referred to as "compound (III-3)"];
N-propylsulfamoyl, a hydrogen atom, a hydrogen atom, methanesulfonylamino, a hydrogen atom, a hydrogen atom, and a hydrogen atom [hereinafter referred to as "compound (III-4)"];
N,N-diethylsulfamoyl, a hydrogen atom, a hydrogen atom, methanesulfonylamino, a hydrogen atom, a hydrogen atom, and a hydrogen atom [hereinafter referred to as "compound (III-5)"];
N,N-diethylsulfamoyl, a hydrogen atom, a hydrogen atom, acetylamino, a hydrogen atom, a hydrogen atom, and a hydrogen atom [hereinafter referred to as "compound (III-6)"];
morpholinocarbonyl, a hydrogen atom, a hydrogen atom, methanesulfonylamino, a hydrogen atom, a hydrogen atom, and a hydrogen atom [hereinafter referred to as "compound (III-7)"];
propanoylamino, a hydrogen atom, a hydrogen atom, acetylamino, a hydrogen atom, a hydrogen atom, and a hydrogen atom [hereinafter referred to as "compound (III-8)"];
N,N-dimethylcarbamoyl, a hydrogen atom, a hydrogen atom, trifluoroacetylamino, a hydrogen atom, a hydrogen atom, and a hydrogen atom [hereinafter referred to as "compound (III-9)"];
morpholinocarbonyl, a hydrogen atom, a hydrogen atom, butoxycarbonylamino, a hydrogen atom, a hydrogen atom, and a hydrogen atom [hereinafter referred to as "compound (III-10)"];
N,N-diethylcarbamoyl, a hydrogen atom, a hydrogen atom, 3-(methanesulfonylamino)-phenylsulfonylamino, a hydrogen atom, a hydrogen atom, and a hydrogen atom [hereinafter referred to as "compound (III-11)"];
morpholinocarbonyl, a hydrogen atom, a hydrogen atom, 3-carboxyphenylsulfonylamino, a hydrogen atom, a hydrogen atom, and a hydrogen atom [hereinafter referred to as "compound (III-12)"];
4-carboxypiperidinocarbonyl, a hydrogen atom, a hydrogen atom, methanesulfonylamino, a hydrogen atom, a hydrogen atom, and a hydrogen atom [hereinafter referred to as "compound (III-13)"];
3-carboxypiperidinocarbonyl, a hydrogen atom, a hydrogen atom, methanesulfonylamino, a hydrogen atom, a hydrogen atom, and a hydrogen atom [hereinafter referred to as "compound (III-14)"];
morpholinocarbonyl, a hydrogen atom, a hydrogen atom, phenylsulfonylamino, a hydrogen atom, a hydrogen atom, and a hydrogen atom [hereinafter referred to as "compound (III-15)"];
4-carboxypiperidinocarbonyl, a hydrogen atom, a hydrogen atom, phenylsulfonylamino, a hydrogen atom, a hydrogen atom, and a hydrogen atom [hereinafter referred to as "compound (III-16)"];
3-carboxypiperidinocarbonyl, a hydrogen atom, a hydrogen atom, phenylsulfonylamino, a hydrogen atom, a hydrogen atom, and a hydrogen atom [hereinafter referred to as "compound (III-17)"];
a chlorine atom, a hydrogen atom, a chlorine atom, 4-methylphenylsulfonylamino, a hydrogen atom, a hydrogen atom, and a hydrogen atom [hereinafter referred to as "compound (III-18)"];
morpholinocarbonyl, a hydrogen atom, a hydrogen atom, (2-methylpropyloxy)carbonylamino, a hydrogen atom, a hydrogen atom, and a hydrogen atom [hereinafter referred to as "compound (III-19)"];
3-carboxypiperidinocarbonyl, a hydrogen atom, a hydrogen atom, propanoylamino, a hydrogen atom, a hydrogen atom, and a hydrogen atom [hereinafter referred to as "compound (III-20)"];
morpholinocarbonyl, a hydrogen atom, a hydrogen atom, trifluoroacetylamino, a hydrogen atom, a hydrogen atom, and a hydrogen atom [hereinafter referred to as "compound (III-21)"];
1-pyrrolidinylsulfonyl, a hydrogen atom, a chlorine atom, methanesulfonylamino, a hydrogen atom, a hydrogen atom, and a hydrogen atom [hereinafter referred to as "compound (III-22)"];
N,N-bis(2-methoxyethyl)carbamoyl, a hydrogen atom, a chlorine atom, phenylsulfonylamino, a hydrogen atom, a hydrogen atom, and a hydrogen atom [hereinafter referred to as "compound (III-23)"];
N-[4-(methanesulfonylamino)phenyl]-N-methylcarbamoyl, a hydrogen atom, a hydrogen atom, 3-(methanesulfonylamino)phenylsulfonylamino, a hydrogen atom, a hydrogen atom, and a hydrogen atom [hereinafter referred to as "compound (III-24)"];
N-(3-carboxyphenyl)sulfamoyl, a hydrogen atom, a hydrogen atom, methanesulfonylamino, a hydrogen atom, a hydrogen atom, and a hydrogen atom [hereinafter referred to as "compound (III-25)"];
N-(4-potassiumsulfophenyl)carbamoyl, a hydrogen atom, a hydrogen atom, trifluoroacetylamino, a hydrogen atom, a hydrogen atom, and a hydrogen atom [hereinafter referred to as "compound (III-26)"];
N-(1,1-dimethylethyl)sulfamoyl, a hydrogen atom, a hydrogen atom, 3-methylureido, a hydrogen atom, a hydrogen atom, and a hydrogen atom [hereinafter referred to as "compound (III-27)"); and
4-carboxypiperidinocarbonyl, a hydrogen atom, a fluorine atom, 4-(methanesulfonylamino)phenylsulfonylamino, a hydrogen atom, a hydrogen atom, and a hydrogen atom [hereinafter referred to as "compound (III-28)"].

The structures of the compounds (III-1) to (III-28) are shown in Tables 7 to 11.

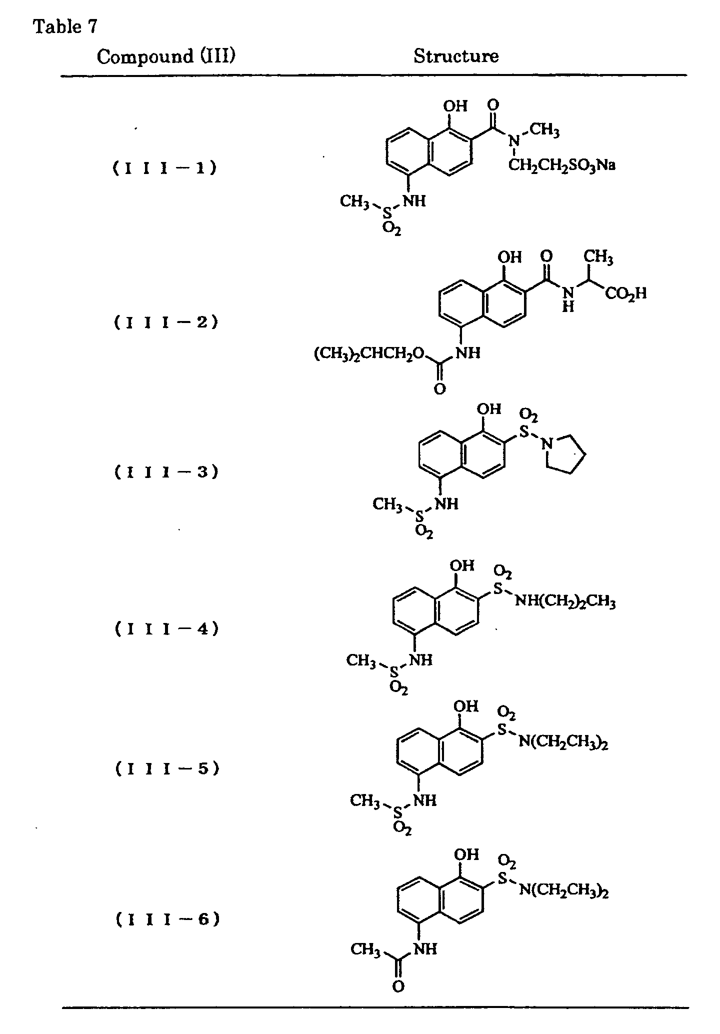

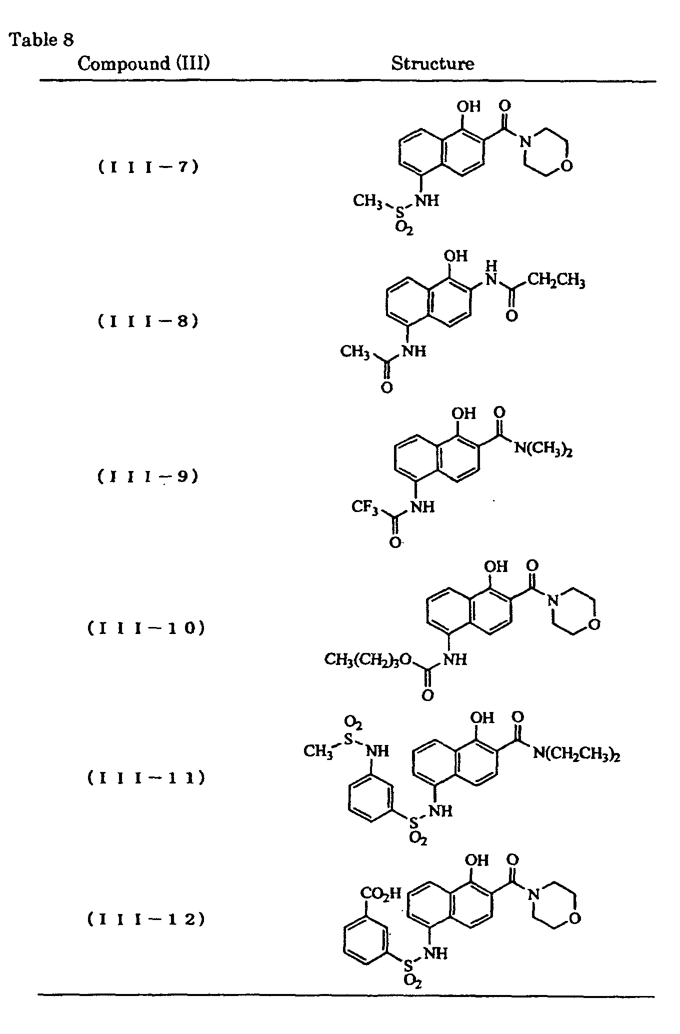

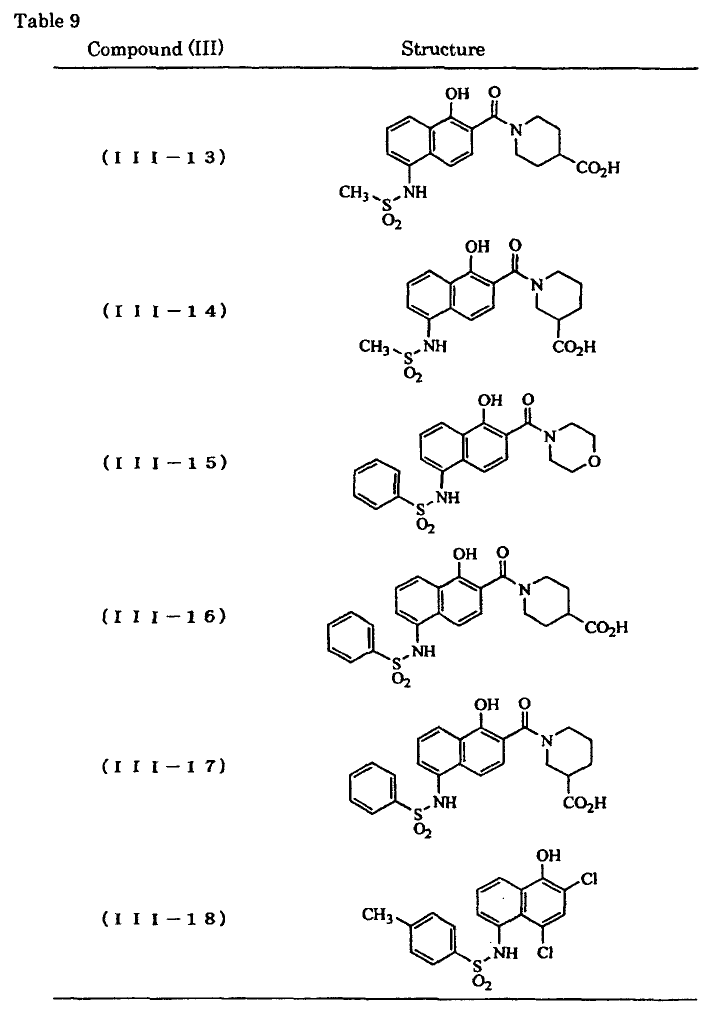

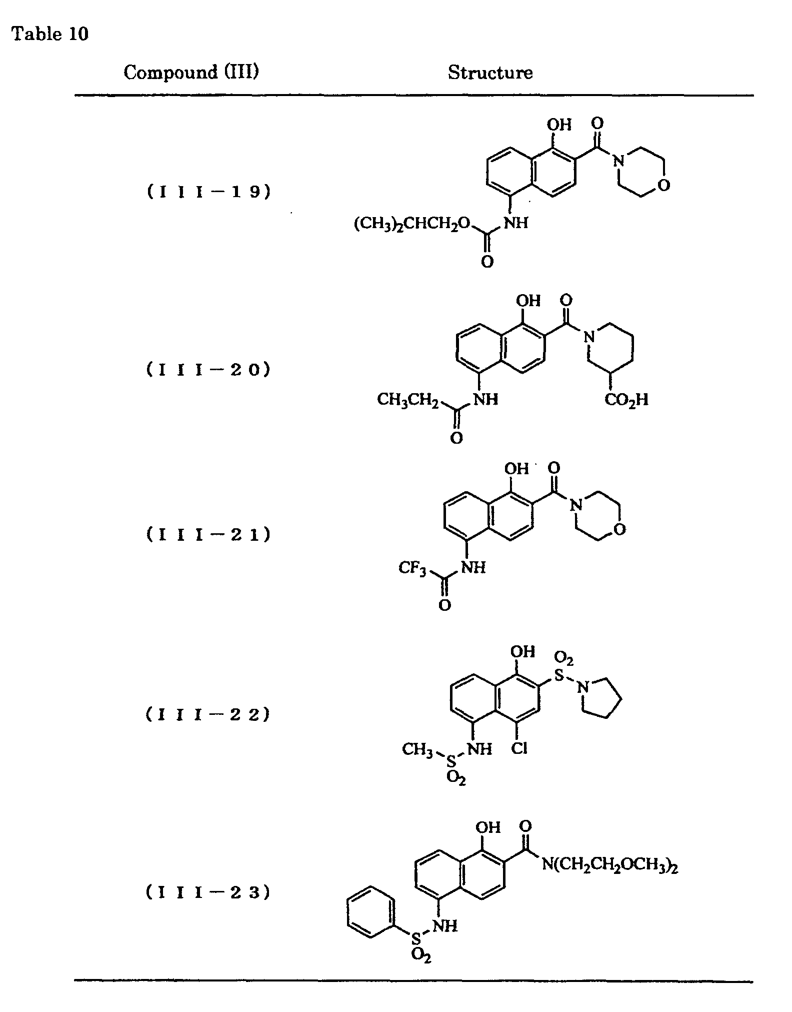

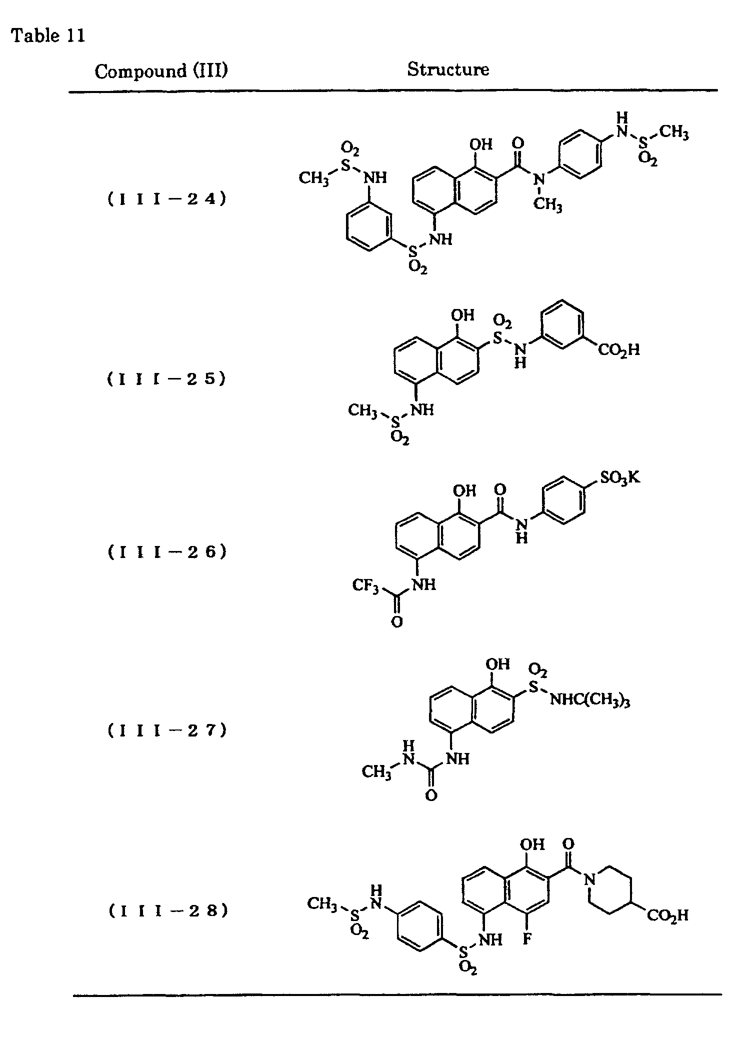

In the compound (IV), R¹⁴ is preferably the aforementioned substituent 6, and more preferably the aforementioned substituent 7.

R¹⁵ is preferably the aforementioned substituent 8, and more preferably the aforementioned substituent 9.

R²⁰ is preferably the aforementioned substituent 10, and more preferably the aforementioned substituent 11.

R¹⁶, R¹⁷, R¹⁸, and R¹⁹ are preferably hydrogen atoms.

Among the compound (IV), preferred compounds are those wherein R¹⁴, R¹⁵, R¹⁶, R¹⁷, R¹⁸, R¹⁹, and R²⁰ in the formula (IV), respectively, are the substituent 6, the substituent 8, a hydrogen atom, a hydrogen atom, a hydrogen atom, a hydrogen atom, and the substituent 10 [hereinafter referred to as "compound (IVA)"],
and more preferred compounds are those wherein the aforementioned substituents are, respectively, the substituent 7, the substituent 9, a hydrogen atom, a hydrogen atom, a hydrogen atom, a hydrogen atom, and the substituent 11 [hereinafter referred to as "compound (IVA1)"].

Among the compound (IV), particularly preferred compounds are those wherein R¹⁴, R¹⁵, R¹⁶, R¹⁷, R¹⁸, R¹⁹, and R²⁰ in the formula (IV), respectively, are
A chlorine atom, N-(3-potassiumsulfophenyl)carbamoyl, a hydrogen atom, a hydrogen atom, a hydrogen atom, a hydrogen atom, and a hydrogen atom [hereinafter referred to as "compound (IV-1)"];
a hydrogen atom, N-(2-carboxyethyl)carbamoyl, a hydrogen atom, a hydrogen atom, a hydrogen atom, a hydrogen atom, and a hydrogen atom [hereinafter referred to as "compound (IV-2)"];
a hydrogen atom, morpholinocarbonyl, a hydrogen atom, a hydrogen atom, a hydrogen atom, a hydrogen atom, and a hydrogen atom [hereinafter referred to as "compound (IV-3)"]; and
a hydrogen atom, morpholinocarbonyl, a hydrogen atom, a hydrogen atom, a hydrogen atom, a hydrogen atom, and methanesulfonylamino [hereinafter referred to as "compound (IV-4)"].

The structures of the compounds (IV-1) to (IV-4) are shown in Table 12.

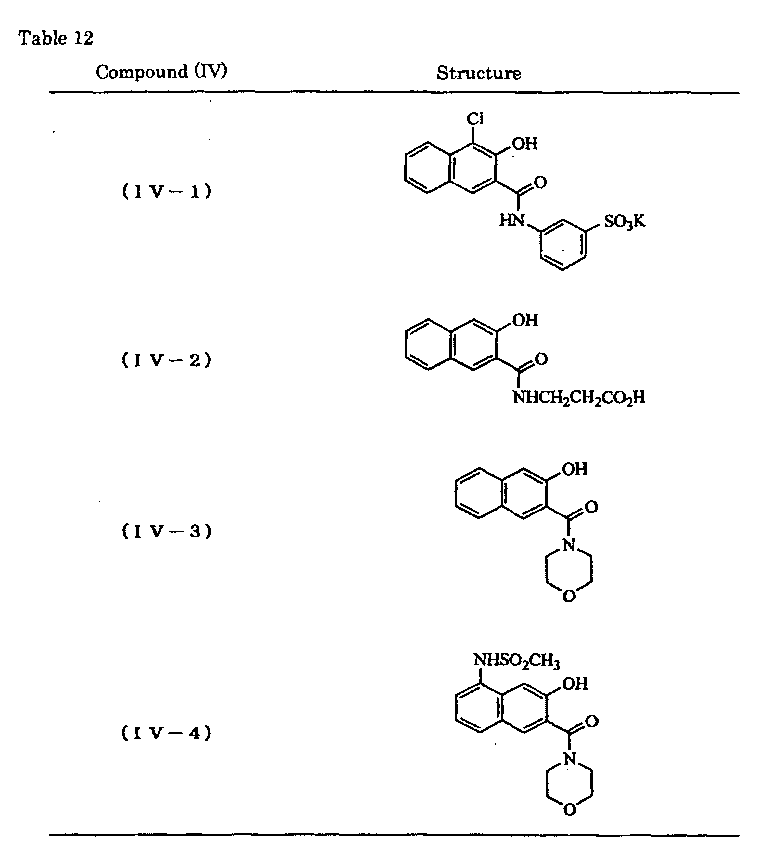

### (Combination of the compound (I) and a compound selected from the group consisting of the compounds (III) and (IV))

As a combination of the compound (I) and a compound selected from the group consisting of the compounds (III) and (IV), any combination is available. Preferred combinataions are that of the compound (IA) and the compound (IIIA) and that of the compound (IA) and the compound (IVA), and more preferred combinations are that of the compound (IA1) and the compound (IIIA1), that of the compound (I) and the compound (IVA1), that of the compound A1(IA2) and the compound (IIIA1), and that of the compound (IA2) and the compound (IVA1).

As the combination of the compound (I) and a compound selected from the group consisting of the compounds (III) and (IV), particularly preferred combinations are that of a compound selected from the group consisting of the compounds (I-1) to (I-34) and a compound selected from the group consisting of the compounds (III-1) to (III-28), and that of a compound selected from the group consisting of the compounds (I-1) to (1-34) and a compound selected from the group consisting of the compounds (IV-1) to (IV-4).

### (Preparation of the compound)

The compounds (I), (III) and (IV) used in the present invention can easily be prepared from commercially available compounds by a combination of general synthetic processes. For example, the compound (I) wherein R² is a substituted or unsubstituted arylamino group or a substituted or unsubstituted heteroarylamino group can be prepared by referring to the preparation methods disclosed in Japanese Published Unexamined Patent Application No. 227131/1996, No. 194793/1994, No. 241282/1993 or No. 152703/1997, or the references cited in these patent publications or the like. The compound (I) wherein R² is the substituent (II) can be prepared by referring to the preparation methods disclosed in Japanese Published Unexamined Patent Application No. 122994/1996, No. 110608/1996 or No. 146248/1997, or the references cited in these patent publications or the like. The compound (III) can be prepared by referring to the preparation methods disclosed in Japanese Published Unexamined Patent Application No. 55055/1998 or No. 55047/1998, or the references cited in these patent publications or the like. The preparation of the compounds (I), (III) and (IV) can also be performed by the methods described in the reference examples, or by referring to the methods described in the reference examples.

### (Method for determination of hydrogen peroxide or a peroxidative substance)

The method according to the present invention is characterized in that, in the determination of hydrogen peroxide, hydrogen peroxide (sometimes abbreviated as "ingredient D" or simply "D" in the specification), the compound (I) (this compound is sometimes abbreviated as "ingredient A" or simply "A" in the specification), and a compound selected from the group consisting of the compounds (III) and (IV) (sometimes abbreviated as "ingredient B" or simply "B" in the specification, or sometimes referred to as "compound (B)" for convenience in the following explanation; however, the terms should not be understood to exclude determinations wherein the compounds (III) and (IV) are used suitably in combination, as well as determinations wherein the compound (III) or (IV) is solely used) are reacted in the presence of a peroxidative substance, and the generated dye is subjected to colorimetry. Another embodiment of the method according to the present invention is characterized in that, in the determination of a peroxidative substance, a peroxidative substance (sometimes abbreviated as "ingredient C" or simply "C" in the specification), the compound (I), and the compound (B) are reacted in the presence of hydrogen peroxide, and the generated dye is subjected to colorimetry.

### (Determination of hydrogen peroxide or a peroxidative substance)

The determination of hydrogen peroxide by the method according to the present invention can be conducted, for example, by adding a sample containing hydrogen peroxide to be determined to an aqueous medium containing the compound (I), the compound (B) and a peroxidative substance, and subjecting the generated dye to colorimetry, preferably by measuring the absorbance around the absorption maximum λₘₐₓ of the generated dye.

The determination of a peroxidative substance by the method according to the present invention can be conducted, for example, by adding a sample containing a peroxidative substance to be determined to an aqueous medium containing the compound (I), the compound (B), and hydrogen peroxide, and subjecting the generated dye to colorimetry, preferably by measuring the absorbance around the absorption maximum λ ₘₐₓ of the generated dye.

In the determination of hydrogen peroxide and the determination of a peroxidative substance by the method according to the present invention, hydrogen peroxide is converted into a dye by oxidative coupling reaction with the compound (I) and the compound (B) in the presence of a peroxidative substance. The amount of the generated dye depends upon the amount of hydrogen peroxide and the activity of the peroxidative substance under the conditions that the combination of the compound (I) and the compound (B) is fixed in the oxidative coupling reaction. Accordingly, by carrying out colorimetry of the amount of the dye generated as a result of the foregoing reaction, the determination of hydrogen peroxide and the determination of the peroxidative substance which are contained in a sample are achieved. The term of "determination" used in the specification should be construed in the broadest sense which includes determinations wherein the concentration of the object to be determined contained in a sample is obtained as the measurement, as well as determinations to conduct comparative judgment of higher or less of a certain quantity (sometimes called as "semi-quantification"), and the term should not be construed in any limitative sense.

The aqueous medium which is used in the determination of hydrogen peroxide and the determination of a peroxidative substance by the method according to the present invention may contain, if necessary, an enzyme activity modifier, an enzyme stabilizer, a surfactant, an antiseptic, an affecting substance elimination agent, an organic solvent, an electron transfer agent, and the like. The reaction conditions are not particularly limited. The reaction temperature is preferably from 10 to 50°C, more preferably from 20 to 40°C, and particularly preferably from 25 to 37°C. The reaction time is preferably from 1 to 60 minutes, more preferably from 2 to 30 minutes, and particularly preferably from 5 to 15 minutes.

### (Method for determination of a substance or an enzyme to be determined in a sample)

Another embodiment of the present invention is characterized in that a sample containing a substance or an enzyme to be determined is reacted with a reagent for directly or indirectly converting the substance to be determined in the sample into hydrogen peroxide or a reagent for directly or indirectly generating hydrogen peroxide by reacting with the enzyme to be determined in the sample, the compound (I) and the compound (B) in the presence of a peroxidative substance, and the generated dye is subjected to colorimetry.

In the specification, "a substance to be determined in a sample" means a substance which exists in a sample and can be converted into hydrogen peroxide by a reagent for directly or indirectly converting the substance into hydrogen peroxide. In the specification, "an enzyme to be determined in a sample" indicates an enzyme which exists in a sample and can directly or indirectly generate hydrogen peroxide from a substance that can react with the enzyme. Examples of the substance that can react with the enzyme include a substrate and a substrate group of the enzyme and the like. Types of the "sample" are not particularly limited, and the examples include whole blood, plasma, serum, cerebrospinal fluid, saliva, amniotic liquid, urine, sweat, pancreatic juice, and the like.

### (Determination of a substance or an enzyme to be determined in a sample)

The determination of a substance or an enzyme to be determined in a sample by the method according to the present invention can be conducted, for example, by adding a sample containing a substance or an enzyme to be determined to an aqueous medium containing a reagent for directly or indirectly converting the substance to be determined in the sample into hydrogen peroxide or a reagent for directly or indirectly generating hydrogen peroxide by reacting with the enzyme to be determined in the sample, the compound (I), the compound (B), and a peroxidative substance, and then subjecting the generated dye to colorimetry, preferably by measuring the absorbance around the absorption maximum λₘₐₓ of the generated dye.

The aqueous medium which is used in the determination of a substance or an enzyme to be determined in a sample by the method according to the present invention may contain, if necessary, an enzyme activity modifier, an enzyme stabilizer, a surfactant, an antiseptic, an affecting substance elimination agent, an organic solvent, an electron transfer agent, and the like. The reaction conditions are not particularly limited. The reaction temperature is preferably from 10 to 50°C, more preferably from 20 to 40°C, and particularly preferably from 25 to 37°C. The reaction time is preferably from 1 to 60 minutes, more preferably from 2 to 30 minutes, and particularly preferably from 5 to 15 minutes.

### (Elimination of an affecting substance in the sample)

In the determination of a substance or an enzyme to be determined in a sample, when a substance which positively or negatively affects the reaction to directly or indirectly convert the substance into hydrogen peroxide or the reaction to directly or indirectly generate hydrogen peroxide from a substance that can react with the enzyme (hereinafter referred to as "affecting substance" in the specification) exists in the sample, precise determination of hydrogen peroxide may sometimes become difficult. Therefore, in the determination of a substance or an enzyme to be determined in a sample, it is desirable to previously eliminate the affecting substance in the sample.

The method for eliminating an affecting substance in the sample is not particularly limited so long as the method has no effect on the reaction to convert a substance or an enzyme to be determined in the sample, which can be converted into hydrogen peroxide, into hydrogen peroxide. Examples include a method for eliminating ascorbic acid of an affecting substance in the sample by converting the ascorbic acid into dehydroascorbic acid and water using ascorbate oxidase, and the like.

### (Reagent for directly or indirectly converting the substance to be determined in a sample into hydrogen peroxide or reagent for directly or indirectly generating hydrogen peroxide by reacting with the enzyme to be determined in a sample)

Examples of the reagent for directly or indirectly converting the substance to be determined in a sample into hydrogen peroxide include a reagent which comprises in an aqueous medium an enzyme or a group of enzymes that converts the substance to be determined in a sample into hydrogen peroxide, and the like. Examples of the reagent for directly or indirectly generating hydrogen peroxide by reacting with the enzyme to be determined in a sample include a reagent which comprises in an aqueous medium a substrate or a group of substrates of the enzyme that generates hydrogen peroxide by reacting with the enzyme to be determined in a sample, a reagent which comprises in an aqueous medium a substrate or a group of substrates of the enzyme that can react with the enzyme to be determined in a sample and an enzyme or a group of enzymes that generates hydrogen peroxide by reacting with the substrate or the substrate group, and the like. The term of "to directly or indirectly convert the substance to be determined in a sample into hydrogen peroxide" means to generate hydrogen peroxide as a result of a reaction of the substance with a reagent to directly or indirectly convert the substance into hydrogen peroxide, and the term should be construed in the broadest sense which includes a meaning to generate hydrogen peroxide by degrading the whole or a part of the substance, as well as a meanings to generate hydrogen peroxide by interaction of the substance and the reagent, and the like, and the term should not be construed in any limitative sense. The term of "to directly or indirectly generate hydrogen peroxide by reacting with the enzyme to be determined in a sample" means to generate hydrogen peroxide as a result of a reaction of the enzyme with a reagent to directly or indirectly generate hydrogen peroxide by reacting with the enzyme and the enzyme, and the term should be construed in the broadest sense which includes a meaning to generate hydrogen peroxide by degrading the whole or a part of the substance that can react with the enzyme, as well as a meaning to generate hydrogen peroxide by interaction of the enzyme and the reagent, and the like, and the term should not be construed in any limitative sense. The reagent for directly or indirectly converting the substance or the enzyme to be determined in a sample into hydrogen peroxide may contain, if necessary, an enzyme activity modifier, an enzyme stabilizer, a surfactant, an antiseptic, an affecting substance elimination agent, an organic solvent, an electron transfer agent, and the like.

### (Combination of the substance to be determined in a sample and an enzyme or a group of enzymes to convert the substance into hydrogen peroxide; and combination of the enzyme to be determined in a sample and a substrate or a group of substrates of the enzyme to generate hydrogen peroxide by reacting with the enzyme)

Examples of the combination of the substance to be determined in a sample and an enzyme or a group of enzymes to convert the substance into hydrogen peroxide, and the combination of the enzyme to be determined in a sample and a substrate or a group of substrates of the enzyme to generate hydrogen peroxide by reacting with the enzyme include the following combinations.
· Choline/choline oxidase
· Cholesterol/cholesterol oxidase
· Uric acid/uricase
· Triglyceride/lipoprotein lipase and glycerol oxidase
· Free fatty acid/acyl-CoA synthetase and acyl-CoA oxidase
· Glucose/pyranose oxidase
· Phospholipid/phospholipase D and choline oxidase
· Creatine/creatinase and sarcosine oxidase
· Creatinine/creatininase, creatinase, and sarcosine oxidase
· Lactate/lactate oxidase
· Inorganic phosphorus/purine nucleoside phosphorylase and xanthine oxidase
· Choline esterase/substrate such as o-toluoyl choline
· Monoamine oxidase/monoamine

### (Concentrations of the compound (I) and the compound (B))

In the method for determination of hydrogen peroxide, the method for determination of a peroxidative substance, and the method for determination of a substance or an enzyme to be determined in a sample according to the present invention, the concentrations of the compound (I) and the compound (B) can appropriately be chosen by those skilled in the art. For example, each compound can preferably be used in the concentration of from 0.1 to 1.0 mmol/L.

### (Peroxidative substance)

Examples of the peroxidative substance used in the method according to the present invention include peroxidase, cytochrome, hemin, hemoglobin in the various forms, alkaline hematin, iron sulfocyanate, iron tannate, chromic acid and the like, and peroxidase is preferred. An origin of peroxidase is not particularly limited. Examples of the origin of peroxidase include horseradish, yeast, saliva, cow's milk, leucocyte, enzyme derived from bacteria and the like, and peroxidase derived from horseradish is preferred. In the method according to the present invention, the concentration of the peroxidative substance is not particularly limited so long as the concentration is suitable for the measurement. When peroxidase is used as the peroxidative substance, the concentration is preferably from 1 to 100 U/mL.

### (Aqueous medium)

The aqueous medium used in the present invention is not particularly limited. Examples include deionized water, distilled water, a buffer solution and the like, and a buffer solution is preferred. The buffer used for the buffer solution is not particularly limited so long as the agent has the buffer capacity. Examples include those of pH 1 to 11 such as a lactate buffer, a citrate buffer, an acetate buffer, a succinate buffer, a phthalate buffer, a phosphate buffer, a triethanolamine buffer, a diethanolamine buffer, a lysine buffer, a barbiturate buffer, a tris(hydroxymethyl)aminomethane buffer, an imidazole buffer, a malate buffer, an oxalate buffer, a glycine buffer, a borate buffer, a carbonate buffer, a glycine buffer, a Good's buffer such as 2-morpholinoethanesulfonic acid (MES), bis(2-hydroxyethyl)iminotris(hydroxymethyl)methane (Bis-Tris), N-(2-acetamido)iminodiacetic acid (ADA), piperazine-N,N'-bis(2-ethanesulfonic acid) (PIPES), N-(2-acetamido)-2-aminoethanesulfonic acid (ACES), 3-morpholino-2-hydroxypropanesulfonic acid (MOPSO), N,N-bis(2-hydroxyethyl)-2-aminoethanesulfonic acid (BES), 3-morpholinopropanesulfonic acid (MOPS), N-[tris(hydroxymethyl)methyl]-2-aminoethanesulfonic acid (TES), 2-[4-(2-hydroxyethyl)-1-piperazinyl]ethanesulfonic acid (HEPES), 3-[N,N-bis(2-hydroxyethyl)amino]-2-hydroxypropanesulfonic acid (DIPSO), N-[tris(hydroxymethyl)methyl]-2-hydroxy-3-aminopropanesulfonic acid (TAPSO), piperazine-N,N'-bis(2-hydroxypropanesulfonic acid) (POPSO), 3-[4-(2-hydroxyethyl)-1-piperazinyl]-2-hydroxypropanesulfonic acid (HEPPSO), 3-[4-(2-hydroxyethyl)-1-piperazinyl]propanesulfonic acid [(H)EPPS], N-[tris(hydroxymethyl)methyl]glycine (Tricine), N,N-bis(2-hydroxyethyl)glycine (Bicine), N-tris(hydroxymethyl)methyl-3-aminopropanesulfonic acid (TAPS), N-cyclohexyl-2-aminoethanesulfonic acid (CHES), N-cyclohexyl-3-amino-2-hydroxypropanesulfonic acid (CAPSO) and N-cyclohexyl-3-aminopropanesulfonic acid (CAPS) and the like. A concentration of the buffer solution is not particularly limited so long as the concentration is suitable for the measurement, and is preferably from 0.001 to 2.0 mol/L, more preferably from 0.005 to 1.0 mol/L, and particularly preferably from 0.01 to 0.1 mol/L.

### (Inclusion in the aqueous medium)

As described above, when the method according to the present invention is carried out, the aqueous medium may contain, if necessary, an enzyme activity modifier, an enzyme stabilizer, a surfatant, an antiseptic, an affecting substance elimination agent, an organic solvent, an electron transfer agent and the like. The enzyme activity modifier and the enzyme stabilizer are not particularly limited so long as they have the effect. The examples include a metal ion such as a magnesium ion and a manganese ion, and they are preferably used in the concentration of from 0.1 to 5.0 mmol/L.

As the surfactant, a nonionic surfactant such as Nonion HS210 (NOF Corporation) and Triton X-100 (Sigma Co.) is preferably used in the concentration of from 0.05 to 3%. Examples of the antiseptic include sodium azide, an antibiotic, and the like, and it is suitably used in the concentration of from 0.1 to 1.0 g/L. Examples of the affecting substance elimination agent include potassium ferrocyanide, a ferrocene compound, and the like, for eliminating the influence of bilirubin, and ascorbate oxidase, and the like for eliminating the influence of ascorbic acid. A concentration of potassium ferrocyanide and the ferrocene compound is not particularly limited so long as the concentration is in the range suitable for the measurement, and is preferably from 0.001 to 0.02 g/L. A concentration of ascorbate oxidase is not particularly limited so long as the concentration is in the range suitable for the measurement, and is preferably from 0.5 to 5.0 U/mL.

Examples of the organic solvent include water-soluble organic solvents such as N,N-dimethylformamide, dimethyl sulfoxide, 1,4-dioxane, methanol, and ethanol, and N,N-dimethylformamide is preferred. A ratio of the organic solvent is not particularly limited so long as the ratio is in the range suitable for the measurement, and is preferably from 0.5 to 5.0% (v/v).

Examples of the electron transfer agent include 1-aryl-3-pyrazolidones, N-alkylaminophenols, and the like. The amount of the electron transfer agent used to the compound (I) is preferably from 1 mole% to 200 mole%, more preferably from 5 mole% to 100 mole%, and further preferably from 10 mole% to 50 mole%. Specific examples of the electron transfer agent are shown in Table 13. However, the electron transfer agent used in the method according to the present invention is not limited to these examples.

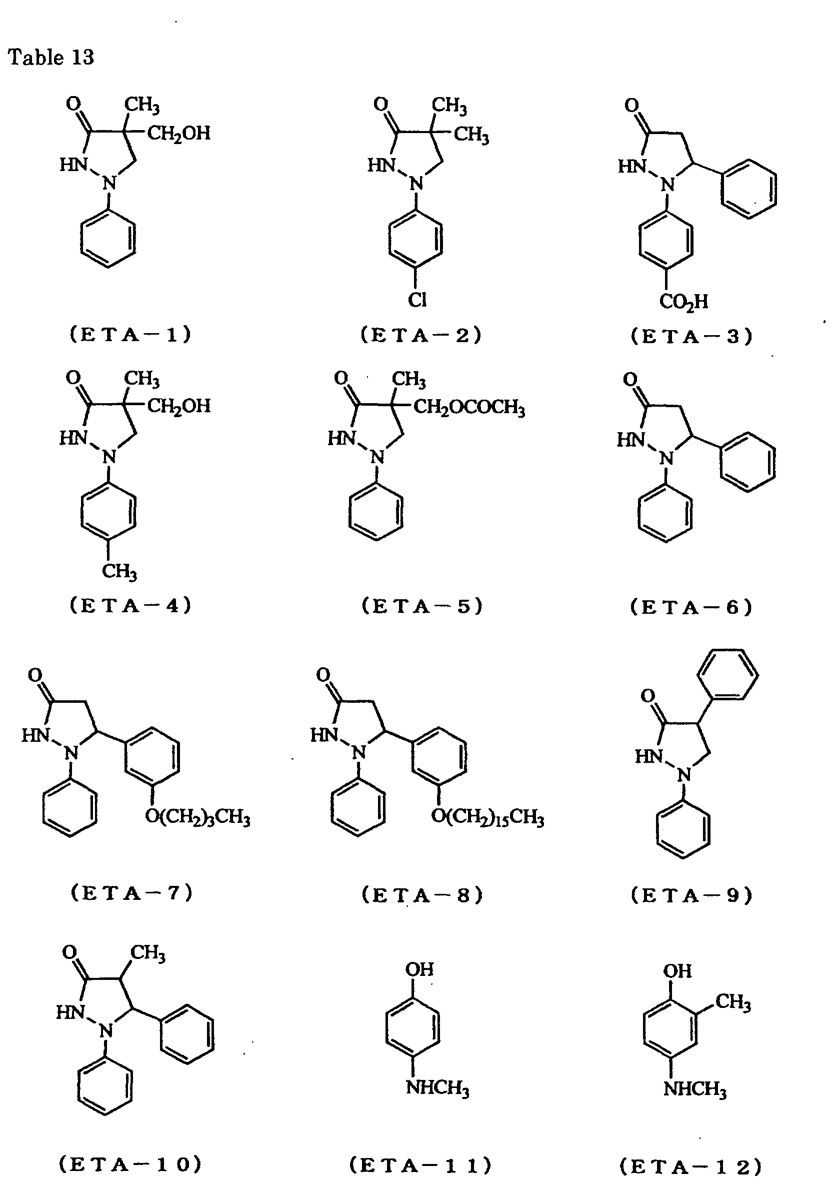

### (Reagent for determination of hydrogen peroxide and reagent for determination of a peroxidative substance)

According to another aspect of the present invention, provided is a reagent for determination of hydrogen peroxide which comprises the compound (I), the compound (B) and a peroxidative substance. The aforementioned reagent for determination of hydrogen peroxide provided by the present invention can preferably be used in the method for the determination of hydrogen peroxide according to the present invention. The present invention also provides a reagent for determination of a peroxidative substance which contains the compound (I), the compound (B) and hydrogen peroxide. The aforementioned reagent for determination of a peroxidative substance provided by the present invention can preferably be used in the method for the determination of a peroxidative substance according to the present invention.

### (Kit for the determination of hydrogen peroxide)

The reagent for determination of hydrogen peroxide according to the present invention may be preserved, circulated and used in the form of a kit. Forms of the kit are not particularly limited, and may be any one of the one-reagent system, two-reagent system, three-reagent system, and the like. The two-reagent system is preferred.

### (Preservation form of the two-reagents in the kit for determination of hydrogen peroxide of the two-reagent system)

Preservation forms of the two reagents in the kit for determination of hydrogen peroxide of the two-reagent system are not particularly limited, and a preferred form is such a form that the compound (I) and the compound (B) are separately preserved in the two reagents. Specific examples of preferred preservation form include the following preservation forms.
· Form 1-1
   ① a reagent which comprises the compound (I) and a peroxidative substance
   ② a reagent which comprises the compound (B).
· Form 1-2
   ① a reagent which comprises the compound (I)
   ② a reagent which comprises the compound (B) and a peroxidative substance.
· Form 1-3
   ① a reagent which comprises the compound (I) and a peroxidative substance
   ② a reagent which comprises the compound (B) and a peroxidative substance.

### (Kit for determination of a peroxidative substance)

The reagent for determination of a peroxidative substance according to the present invention may be preserved, circulated, and used in the form of a kit. Forms of the kit are not particularly limited, and may be any one of one-reagent system, two-reagent system, and three-reagent system. The two-reagent system is preferred.

### (Preservation form of the two reagents in the kit for determination of a peroxidative substance of the two-reagent system)

The preservation form of the two reagents in the kit for determination of a peroxidative substance of the two-reagent system is not particularly limited, and a preferred form is such a form that the compound (I) and the compound (B) are separately preserved in the two reagents. Specific examples of preferred preservation form include the following preservation forms.
· Form 2-1
   ① a reagent which comprises the compound (I) and hydrogen peroxide
   ② a reagent which comprises the compound (B).
· Form 2-2
   ① a reagent which comprises the compound (I)
   ② a reagent which comprises the compound (B) and hydrogen peroxide
· Form 2-3
   ① a reagent which comprises the compound (I) and hydrogen peroxide
   ② a reagent which comprises the compound (B) and hydrogen peroxide

### (Reagent for determination of a substance or an enzyme to be determined in a sample)

According to a further aspect of the present invention, provided is a reagent for determination of a substance or an enzyme to be determined in a sample. The reagent comprises a reagent for directly or indirectly converting the substance to be determined in a sample into hydrogen peroxide or a reagent for directly or indirectly generating hydrogen peroxide by reacting with the enzyme to be determined in a sample, the compound (I), the compound (B) and a peroxidative substance. The aforementioned reagent for determination of a substance or an enzyme to be determined in a sample provided by the present invention can preferably be used in the method for the determination of a substance or an enzyme to be determined in a sample according to the present invention.

### (Kit for determination of a substance or an enzyme to be determined in a sample)

The aforementioned reagent provided as a reagent for determination of a substance or an enzyme to be determined in a sample may be preserved, circulated, and used in a form of a kit. Forms of the kit are not particularly limited, and may be any one of one-reagent system, two-reagent system, and three-reagent system. The two-reagent system is preferred.

### (Preservation form of the two reagents in the kit for determination of a substance or an enzyme to be determined in a sample of the two-reagent system)

The reagent for determination of a substance or an enzyme to be determined in a sample contains a reagent for directly or indirectly converting the substance to be determined in a sample into hydrogen peroxide or a reagent for directly or indirectly generating hydrogen peroxide by reacting with the enzyme to be determined in a sample. When the kit for determination of a substance or an enzyme to be determined in a sample is provided as the two-reagent system, the reagent for directly or indirectly converting the substance to be determined in a sample into hydrogen peroxide or the reagent for directly or indirectly generating hydrogen peroxide by reacting with the enzyme to be determined in a sample can be contained in one or both of the reagents of the kit.

When the kit for determination of a substance or an enzyme to be determined in a sample is of the two-reagent system, the preservation forms of the two reagents are not particularly limited, and preferred form is such a form that the compound (I) and the compound (B) are separately preserved in the two reagents. Specific examples of preferred preservation form include the following preservation forms.
· Form 3-1
   ① a reagent which comprises a reagent for directly or indirectly converting the substance to be determined in a sample into hydrogen peroxide or a reagent for directly or indirectly generating hydrogen peroxide by reacting with the enzyme to be determined in a sample, the compound (I) and a peroxidative substance
   ② a reagent which comprises the compound (B).
· Form 3-2
   ① a reagent which comprises the compound (I) and a peroxidative substance
   ② a reagent which comprises a reagent for directly or indirectly converting the substance to be determined in a sample into hydrogen peroxide or a reagent for directly or indirectly generating hydrogen peroxide by reacting with the enzyme to be determined in a sample and the compound (B).
· Form 3-3
   ① a reagent which comprises a reagent for directly or indirectly converting the substance to be determined in a sample into hydrogen peroxide or a reagent for directly or indirectly generating hydrogen peroxide by reacting with the enzyme to be determined in a sample, the compound (I) and a peroxidative substance
   ② a reagent which comprises a reagent for directly or indirectly converting the substance to be determined in a sample into hydrogen peroxide or a reagent for directly or indirectly generating hydrogen peroxide by reacting with the enzyme to be determined in a sample and the compound (B).
· Form 3-4
   ① a reagent which comprises a reagent for directly or indirectly converting the substance to be determined in a sample into hydrogen peroxide or a reagent for directly or indirectly generating hydrogen peroxide by reacting with the enzyme to be determined in a sample and the compound (I)
   ② a reagent which comprises the compound (B) and a peroxidative substance.
· Form 3-5
   ① a reagent which comprises the compound (I)
   ② a reagent which comprises a reagent for directly or indirectly converting the substance to be determined in a sample into hydrogen peroxide or a reagent for directly or indirectly generating hydrogen peroxide by reacting with the enzyme to be determined in a sample, the compound (B) and a peroxidative substance.
· Form 3-6
   ① a reagent which comprises a reagent for directly or indirectly converting the substance to be determined in a sample into hydrogen peroxide or a reagent for directly or indirectly generating hydrogen peroxide by reacting with the enzyme to be determined in a sample and the compound (I)
   ② a reagent which comprises a reagent for directly or indirectly converting the substance to be determined in a sample into hydrogen peroxide or a reagent for directly or indirectly generating hydrogen peroxide by reacting with the enzyme to be determined in a sample, the compound (B), and a peroxidative substance.
· Form 3-7
   ① a reagent which comprises a reagent for directly or indirectly converting the substance to be determined in a sample into hydrogen peroxide or a reagent for directly or indirectly generating hydrogen peroxide by reacting with the enzyme to be determined in a sample, the compound (I) and a peroxidative substance
   ② a reagent which comprises the compound (B) and a peroxidative substance.
· Form 3-8
   ① a reagent which comprises the compound (I) and a peroxidative substance
   ② a reagent which comprises a reagent for directly or indirectly converting the substance to be determined in a sample into hydrogen peroxide or a reagent for directly or indirectly generating hydrogen peroxide by reacting with the enzyme to be determined in a sample, the compound (B) and a peroxidative substance.
· Form 3-9
   ① a reagent which comprises a reagent for directly or indirectly converting the substance to be determined in a sample into hydrogen peroxide or a reagent for directly or indirectly generating hydrogen peroxide by reacting with the enzyme to be determined in a sample, the compound (I) and a peroxidative substance
   ② a reagent which comprises a reagent for directly or indirectly converting the substance to be determined in a sample into hydrogen peroxide or a reagent for directly or indirectly generating hydrogen peroxide by reacting with the enzyme to be determined in a sample, the compound (B) and a peroxidative substance.

### (Form of the reagent and the kit)

The reagent and the kit according to the present invention may be provided in any form including a form in the lyophilized state, a form in the state of being in advance dissolved in an aqueous medium, and the like. The reagent and the kit in the lyophilized state are used by dissolving in an aqueous medium in the determination of hydrogen peroxide, the determination of a peroxidative substance, or the determination of a substance or an enzyme to be determined in a sample according to the present invention.

The reagent and the kit according to the present invention may contain, if necessary, an enzyme activity modifier, an enzyme stabilizer, a surfactant, an antiseptic, an affecting substance elimination agent, an organic solvent, an electron transfer agent, and the like. The reagent and the kit for determination of a substance or an enzyme to be determined in a sample according to the present invention comprise an enzyme or a group of enzymes that converts the substance to be determined in a sample into hydrogen peroxide, or a substrate or a group of substrates of the enzyme that generates hydrogen peroxide by reacting with the enzyme to be determined in a sample.

### (The compound (I) and the compound (B) in the reagent and the kit)

Contents of the compound (I) and the compound (B) in the reagent and the kit according to the present invention can suitably be adjusted by those skilled in the art so as to give an adequate concentration for the determination of hydrogen peroxide, the determination of a peroxidative substance, or the determination of a substance or an enzyme to be determined in a sample according to the present invention, and the content is not particularly limited. A preferred content is such a content that the concentration in the state in which the compound is dissolved in an aqueous medium can be adjusted to from 0.1 to 3.0 mmol/L.

### (Peroxidative substance in the reagent and the kit)

Examples of the peroxidative substance in the reagent and the kit according to the present invention include the aforementioned peroxidative substances.
Among the peroxidative substances, peroxidase is preferred, and peroxidase derived from horseradish is particularly preferred. Contents of the peroxidative substance in the reagent and the kit according to the present invention are not particularly limited so long as the contents can be adjusted to give the concentration which can be adjusted so as to be suitable for the determination of hydrogen peroxide or the determination of a substance or an enzyme to be determined in a sample according to the present invention. When peroxidase is used as the peroxidative substance, preferred content is such a content that the concentration in the state in which the substance is dissolved in an aqueous medium can be adjusted to from 1 to 100 U/mL.

### (Aqueous medium in the reagent and the kit)

As described above, the reagent and the kit according to the present invention may be in the state of being dissolved beforehand in an aqueous medium. Examples of the aqueous medium include the aforementioned aqueous mediums, and a buffer solution is preferred. Examples of a buffer used for the buffer solution include the aforementioned buffers. The concentration of the buffer solution is not particularly limited so long as the concentration is suitable for the determination of hydrogen peroxide, the determination of a peroxidative substance, or the determination of a substance or an enzyme to be determined in a sample according to the present invention, and a concentration from 0.001 to 2.0 mol/L is preferred.

### (Inclusion in the reagent and the kit)

The reagent and the kit according to the present invention may contain, if necessary, an enzyme activity modifier, an enzyme stabilizer, a surfactant, an antiseptic, an affecting substance elimination agent, an organic solvent, an electron transfer agent, and the like. Examples of the enzyme activity modifier, the enzyme stabilizer, the surfactant, the antiseptic, the affecting substance elimination agent, the organic solvent and the electron transfer agent in the reagent and the kit according to the present invention include the aforementioned enzyme activity modifier, enzyme stabilizer, surfactant, antiseptic, affecting substance elimination agent, organic solvent, and electron transfer agent, respectively. A content of each of the enzyme activity modifier, the enzyme stabilizer, the surfactant, the antiseptic, the affecting substance elimination agent, the organic solvent, and the electron transfer agent in the reagent and the kit according to the present invention is not particularly limited so long as the content can be adjusted to give a concentration which can be adjusted so as to be suitable for the determination of hydrogen peroxide, the determination of a peroxidative substance, or the determination of a substance or an enzyme to be determined in a sample according to the present invention. The preferred contents are those which can be adjusted to give the aforementioned concentration in the dissolved state in an aqueous medium.

The reagent and the kit for determination of a substance or an enzyme to be determined in a sample provided by the present invention comprise an enzyme or a group of enzymes that converts the substance to be determined in a sample into hydrogen peroxide, or a substrate or a group of substrates of the enzyme that generates hydrogen peroxide by reacting with the enzyme to be determined in a sample. In the reagent and the kit for determination of a substance or an enzyme to be determined in a sample according to the present invention, examples of the combination of the substance to be determined in a sample and the enzyme or the group of enzymes that converts the substance into hydrogen peroxide, and the combination of the enzyme to be determined in a sample and the substrate or the group of substrates of the enzyme that generates hydrogen peroxide by reacting with the enzyme include the aforementioned respective combinations.

In the reagent and the kit for determination of a substance or an enzyme to be determined in a sample provided by the present invention, a content of an enzyme or a group of enzymes that converts the substance to be determined in a sample into hydrogen peroxide, or a content of a substrate or a group of substrates of the enzyme that generates hydrogen peroxide by reacting with the enzyme to be determined in a sample can suitably be chosen by those skilled in the art so as to give an adequate concentration for the determination of a substance or an enzyme to be determined in a sample according to the present invention, and the contents are not particularly limited.

### (Hydrogen peroxide quenching function of the compound (I), the compound (III) or the compound (IV))

4-Aminoantipyrin (4-AA) is oxidatively coupled with a phenol derivative or an aniline derivative in the presence of hydrogen peroxide and a peroxidative substance such as and peroxidase. It is known that, when the two types of the compounds, which are oxidatively coupled to give a dye, are solely used in the presence of a peroxidative substance such as peroxidase, namely, when only one of the compounds, which are oxidatively coupled to give a dye, is used in the presence of a peroxidative substance such as peroxidase, the compound has a function to quench hydrogen peroxide (Japanese Published Examined Publication No. 29159/1982 and Japanese Published Unexamined Patent Publication No. 158497/1987). The compound (I), the compound (III), or the compound (IV) used in the present invention is also found to have the same function to quench hydrogen peroxide when the compound is solely used in the presence of a peroxidative substance such as peroxidase.

### (Method for quenching hydrogen peroxide by the compound (I), the compound (III) or the compound (IV))

A method for quenching hydrogen peroxide by the compound (I), the compound (III) or the compound (IV) is applied to quenching a substance which affects the measurement in the determination of a substance to be determined in a sample, wherein the substance which affects the measurement is converted into hydrogen peroxide, and the hydrogen peroxide is quenched by the compound. The quenching of hydrogen peroxide by the compound (I), the compound (III) or the compound (IV) can be carried out as follows, for example. A sample, which comprises a substance to be determined and a substance which affects the measurement, is first allowed to react with a reagent comprising an enzyme (a group of enzymes) that converts the substance which affects the measurement into hydrogen peroxide, a peroxidative substance such as peroxidase, and one compound selected from the group consisting of the compound (I) and the compound (B), and the formed hydrogen peroxide, derived from the substance which affects the measurement, is quenched. Then, a reagent comprising an enzyme (a group of enzymes) that converts the substance to be determined into hydrogen peroxide and the other compound of coupling-type of chromogens relating to coupling coloring is added to the reaction mixture to convert the substance to be determined in a sample into a dye, and colorimetry can be carried out.

### Examples

The examples of the present invention are shown as follows. However, the scope of the present invention is not limited to these examples. The reagents and enzyme used in the examples are available from the following makers. MOPS (DOJINDO Laboratories), PIPES (DOJINDO Laboratories), Nonion HS210 (NOF Corporation), Triton X-100 (Sigma Co.), sodium acetate trihydrate (Kanto Chemical Co., Inc.), sodium azide (Kanto Chemical Co., Inc.), potassium ferrocyanide (Kanto Chemical Co., Inc.), peroxidase (Toyobo Co., Ltd.), ascorbate oxidase (Asahi Kasei Corporation, Amano Pharmaceutical Co., Ltd.), uricase (Toyobo Co., Ltd.), ADA (DOJINDO Laboratories), sodium chloride (Nacalai Tesque, Inc.), creatinase (Toyobo Co., Ltd.), sarcosine oxidase (Toyobo Co., Ltd.), catalase (Toyobo Co., Ltd.), creatininase (Toyobo Co., Ltd.).

### Example 1

The dye generation reaction was carried out using hydrogen peroxide, the compound (I), and the compound (III) in the presence of peroxidase, and the absorption maximum wavelength λₘₐₓ of the generated dye and the molar extinction coefficient ε of the generated dye (the molar extinction coefficient of the generated dye based on moles of hydrogen peroxide) at the absorption maximum wavelength λₘₐₓ were calculated.
· Preparation of a chromogen solution (1)
Two test tubes (A, B) were prepared. To the test tube A, 2.0 mL of a 2.0 mg/mL N,N-dimethylformamide (DMF) solution of the compound (I) was added, and 1 mL of an aqueous solution of 10% w/v (weight/volume) Triton X-100 was added thereto. The resulting solution is hereinafter referred to as "reagent A". In the same manner, 2.0 mL of a 2.0 mg/mL DMF solution of the compound (III) was added to the test tube B, and 1.0 mL of an aqueous solution of 10% w/v Triton X-100 was added thereto. The resulting solution is hereinafter referred to as "reagent B".
· Preparation of a chromogen solution (2)
Two test tubes (1, 2) were prepared. To the test tube 1 was added 4.0 mL of a pH6.0, 0.1 mol/L phosphate buffer solution containing 10 U/ml peroxidase, and then, 600 µL of the reagent A was added thereto. The resulting solution is hereinafter referred to as "reagent 1". To the test tube 2 was added 4.0 mL of a pH6.0, 0.1 mol/L phosphate buffer solution containing 10 U/ml peroxidase, and then, 600 µL of the reagent B was added thereto. The resulting solution is hereinafter referred to as "reagent 2".
· Preparation of a chromogen solution (3)
Two test tubes (3, 4) were prepared. To the test tube 3 was added 4.0 mL of a pH8.0, 0.1 mol/L phosphate buffer solution containing 10 U/ml peroxidase, and then, 600 µL of the reagent A was added thereto. The resulting solution is hereinafter referred to as "reagent 3". To the test tube 4 was added 4.0 mL of a pH8.0, 0.1 mol/L phosphate buffer solution containing 10 U/ml peroxidase, and then, 600 µL of the reagent B was added thereto. The resulting solution is hereinafter referred to as "reagent 4".
· Sensitivity measurement (1)
Two test tubes were prepared. To each test tube was added 1.5 mL of the reagent 1 and 1.5 mL of the reagent 2, and the tubes are sufficiently shaken to homogenize the solution. To only one of the test tubes (a tube for sample) was added 40 µL of diluted aqueous hydrogen peroxide, and then both test tubes were warmed to 37°C for 5 minutes. As the diluted aqueous hydrogen peroxide, commercially available 30% aqueous hydrogen peroxide was diluted 4,000 times or 10,000 times and used depending on the coloring sensitivity. After reaction for 5 minutes, the absorption maximum wavelength λₘₐₓ and the molar extinction coefficient ε (the molar extinction coefficient of the generated dye based on moles of hydrogen peroxide) at the absorption maximum wavelength were calculated, using a solution to which diluted aqueous hydrogen peroxide was not added, as a reference.
· Sensitivity measurement (2)
Two test tubes were prepared. To each test tube was added 1.5 mL of the reagent 3 and 1.5 mL of the reagent 4 and the tubes are sufficiently shaken to homogenize the solution. To only one of the test tubes (sample) was added 40 µL of diluted aqueous hydrogen peroxide, and then both test tubes were warmed to 37°C for 5 minutes. As the diluted aqueous hydrogen peroxide, commercially available 30% aqueous hydrogen peroxide was diluted 4,000 times or 10,000 times and used depending on the coloring sensitivity. After reaction for 5 minutes, the absorption maximum wavelength λₘₐₓ and the molar extinction coefficient ε (the molar extinction coefficient of the generated dye to the number of moles of hydrogen peroxide) at the absorption maximum wavelength were calculated, using a solution to which diluted aqueous hydrogen peroxide was not added, as a reference. The results of the sensitivity evaluation are shown in Table 14.

**Table 14**

| # | Combination | | **λ**_{**max**} **(nm)** | | Sensitivity **(pH 6.0)** | | Sensitivity **(pH 8.0)** | |
|---|---|---|---|---|---|---|---|---|
| | Compound (I) | Compound (III) | **pH 6.0** | **pH 8.0** | ε | Relative Sensitivity | ε | Relative Sensitivity |
| **1** | 4―AA | EMSE | **550** | **550** | **20900** | **1.0** | **15300** | **1.0** |
| **2** | I―1 | I I I―18 | **620** | **620** | **44900** | **2.1** | **49100** | **3.2** |
| **3** | I―2 | III―18 | **620** | **620** | **49900** | **2.4** | **63900** | **4.2** |
| **4** | I―3 | III―18 | **620** | **620** | **47600** | **2.3** | **57900** | **3.8** |
| **5** | I―4 | III―18 | **620** | **620** | **35100** | **1.7** | **57400** | **3.8** |
| **6** | I―5 | III―18 | **630** | **630** | **47600** | **2.3** | **50300** | **33** |
| **7** | I―6 | III―18 | **610** | **610** | **35100** | **1.7** | **51900** | **3.4** |
| **8** | I―7 | III―18 | **620** | **620** | **50200** | **2.4** | **53100** | **3.5** |
| **9** | I―8 | III―18 | **620** | **620** | **33000** | **1.6** | **48800** | **3.2** |
| **10** | I―1 1 | III―9 | **610** | **610** | **36500** | **1.7** | **45800** | **3.0** |
| **11** | I―11 | III―10 | **640** | **640** | **69100** | **3.3** | **60000** | **3.9** |
| **12** | I―12 | III―1 | **590** | **590** | **43200** | **2.1** | **53200** | **3.5** |
| **13** | I―12 | III―2 | **620** | **620** | **39200** | **1.9** | **61700** | **4.0** |
| **14** | I―12 | III―3 | **600** | **600** | **56800** | **2.7** | **58500** | **3.8** |
| **15** | I―12 | III―4 | **605** | **605** | **62500** | **3.0** | **64200** | **4.2** |
| **16** | I―12 | III―5 | **600** | **600** | **60300** | **2.9** | **60800** | **4.0** |
| **17** | I―12 | III―6 | **610** | **610** | **60800** | **2.9** | **60100** | **3.9** |
| **18** | I―12 | III―7 | **595** | **595** | **46200** | **2.2** | **56500** | **3.7** |
| **19** | I―12 | III―8 | **600** | **600** | **34200** | **1.6** | **60900** | **4.0** |
| **20** | I―12 | III―9 | **600** | **600** | **48300** | **2.3** | **58300** | **3.8** |
| **21** | I―12 | III―10 | **610** | **610** | **58700** | **2.8** | **62000** | **4.1** |
| **22** | I―12 | III―11 | **600** | **600** | **53300** | **2.6** | **58400** | **3.8** |
| **23** | I―12 | III―12 | **600** | **600** | **54100** | **2.6** | **58500** | **3.8** |
| **24** | I―12 | III―13 | **590** | **590** | **47600** | **2.3** | **58800** | **3.8** |
| **25** | I―12 | III―14 | **590** | **590** | **41400** | **2.0** | **57400** | **3.8** |
| **26** | I―12 | III―15 | **600** | **600** | **42200** | **2.0** | **58700** | **3.8** |
| **27** | I―12 | III―16 | **600** | **600** | **37300** | **1.8** | **60100** | **3.9** |
| **28** | I―12 | III―17 | **600** | **600** | **46100** | **2.2** | **55500** | **3.6** |
| **29** | I―13 | III―4 | **590** | **600** | **24200** | **1.2** | **35100** | **2.3** |
| **30** | I―14 | III―4 | **590** | **600** | **26000** | **1.2** | **35400** | **2.3** |
| **31** | I―15 | III―4 | **580** | **600** | **40400** | **1.9** | **56100** | **3.7** |
| **32** | I―16 | III―4 | **580** | **600** | **42300** | **2.0** | **55300** | **3.6** |
| **33** | I―28 | III―21 | **650** | **650** | **27900** | **1.3** | **30000** | **2.0** |
| **34** | I―33 | III―10 | **680** | **680** | **28300** | **1.4** | **31100** | **2.0** |
| **35** | I―34 | III―21 | **680** | **680** | **28700** | **1.4** | **28400** | **1.9** |
| **36** | Comparative compound ·1 | 1-naphthol | - | | - | | **2120** | **0.1** |
| **37** | Comparative compound ·2 | 1-naphthol | - | | - | | **3200** | **0.2** |
| **38** | Comparative compound ·3 | 1-naphthol | - | | - | | **1900** | **0.1** |

Three combinations of #36 to #38 in the table are those disclosed in Table II in Japanese Published Unexamined Patent Application No. 209360/1987. The publication discloses only absorbances at 5 wavelengths in the range of from 550 to 750 nm at pH 8.0, and the maximum absorbance at 550 nm. Accordingly, in the three combinations of #36 to #38, the molar extinction coefficient ε of the generated dye at 550 nm was calculated from the concentration of the hydrazine derivatives (comparative compound-1, comparative compound-2, comparative compound-3). The structural formulae of the comparative compound-1, the comparative compound-2 and the comparative compound-3 are shown in Table 15.

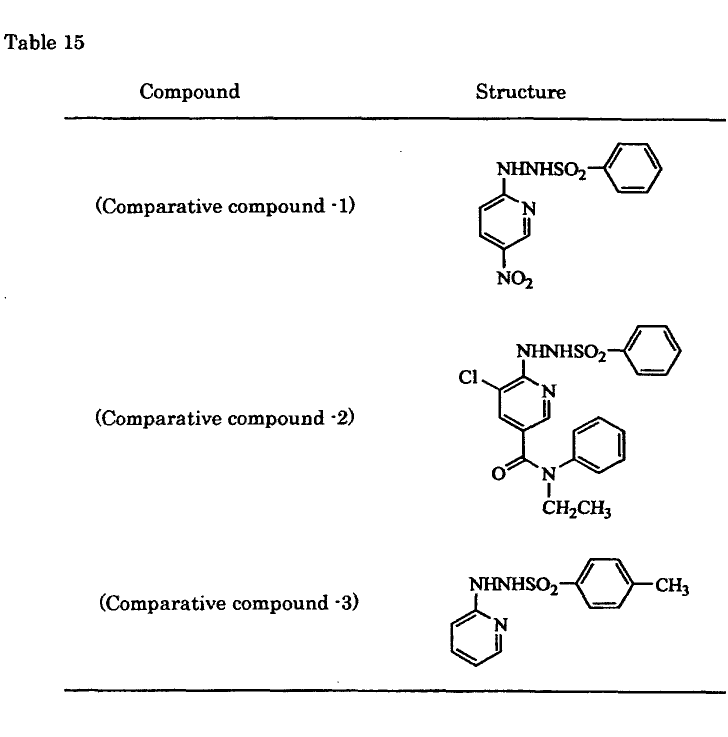

Table 14 shows that the combinations described in # 2 to #35 have higher sensitivity compared to the combination of 4-AA and EMSE both at pH 6.0 and pH 8.0, and moreover, the combinations have more than 10 times higher sensitivity at pH 8.0 compared to the combinations disclosed in Japanese Published Unexamined Patent Application (KOKAI) No. 62-209360.

### Example 2

A kit for determination of uric acid of the following composition was prepared.

### (Reagent 1): A solution of pH 7.1 comprising the following substances

| | |
|---|---|
| MOPS | 4.5 g/L |
| Sodium acetate trihydrate | 13.0 g/L |
| Sodium azide | 0.2 g/L |
| Peroxidase | 4.4 kU/L |
| Ascorbate oxidase (Asahi Kasei Corporation) | 0.9 kU/L |
| Compound (III) | 0.43 g/L |
| Nonion HS210 | 8.7 g/L |
| N,N-dimethylformamide | 4.3% (v/v) |

### (Reagent 2): A solution of pH 6.75 comprising the following substances

| | |
|---|---|
| PIPES | 7.1 g/L |
| Sodium acetate trihydrate | 11.7 g/L |
| Potassium ferrocyanide | 0.02 g/L |
| Sodium azide | 0.19 g/L |
| Peroxidase | 9.3 kU/L |
| Uricase | 0.42 kU/L |
| Compound (1) | 0.19 g/L |
| Nonion HS210 | 14.0 g/L |
| N,N-dimethylformamide | 1.9% (v/v) |

### Example 3

The correlation between uric acid concentration and absorbance was measured with an autoanalyzer using the aforementioned kit.

### Autoanalyzer (TBA-200FR type) parameter

Measurement method: Two points (16-33)
Measurement main-wavelength: 604 nm
Measurement sub-wavelength: 804 nm
Reagent 1: 240 µL
Reagent 2: 80 µL
Sample amount: 5 µL

### Preparation of sample solutions

Uric acid standard solution (Kyowa Medex Co., Ltd.) (50 mg/dL) was diluted to prepare uric acid solutions with concentrations of 5 mg/dL, 10 mg/dL, 15 mg/dL, 20 mg/dL, 25 mg/dL, 30 mg/dL, 35 mg/dL, 40 mg/dL, and 45 mg/dL.

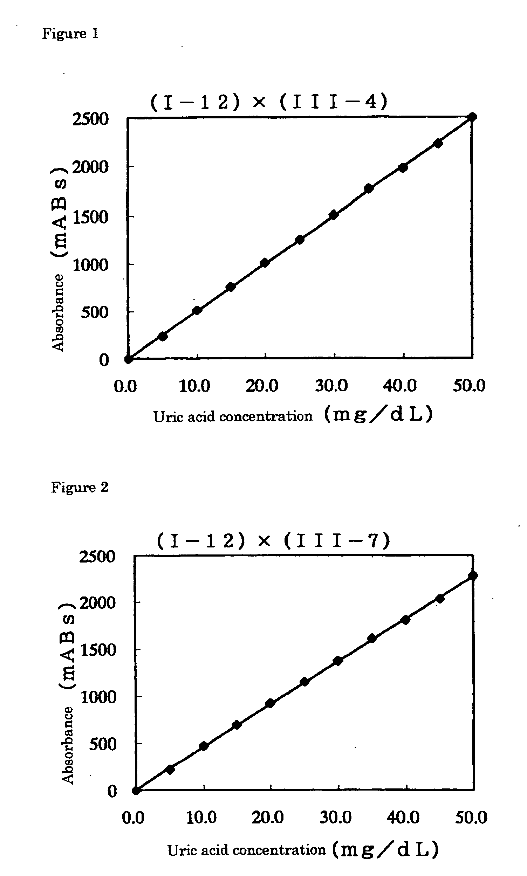

Measurement was carried out using the compound (III-4) prepared in Reference Example 6 as the compound (III) in the Reagent 1 and the compound (I-12) prepared in Reference Example I as the compound (I) in the Reagent 2. Result is shown in Fig. 1.

### Example 4

Measurement was carried out in the same manner as that of Example 3, except that the compound (III-7) prepared in Reference Example 5 as the compound (III) in the Reagent 1 and the compound (1-12) prepared in Reference Example 1 as the compound (I) in the Reagent 2 were used. Result is shown in Fig. 2.

### Example 5

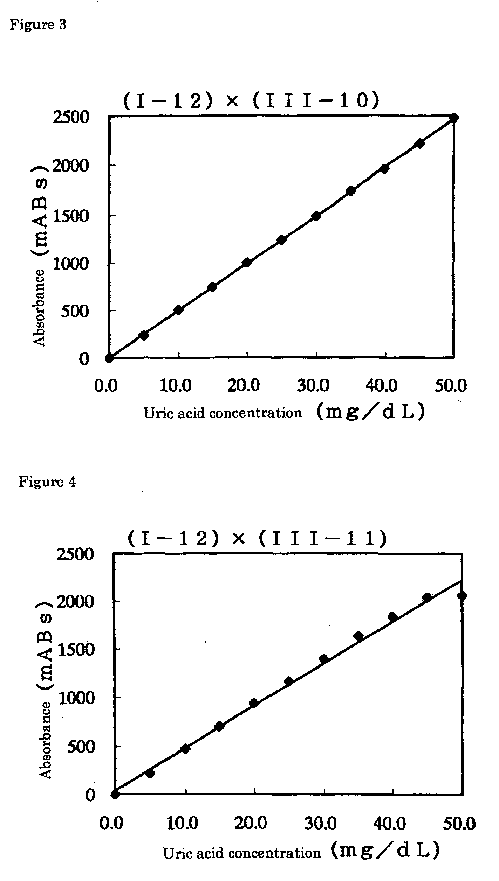

Measurement was carried out in the same manner as that of Example 3, except that the compound (III-10) as the compound (III) in the Reagent 1 and the compound (1-12) prepared in Reference Example 1 as the compound (I) in the Reagent 2 were used. Result is shown in Fig. 3.

### Example 6

Measurement was carried out in the same manner as that of Example 3, except that the compound (III-11) prepared in Reference Example 4 as the compound (III) in the Reagent 1 and the compound (I-12) prepared in Reference Example 1 as the compound (I) in the Reagent 2 were used. Result is shown in Fig. 4.

### Example 7

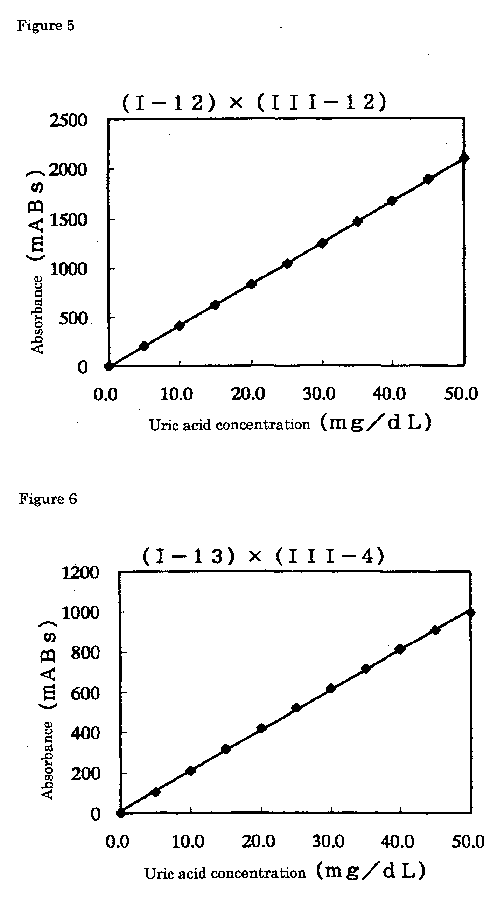

Measurement was carried out in the same manner as that of Example 3, except that the compound (III-12) as the compound (III) in the Reagent 1 and the compound (I-12) prepared in Reference Example 1 as the compound (I) in the Reagent 2 were used. Result is shown in Fig. 5.

### Example 8

Measurement was carried out in the same manner as that of Example 3, except that the compound (III-4) prepared in Reference Example 6 as the compound (III) in the Reagent 1 and the compound (1-13) as the compound (I) in the Reagent 2 were used. Result is shown in Fig. 6.

### Example 9

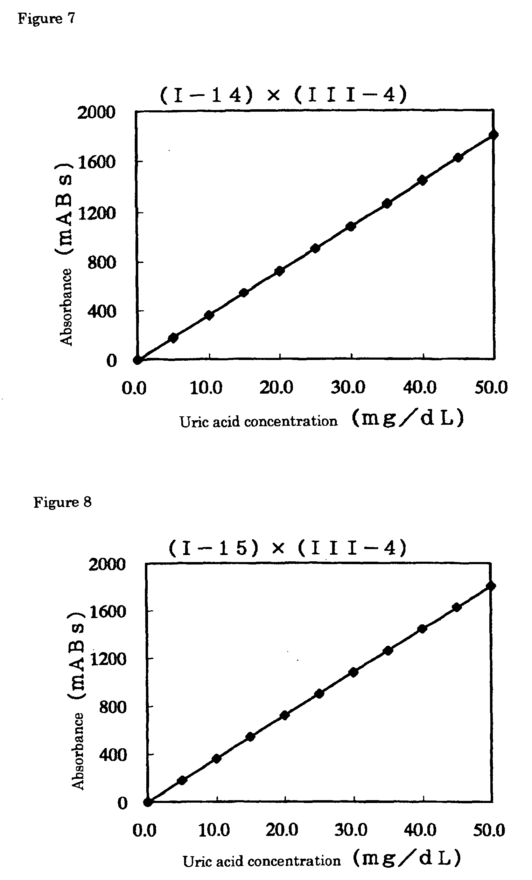

Measurement was carried out in the same manner as that of Example 3, except that the compound (III-4) prepared in Reference Example 6 as the compound (III) in the Reagent 1 and the compound (1-14) as the compound (I) in the Reagent 2 were used. Result is shown in Fig. 7.

### Example 10

Measurement was carried out in the same manner as that of Example 3, except that the compound (III-4) prepared in Reference Example 6 as the compound (III) in the Reagent 1 and the compound (1-15) as the compound (I) in the Reagent 2 were used. Result is shown in Fig. 8.

### Example 11

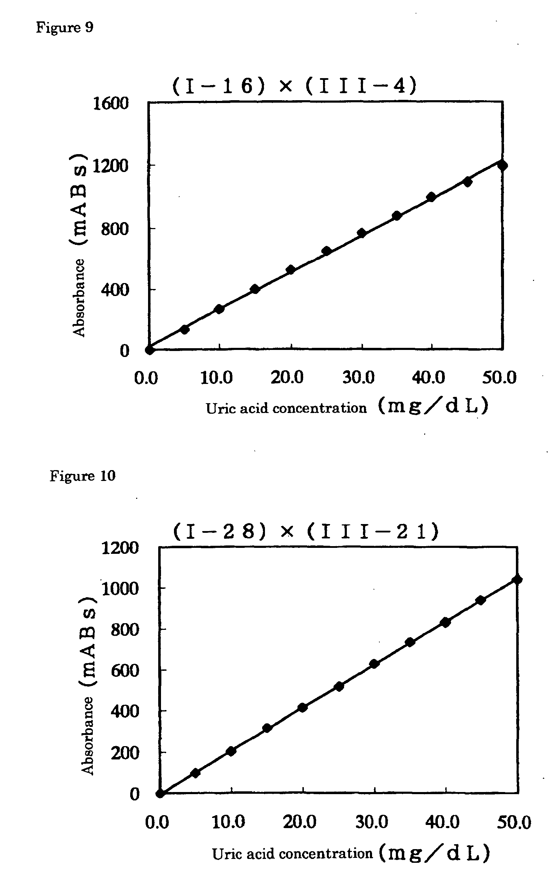

Measurement was carried out in the same manner as that of Example 3, except that the compound (III-4) prepared in Reference Example 6 as the compound (III) in the Reagent 1 and the compound (1-16) prepared in Reference Example 2 as the compound (I) in the Reagent 2 were used. Result is shown in Fig. 9.

### Example 12

Measurement was carried out in the same manner as that of Example 3, except that the compound (III-21) as the compound (III) in the Reagent 1, the compound (1-28) prepared in Reference Example 3 as the compound (I) in the Reagent 2, and 660 nm as the measurement main-wavelength were used. Result is shown in Fig. 10.

### Example 13

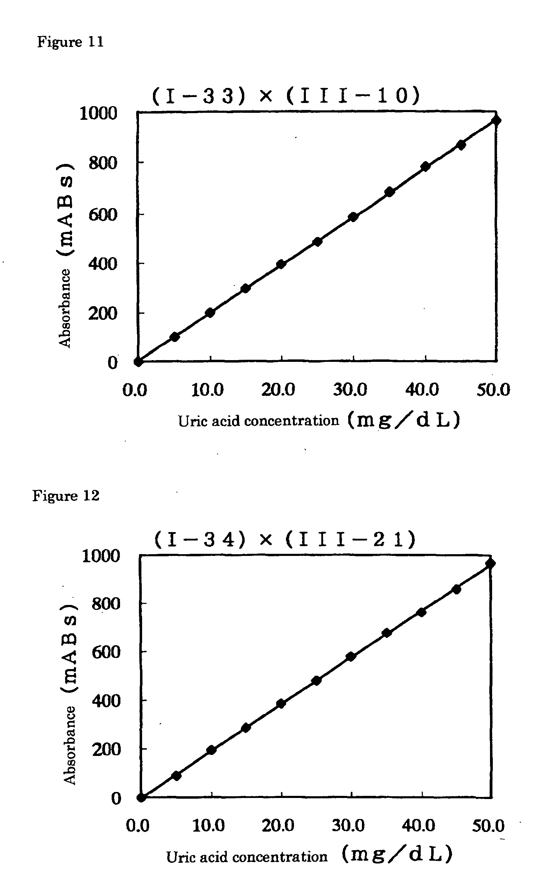

Measurement was carried out in the same manner as that of Example 3, except that the compound (III-10) as the compound (III) in the Reagent 1, the compound (I-33) as the compound (I) in the Reagent 2, and 660 nm as the measurement main-wavelength were used. Result is shown in Fig. 11.

### Example 14

Measurement was carried out in the same manner as that of Example 3, except that the compound (III-21) as the compound (III) in the Reagent 1, the compound (I-34) as the compound (I) in the Reagent 2, and 660 nm as the measurement main-wavelength were used. Result is shown in Fig. 12.

### Comparative Example 1

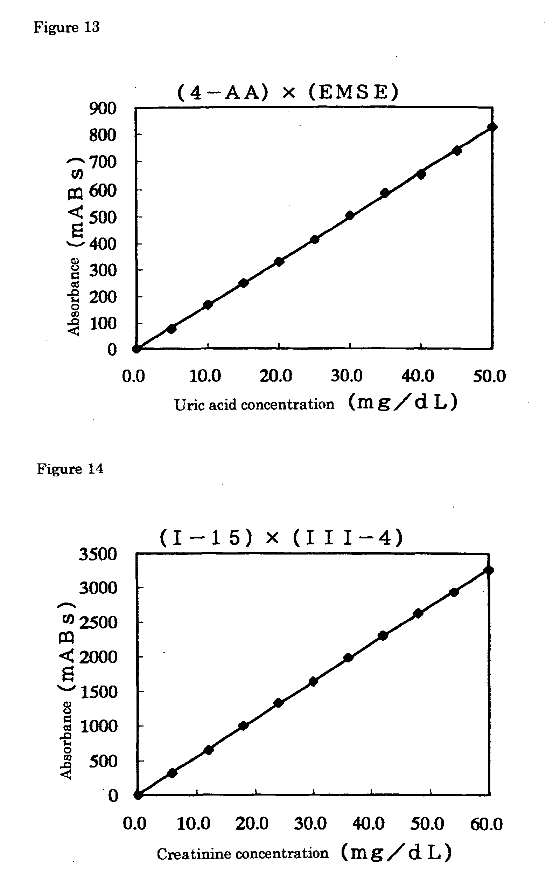

Measurement was carried out in the same manner as that of Example 3, except that N-ethyl-N-(3-methylphenyl)-N'-succinyl ethylenediamine (EMSE) in place of the compound (III) in the Reagent 1 and 4-AA in place of the compound (I) in the Reagent 2 were used. Result is shown in Fig. 13.

As described above, any combination of the compound (I) and the compound (III) used in Examples 3 to 14 showed good linearity in the range of uric acid concentration of from 0.0 to 50.0 mg/dL as well as the combination of 4-AA and EMSE. The combination of 4-AA and EMSE in Comparative Example 1 is a combination of coupling type chromogens which is generally used in the colorimetry of clinical examination.

### Example 15

A kit for determination of uric acid of the following composition was prepared.

### (Reagent 1): A solution of pH 7.0 comprising the following substances

| | |
|---|---|
| ADA | 10 g/L |
| Triton X-100 | 0.5% |
| Sodium chloride | 3 g/L |
| Compound (III-4) | 0.3 g/L |
| Creatinase | 50 kU/L |
| Sarcosine oxidase | 10 kU/L |
| Ascorbate oxidase (Amano Pharmaceutical Co., Ltd.) | 3 kU/L |
| Catalase | 300 kU/L |

### (Reagent 2): A solution of pH 7.5 comprising the following substances

| | |
|---|---|
| MOPS | 10 g/L |
| Triton X-100 | 0.5% |
| Compound (1-15) | 0.2 g/L |
| Creatininase | 250 kU/L |
| Peroxidase | 30 kU/L |

### Example 16

The correlation between creatinine concentration and absorbance was measured with an autoanalyzer using the kit of Example 15.

### Autoanalyzer (H7170S type) parameter

Measurement method: Two points (16-34)
Measurement main-wavelength: 600 nm
Measurement sub-wavelength: 700 nm
Reagent 1: 150 µL
Reagent 2: 50 µL
Sample amount: 3 µL

### Preparation of sample solutions

The creatinine standard solution (Kyowa Medex Co., Ltd.) (60 mg/dL) was diluted to prepare creatinine solutions with concentrations of 6 mg/dL, 12 mg/dL, 18 mg/dL, 24 mg/dL, 30 mg/dL, 36 mg/dL, 42 mg/dL, 48 mg/dL, and 54 mg/dL.

The result of the reaction of the creatinine solutions with the respective concentrations and the kit of Example 15 is shown in Fig. 14.

### (Synthesis of the compound)

### Reference Example 1: Synthesis of the compound (I-12)

To an acetonitrile (55mL) suspension of 4-hydrazino-2-(trifluoromethyl)-quinazoline (9.1 g) synthesized by the method disclosed in Japanese Published Unexamined Patent Application No. 261346/1995 was added pyridine (8.1 mL) dropwise under nitrogen gas flow, and subsequently was added benzenesulfonyl chloride (5.4 mL) dropwise and slowly. After reaction at room temperature for 2 hours, water (30 mL) was added dropwise to the resulting solution, and the deposited crystals were collected by filtration. The crystals were washed with water (200 mL) and then with acetonitrile (50 mL), and air-dried to give the compound (I-12) (12.0 g, yield 81.7%). Melting point: 225-227°C.

### Reference Example 2: Synthesis of the compound (I-16)

### Step 1: Synthesis of 4-chloroquinazoline

To a toluene (80 mL) suspension of 4-hydroxyquinazoline (Tokyo Kasei Kogyo Co., Ltd.) (10.2 g) was added N,N-diethylaniline (22.4 mL), and the mixture was stirred at room temperature. Phosphorus oxychloride (7.0 mL) was added to the mixture and the mixture was allowed to react at 95°C for 2 hours. After the mixture was cooled to room temperature, ethyl acetate (100 mL) and dilute hydrochloric acid (50 mL) were added thereto, and the mixture was subjected to separating accompanied with extraction. The organic layer was washed twice with dilute hydrochloric acid and then twice with saturated NaCl-H₂O, and dried over anhydrous magnesium sulfate. After filtration, the organic solvent was concentrated under reduced pressure, and the resulting solid was recrystallized from hexane/ethyl acetate to obtain 4-chloroquinazoline (8.28 g, yield 72.1%).

### Step 2: Synthesis of 4-hydrazinoquinazoline

An ethanol (30 mL) solution of 4-chloroquinazoline (8.0 g) was cooled below -5°C, and hydrazine hydrate (10 mL) was slowly added dropwise to the solution keeping the inner temperature below 0°C. After the addition, the mixture was gradually warmed up to room temperature and stirred at room temperature for 2 hours. The deposited crystals were collected by filtration, washed with a mixture of water/ethanol, and then air-dried to give 4-hydrazinoquinazoline (4.0 g, yield 51.4%).

### Step 3: Synthesis of the compound (I-16)

To an ice-cooled dimethylacetamide (20 mL) solution of 4-hydrazinoquinazoline (2.4 g) was added benzenesulfonyl chloride (2.1 mL) slowly and dropwise. After the addition, the mixture was gradually warmed up to room temperature and stirred at room temperature for 1 hour. Water (20 mL) was added dropwise to the reaction solution, and the deposited crystals were collected by filtration. The crystals were washed with a mixture of water/acetonitrile (= 1/1) and air-dried to give the compound (I-16) (4.4 g, yield 97.8%). Melting point: 171-173°C.

### Reference Example 3: Synthesis of the compound (I-28)

### Step 1: Synthesis of 4-tert-butyl-2-methylbenzenesulfonyl chloride

A methylene chloride (250 mL) solution of 3,5-di-tert-butyltoluene (49.5 g) was cooled to -5°C. To the solution was added chlorosulfonic acid (16.1 mL) dropwise and slowly. After checking of the dissapearance of the starting material, the solvent was evaporated under reduced pressure. The obtained residue was dissolved in acetonitrile (150 mL) and dimethylacetamide (50 mL), then to the solution was added phosphorus oxychloride (50 g) dropwise, and the reaction mixture was stirred at room temperature. The reaction mixture was poured into water and the whole was extracted with ethyl acetate, and then the organic layer was washed with water twice. The organic layer was dried over magnesium sulfate, and then the solvent was evaporated under reduced pressure to give 4-tert-butyl-2-methylbenzenesulfonyl chloride as oil.

### Step 2: Synthesis of compound (I-28)

To a dimethylacetamide (120 mL) solution of 4-amino-2,6-dichlorophenol (20.0 g) was added 4-tert-butyl-2-methylbenzenesulfonyl chloride (25.0 g), and the mixture was warmed at 70°C. After the reaction was completed, the reaction mixture was cooled to room temperature, and water was added to the mixture. After the whole was extracted with ethyl acetate, the organic layer was washed with dilute hydrochloric acid twice and with saturated brine once, and dried over magnesium sulfate. The solvent was evaporated under reduced pressure, and the residue was crystallized from hexane/ethyl acetate. The crystals were collected by filtration and then air-dried to give the compound (1-28) (25.0 g, yield 57.3%). Melting point: 185-187°C.

### Reference Example 4: Synthesis of the compound (III-11)

### Step 1: Synthesis of 3-(methanesulfonylamino)benzenesulfonyl chloride

To a water-cooled pyridine (253 mL)/acetonitrile (253 mL) suspension of 3-aminobenzenesulfonic acid (metanilic acid) (216.5 g) was added methanesulfonyl chloride (166 mL) dropwise over 45 minutes. Then, the reaction mixture was cooled with ice, and to the mixture was added phosphorus oxychloride (138 mL) dropwise over 5 minutes. The temperature of the reaction mixture rose to 35°C. The reaction mixture was kept stirring for 4 hours and then poured into ice water (3 kg), and the deposited crystals were collected by filtration. The crystals were sufficiently washed with water and air-dried at 30°C to give 3-(methanesulfonylamino)benzenesulfonyl chloride (344 g, yield 100%).

### Step 2: Synthesis of 5-[3-(methanesulfonylamino)phenylsulfonylamino]-1-naphthol-2-carboxylic acid

5-Amino-1-naphthol-2-carboxylic acid (synthesized from 5-amino-1-naphthol by the Kolbe-Schmitt reaction) (150 g) was dissolved in dimethylacetamide by heating, and subsequently cooled with ice. To the solution was added 3-(methanesulfonylamino)benzenesulfonyl chloride (438 g), synthesized in Step 1, over 5 minutes under stirring. Subsequently, to the mixture was added pyridine (191 mL) dropwise keeping the inner temperature below 30°C, and the mixture was stirred as it was at room temperature for 8 hours. The reaction mixture was slowly poured into water (9 L), and the deposited crystals were collected by filtration. The crystals were sufficiently rinsed with water, then with methanol, and dried at 50°C or less to give 5-[3-(methanesulfonylamino)phenylsulfonylamino]-1-naphthol-2-carboxylic acid (286.6 g, yield 89.0%).

### Step 3: Synthesis of phenyl

### 5-[3-(methanesulfonylamino)phenylsulfonylamino]-1-naphthol-2-carboxylate

5-[3-(Methanesulfonylamino)phenylsulfonylamino]-1-naphthol-2-carboxylic acid (39.2 g), phenol (25.4 g), acetonitrile (200 mL), and dimethylacetamide (5 mL) were mixed, and the mixture was heated under reflux. Under this condition, to the mixture was added phosphorus oxychloride (25.1 mL) dropwise, and the mixture was allowed to react for 10 hours. After standing to cool to room temperature, and the deposited crystals were collected by filtration and rinsed with acetonitrile. Furthermore, the obtained crystals were suspended in saturated NaCl-H₂O and the suspension was vigorously stirred, and then the suspension was subjected to filtration with suction. The crystals were washed in order with a saturated NaHCO₃-H₂O, water and acetonitrile, and then air-dried to give phenyl 5-[3-(methanesulfonylamino)phenylsulfonylamino]-1-naphthol-2-carboxylate (41.6 g, yield 90.4%).

### Step 4: Synthesis of the compound (III-11)

1,3-Dimethylimidazoline-2-one (30 mL) was added to phenyl 5-[3-(methanesulfonylamino)phenylsulfonylamino]-1-naphthol-2-carboxylate (15.0 g), and the mixture was heated to 70°C. To the mixture were added acetonitrile (75 mL) and diethylamine (15.2 mL) in order, and then the mixture was allowed to react for 12 hours under the condition of reflux by heating. After cooling the reaction mixture to room temperature, ethyl acetate (200 mL) was added to the mixture, and the organic layer was washed with dilute hydrochloric acid twice and with water twice. The extract solution was dried over anhydrous magnesium sulfate and then filtered, and the solvent was evaporated under reduced pressure. The residue was crystallized from isopropyl alcohol/hexane (10:1) to give the compound (III-11) (7.8 g, yield 54.2%). Melting point: 153-155°C.

### Reference Example 5: Synthesis of the compound (III-7)

### Step 1: Synthesis of 4-(5-amino-1-naphthol-2-carbonyl)morpholine hydrochloride

To an acetonitrile suspension (2 L) of 5-amino-1-naphthol-2-carboxylic acid (707 g) was added triphenyl phosphite (1400 mL) and then, morpholine (606 mL) was added thereto dropwise keeping the inner temperature below 60°C. After the reaction at 70°C for 2 hours, acetonitrile (2 L), activated carbon (60 g), and Celite (60 g) were added thereto, and then the mixture was stirred at 70°C for 30 minutes. The mixture was filtered when it was hot, and the residue was rinsed with acetonitrile. The filtrate and the rinsed solution were combined together, and the combined solution was heated to 78°C, and concentrated hydrochloric acid (270 mL) was added thereto dropwise and slowly. After cooling the reaction mixture to room temperature, the deposited crystals were collected by filtration. The crystals were rinsed with acetonitrile and then dried by air to give 4-(5-amino-1-naphthol-2-carbonyl)morpholine hydrochloride (751 g, yield 69.9%).

### Step 2: Synthesis of the compound (III-7)

To a water-cooled dimethylacetamide (50 mL) solution of 4-(5-amino-1-naphthol-2-carbonyl)morpholine hydrochloride (10 g) was added methanesulfonyl chloride (3.0 mL), and then, pyridine (3.2 mL) was added thereto, dropwise and slowly. After reaction at room temperature for 2 hours, water (100 mL) was added to the mixture dropwise and slowly. The deposited crystals were collected by filtration, and the crystals were washed in order with water, methanol, and acetonitrile, and then air-dried to give the compound (III-7) (9.5 g, yield 83.7%). Melting point: 209-210°C.

### Reference Example 6: Synthesis of the compound (III-4)

### Step 1: Synthesis of sodium

### 5-[N,N-bis(methanesulfonyl)amino]-1-(methanesulfonyloxy)-2-naphthalenesulfonate

To sodium 5-amino-1-naphthol-2-sulfonate (3 kg) was added water (12 L), and then 30% aqueous sodium hydroxide (1.8 kg) solution was added thereto under stirring. Then, to the mixture were added methanesulfonyl chloride (11.7 kg) and 30% aqueous sodium hydroxide (6.4 kg) solution simultaneously and dropwise over 4 hours keeping the inner temperature 40±5°C and keeping the mixture pH 6.5-7.0. After the addition was completed, the mixture was stirred for 1 hour keeping the inner temperature 40±5°C, and cooled to 17°C. The deposited crystals were collected by filtration, and rinsed with water (4.5 L). The obtained crystals were added into water (31.5 L), and the mixture was heated to 90°C with stirring. The solution was cooled to 17°C, and the deposited crystals were collected by filtration. The crystals were rinsed with methanol (11 L), and then dried to give sodium 5-[N,N-bis(methanesulfonyl)amino]-1-(methanesulfonyloxy)-2-naphthalenesulfonate (4.0 kg, yield 70.3%).

### Step 2: Synthesis of 5-[N,N-bis(methanesulfonyl)amino]-1-(methanesulfonyloxy) naphthalen-2-ylsulfonyl chloride

Sodium 5-[N,N-bis(methanesulfonyl)amino]-1-(methanesulfonyloxy)-2-naphthalenesulfonate (4.0 kg), acetonitrile (16 L), and N-methylpyrrolidone (4.04 kg) were mixed and the mixture was stirred. The reaction temperature was set at 35°C, and under this condition, phosphorus oxychloride (8.36 kg) was added thereto dropwise over 4 hours keeping the inner temperature 35±5°C. After the addition was completed, the mixture was warmed so that the inner temperature was 40°C, and stirred at the temperature for 4 hours. The reaction mixture was poured into a container comprising water (36 kg) and ice (36 kg), and the deposited crystals.were collected by filtration. The crystals were rinsed with water, and then with acetonitrile (0.8 L), and dried to give 5-[N,N-bis(methanesulfonyl)amino]-1-(methanesulfonyloxy)naphthalen-2-ylsulfonyl chloride (3.3 kg, yield 83.1%).

### Step 3: Synthesis of the compound (III-4)

5-[N,N-Bis(methanesulfonyl)amino]-1-(methanesulfonyloxy)naphthalen-2-yls ulfonyl chloride (22.3 g) and water (45 mL) were mixed and the mixture was stirred. To the mixture was added propylamine (32.8 mL) dropwise and slowly keeping the inner temperature below 40°C, and then the reaction was carried out for 1 hour keeping the inner temperature 50°C. After cooling the mixture by water to the inner temperature of 23°C, 23% aqueous potassium hydroxide (150 g) solution was added thereto dropwise, After the reaction at the inner temperature of 45°C for 30 minutes, the mixture was cooled to room temperature. To the mixture was added concentrated hydrochloric acid (100 mL) dropwise, and deposited crystals were collected by filtration. The crystals were rinsed in order with water and acetonitrile, and dried to give the compound (III-4) (13.2 g, yield 81.2%). Melting point: 157-159°C.

### Reference Example 7: Synthesis of the compound (IV-2)

3-Hydroxy-2-naphthoic acid (18.8 g) was suspended in acetonitrile (100 mL), and the suspension was stirred at room temperature. To the suspension were added β-alanine ethyl ester hydrochloride (30.6 g) and triethylamine (25 mL), and then triphenyl phosphite (70 mL) was added thereto dropwise keeping the inner temperature below 60°C. Subsequently, the reaction mixture was stirred at the outer temperature of 90°C for 5 hours. After the reaction, water (500 mL) and ethyl acetate (800 mL) were added to the reaction mixture. Further, potassium carbonate was added thereto to make the mixture alkaline. After vigorous stirring, the mixture was subjected to separating operations to give the organic layer. After the concentration of the organic layer under reduced pressure, the solid obtained was dissolved in methanol (200 mL). To the solution was added 5 mol/L aqueous sodium hydroxide solution (100 mL), and the mixture was left to stand overnight. After the solution was concentrated to ca. 100 mL under reduced pressure below 40°C, concentrated hydrochloric acid was added thereto. The deposited crystals were collected by filtration, and the obtained crystals were rinsed with water. The crystals were washed with water until the filtrate became neutral, and then air-dried to give the compound (IV-2) (14.2 g, yield 54.8%). Melting point: above 250°C.

### Industrial Applicability

The present invention provides a reagent, a kit and a method for measuring hydrogen peroxide, a peroxidative substance and a substance or an enzyme to be determined in a sample with high sensitivity.

## Claims

1. A reagent for determination of hydrogen peroxide which comprises the following ingredients (A), (B), and (C):
(A) a compound represented by the following general formula (I) or a salt thereof (hereinafter referred to as "compound (I)");
**R**^{**1**}**-NH-R**^{**2**} **(I)**
<wherein R¹ represents a substituted or unsubstituted carbamoyl group, a substituted or unsubstituted sulfamoyl group, or a substituted or unsubstituted sulfino group; and R² represents a substituted or unsubstituted arylamino group, a substituted or unsubstituted heteroarylamino group, or a substituent represented by the following general formula (II) (hereinafter referred to as "substituent II"): 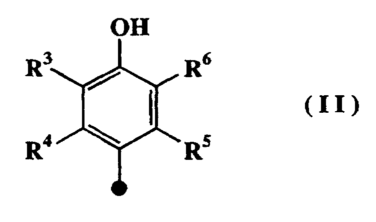 [wherein R³, R⁴, R⁵, and R⁶ are the same or different and represent X-Y-R^{a} {wherein R^{a} represents a hydrogen atom, a substituted or unsubstituted alkyl group, a substituted or unsubstituted cycloalkyl group, a substituted or unsubstituted aralkyl group, a substituted or unsubstituted alkenyl group, a substituted or unsubstituted cycloalkenyl group, a substituted or unsubstituted alkynyl group, a substituted or unsubstituted aryl group, a substituted or unsubstituted heteroaryl group, or a substituted or unsubstituted aliphatic heterocyclic group; X represents a single bond, O or (N(R^{b}))ₘN(R^{c}) (wherein m represents 0 or 1, and R^{b} and R^{c} are the same or different and each has the same meaning as that of the aforementioned R^{a}); and Y represents a single bond or Z-Q [wherein Z represents (C=O), (C=S), (C=N(R^{d})) (wherein R^{d} has the same meaning as that of the aforementioned R^{a}), (C=N(OR^{e})) (wherein Re has the same meaning as that of the aforementioned R^{a}), or SO₂; and Q represents a single bond, O, S, or N(R^{f}) (wherein R^{f} has the same meaning as that of the aforementioned R^{a})], or X and Y combine together to form X-Y which represents S(O)ₙ (wherein n represents 0 or 1), and any two of R^{a}, R^{b}, R^{c}, R^{d}, R^{e}, and R^{f} may form a ring together with atoms adjacent thereto, respectively }, a cyano group, a nitroso group, a nitro group, an isonitrile group, an isocyanate group, a thioisocyanate group, a halogen atom, a phosphono group, or a substituted or unsubstituted silyl group]>;
(B) a compound selected from the group consisting of a compound represented by the general formula (III) or a salt thereof (hereinafter referred to as "compound (III)"): 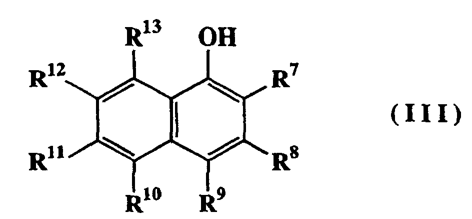 [wherein R⁹ represents a group which can be eliminated by oxidative coupling color-developing reaction with the aforementioned compound (I), and R⁷, R⁸, R¹⁰, R¹¹, R¹², and R¹³ are the same or different and each has the same meaning as that of the aforementioned R³] [provided that when R¹ is a sulfino group substituted with a substituted or unsubstituted aryl group, and R² is a substituted or unsubstituted 2-pyridylamino group, compounds, wherein (1) R⁷, R⁸, R⁹, R¹⁰, R¹¹, R¹², and R¹³ are all hydrogen atoms; (2) R⁷, R⁸, R⁹, R¹⁰, R¹¹, and R¹³ are hydrogen atoms and R¹² is a hydroxyl group; (3) R⁷, R⁸, R⁹, R¹⁰, R¹¹, and R¹² are hydrogen atoms and R¹³ is a sulfo group; and (4) R⁷, R⁸, R⁹, R¹⁰, R¹¹, and R¹² are hydrogen atoms and R¹³ is an amino group, are excluded];
and a compound represented by the general formula (IV) or a salt thereof (hereinafter referred to as "compound (IV)"): 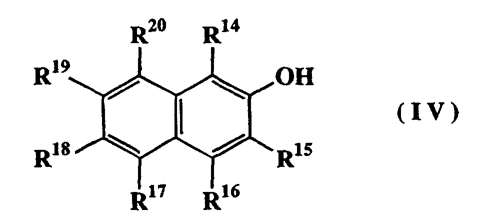 [wherein R¹⁴ represents a group which can be eliminated by oxidative coupling color-developing reaction with the aforementioned compound (I), and R¹⁵, R¹⁶, R¹⁷, R¹⁸, R¹⁹ and R²⁰ are the same or different and each has the same meaning as that of the aforementioned R³] [provided that when R¹ is a sulfino group substituted with a substituted or unsubstituted aryl group and R² is a substituted or unsubstituted 2-pyridylamino group, compounds, wherein (1) R¹⁴, R¹⁵, R¹⁶, R¹⁷, R¹⁸, and R¹⁹ are hydrogen atoms, and R²⁰ is a hydroxyl group; (2) R¹⁴, R¹⁵, R¹⁶, R¹⁷, R¹⁸, and R²⁰ are hydrogen atoms, and R¹⁹ is a hydroxyl group; and (3) R¹⁴, R¹⁵, R¹⁶, R¹⁷, R¹⁸, and R¹⁹ are hydrogen atoms, and R²⁰ is an amino group, are excluded]; and
(C) a peroxidative substance.

2. A reagent for determination of a peroxidative substance which comprises the following ingredients (A), (B), and (D):
(A) the compound (I) according to claim 1;
(B) a compound selected from the group consisting of the compound (III) and the compound (IV) according to claim 1; and
(D) hydrogen peroxide.

3. A reagent for determination of a substance or an enzyme to be determined in a sample which comprises:
(A) the compound (I) according to claim 1;
(B) a compound selected from the group consisting of the compound (III) and the compound (IV) according to claim 1;
(C) a peroxidative substance; and
(E) a reagent for directly or indirectly converting the substance to be determined in a sample into hydrogen peroxide or a reagent for directly or indirectly generating hydrogen peroxide by reacting with the enzyme to be determined in a sample.

4. The reagent according to any one of claims 1 to 3, wherein R¹ is a substituted or unsubstituted carbamoyl group or a substituted or unsubstituted sulfino group.

5. The reagent according to claim 4, wherein the substituent of the substituted carbamoyl group or the substituent of the substituted sulfino group in R¹ is a substituted or unsubstituted alkyl group, a substituted or unsubstituted aryl group, a substituted or unsubstituted heteroaryl group, or a substituted or unsubstituted aliphatic heterocyclic group.

6. The reagent according to any one of claims 1 to 5, wherein R² is a substituted or unsubstituted 4-quinazolinylamino group.

7. The reagent according to any one of claims 1 to 6, wherein R² is the substituent (II), and at least one of R³ and R⁶ in the substituent (II) has the Hammett constant sₚ of a positive value.

8. The reagent according to any one of claims 1 to 7, wherein R⁷ is Z¹-N(R^{f})-R^{a} (wherein R^{a} and R^{f} each have the same meanings as those mentioned above, and Z¹ represents (C=O) or SO₂), a substituted or unsubstituted alkanoylamino group, or a halogen atom.

9. The reagent according to any one of claims 1 to 8, wherein R⁹ is a hydrogen atom, a halogen atom, a substituted or unsubstituted aryloxy group, a substituted or unsubstituted heteroaryloxy group, a substituted or unsubstituted aliphatic heterocycle-oxy group, a substituted or unsubstituted alkanoyloxy group, a substituted or unsubstituted aroyloxy group, a substituted or unsubstituted heteroaroyloxy group, a substituted or unsubstituted aliphatic heterocycle-carbonyloxy group, a substituted or unsubstituted alkoxycarbonyloxy group, a substituted or unsubstituted heteroaryloxycarbonyloxy group, a substituted or unsubstituted aliphatic heterocycle-oxycarbonyloxy group, a substituted or unsubstituted carbamoyloxy group, a substituted or unsubstituted sulfamoyloxy group, a substituted or unsubstituted arylthio group, a substituted or unsubstituted heteroarylthio group, or a substituted or unsubstituted aliphatic heterocycle-thio group.

10. The reagent according to any one of claims 1 to 9, wherein R¹⁰ is a substituted or unsubstituted alkanoylamino group, a substituted or unsubstituted alkylsulfonylamino group, a substituted or unsubstituted arylsulfonylamino group, a substituted or unsubstituted heteroarylsulfonylamino group, a substituted or unsubstituted aliphatic heterocycle-sulfonylamino group, or a substituted or unsubstituted alkoxycarbonylamino group.

11. The reagent according to any one of claims 1 to 10, wherein the peroxidative substance is peroxidase.

12. A kit for determination of hydrogen peroxide which comprises:
(F) a reagent comprising the compound (I) according to claim 1 and a peroxidative substance; and
(G) a reagent comprising a compound selected from the group consisting of the compound (III) and the compound (IV) according to claim 1.

13. A kit for determination of a peroxidative substance which comprises:
(H) a reagent comprising the compound (I) according to claim 1 and hydrogen peroxide; and
(G) a reagent comprising a compound selected from the group consisting of the compound (III) and the compound (IV) according to claim 1.

14. A kit for determination of a substance or an enzyme to be determined in a sample which comprises:
(F) a reagent comprising the compound (I) according to claim 1 and a peroxidative substance; and
(G) a reagent comprising a compound selected from the group consisting of the compound (III) and the compound (IV) according to claim 1;
wherein the aforementioned (F) and/or (G) comprises
(E) a reagent for directly or indirectly converting the substance to be determined in a sample into hydrogen peroxide or a reagent for directly or indirectly generating hydrogen peroxide by reacting with the enzyme to be determined in a sample.

15. A kit for determination of hydrogen peroxide which comprises:
(J) a reagent comprising the compound (I) according to claim 1; and
(K) a reagent comprising a compound selected from the group consisting of the compound (III) and the compound (IV) according to claim 1, and a peroxidative substance.

16. A kit for determination of a peroxidative substance which comprises:
(J) a reagent comprising the compound (I) according to claim 1; and
(L) a reagent comprising a compound selected from the group consisting of the compound (III) and the compound (IV) according to claim 1, and hydrogen peroxide.

17. A kit for determination of a substance or an enzyme to be determined in a sample which comprises:
(J) a reagent comprising the compound (I) according to claim 1; and
(K) a reagent comprising a compound selected from the group consisting of the compound (III) and the compound (IV) according to claim 1, and a peroxidative substance;
wherein the aforementioned (J) and/or (K) comprises
(E) a reagent for directly or indirectly converting the substance to be determined in a sample into hydrogen peroxide or a reagent for directly or indirectly generating hydrogen peroxide by reacting with the enzyme to be determined in a sample.

18. A kit for determination of hydrogen peroxide which comprises:
(F) a reagent comprising the compound (I) according to claim 1 and a peroxidative substance; and
(K) a reagent comprising a compound selected from the group consisting of the compound (III) and the compound (IV) according to claim 1, and a peroxidative substance.

19. A kit for determination of a peroxidative substance which comprises:
(H) a reagent comprising the compound (I) according to claim 1 and hydrogen peroxide; and
(L) a reagent comprising a compound selected from the group consisting of the compound (III) and the compound (IV) according to claim 1, and hydrogen peroxide.

20. A kit for determination of a substance or an enzyme to be determined in a sample which comprises:
(F) a reagent comprising the compound (I) according to claim 1 and a peroxidative substance; and
(K) a reagent comprising a compound selected from the group consisting of the compound (III) and the compound (IV) according to claim 1, and a peroxidative substance;
wherein the aforementioned (F) and/or (K) comprises
(E) a reagent for directly or indirectly converting the substance to be determined in a sample into hydrogen peroxide or a reagent for directly or indirectly generating hydrogen peroxide by reacting with the enzyme to be determined in a sample.

21. The kit according to any one of claims 12 to 20, wherein R¹ is a substituted or unsubstituted carbamoyl group or a substituted or unsubstituted sulfino group.

22. The kit according to claim 21, wherein the substituent of the substituted carbamoyl group or the substituent of the substituted sulfino group in R¹ is a substituted or unsubstituted alkyl group, a substituted or unsubstituted aryl group, a substituted or unsubstituted heteroaryl group, or a substituted or unsubstituted aliphatic heterocyclic group.

23. The kit according to any one of claims 12 to 22, wherein R² is a substituted or unsubstituted 4-quinazolinylamino group.

24. The kit according to any one of claims 12 to 23, wherein R² is the substituent (II), and at least one of R³ and R⁶ in the substituent (II) has the Hammett constant sp of a positive value.

25. The kit according to any one of claims 12 to 24, wherein R⁷ is Z¹-N(R^{f})-R^{a} (wherein Z¹, R^{a}, and R^{f} each have the same meanings as those mentioned above), a substituted or unsubstituted alkanoylamino group or a halogen atom.

26. The kit according to any one of claims 12 to 25, wherein R⁹ is a hydrogen atom, a halogen atom, a substituted or unsubstituted aryloxy group, a substituted or unsubstituted heteroaryloxy group, a substituted or unsubstituted aliphatic heterocycle-oxy group, a substituted or unsubstituted alkanoyloxy group, a substituted or unsubstituted aroyloxy group, a substituted or unsubstituted heteroaroyloxy group, a substituted or unsubstituted aliphatic heterocycle-carbonyloxy group, a substituted or unsubstituted alkoxycarbonyloxy group, a substituted or unsubstituted heteroaryloxycarbonyloxy group, a substituted or unsubstituted aliphatic heterocycle-oxycarbonyloxy group, a substituted or unsubstituted carbamoyloxy group, a substituted or unsubstituted sulfamoyloxy group, a substituted or unsubstituted arylthio group, a substituted or unsubstituted heteroarylthio group, or a substituted or unsubstituted aliphatic heterocycle-thio group.

27. The kit according to any one of claims 12 to 26, wherein R¹⁰ is a substituted or unsubstituted alkanoylamino group, a substituted or unsubstituted alkylsulfonylamino group, a substituted or unsubstituted arylsulfonylamino group, a substituted or unsubstituted heteroarylsulfonylamino group, a substituted or unsubstituted aliphatic heterocycle-sulfonylamino group, or a substituted or unsubstituted alkoxycarbonylamino group.

28. The kit according to any one of claims 12 to 27, wherein the peroxidative substance is peroxidase.

29. A method for determination of hydrogen peroxide which comprises the following steps:
(1) a step of reacting hydrogen peroxide with the following (A) and (B) in the presence of a peroxidative substance:
(A) the compound (I) according to claim 1
(B) a compound selected from the group consisting of the compound (III) and the compound (IV) according to claim 1; and
(2) a step of carrying out colorimetry of a dye generated in the aforementioned step (1).

30. A method for determination of a peroxidative substance which comprises the following steps:
(1) a step of reacting a peroxidative substance with the following (A) and (B) in the presence of hydrogen peroxide:
(A) the compound (I) according to claim 1
(B) a compound selected from the group consisting of the compound (III) and the compound (IV) according to claim 1; and
(2) a step of carrying out colorimetry of a dye generated in the aforementioned step (1).

31. A method for determination of a substance or an enzyme to be determined in a sample which comprises the following steps:
(1) a step of reacting a sample containing a substance or an enzyme to be determined with the following (A), (B) and (E) in the presence of a peroxidative substance:
(A) the compound (I) according to claim 1
(B) a compound selected from the group consisting of the compound (III) and the compound (IV) according to claim 1
(E) a reagent for directly or indirectly converting the substance to be determined in a sample into hydrogen peroxide or a reagent for directly or indirectly generating hydrogen peroxide by reacting with the enzyme to be determined in a sample; and
(2) a step of carrying out colorimetry of a dye generated in the aforementioned step (1).

32. The method according to any one of claims 29 to 31, wherein R¹ is a substituted or unsubstituted carbamoyl group or a substituted or unsubstituted sulfino group.

33. The method according to claim 32, wherein the substituent of the substituted carbamoyl group or the substituent of the substituted sulfino group in R¹ is a substituted or unsubstituted alkyl group, a substituted or unsubstituted aryl group, a substituted or unsubstituted heteroaryl group, or a substituted or unsubstituted aliphatic heterocyclic group.

34. The method according to any one of claims 29 to 33, wherein R² is a substituted or unsubstituted 4-quinazolinylamino group.

35. The method according to any one of claims 29 to 34, wherein R² is the substituent (II), and at least one of R³ and R⁶ in the substituent (II) has the Hammett constant sₚ of a positive value.

36. The method according to any one of claims 29 to 35, wherein R⁷ is Z¹-N(R^{f})-R^{a} (wherein Z¹, R^{a} and R^{f} each have the same meanings as those mentioned above), a substituted or unsubstituted alkanoylamino group, or a halogen atom.

37. The method according to any one of claims 29 to 36, wherein R⁹ is a hydrogen atom, a halogen atom, a substituted or unsubstituted aryloxy group, a substituted or unsubstituted heteroaryloxy group, a substituted or unsubstituted aliphatic heterocycle-oxy group, a substituted or unsubstituted alkanoyloxy group, a substituted or unsubstituted aroyloxy group, a substituted or unsubstituted heteroaroyloxy group, a substituted or unsubstituted aliphatic heterocycle-carbonyloxy group, a substituted or unsubstituted alkoxycarbonyloxy group, a substituted or unsubstituted heteroaryloxycarbonyloxy group, a substituted or unsubstituted aliphatic heterocycle-oxycarbonyloxy group, a substituted or unsubstituted carbamoyloxy group, a substituted or unsubstituted sulfamoyloxy group, a substituted or unsubstituted arylthio group, a substituted or unsubstituted heteroarylthio group, or a substituted or unsubstituted aliphatic heterocycle-thio group.

38. The method according to any one of claims 29 to 37, wherein R¹⁰ is a substituted or unsubstituted alkanoylamino group, a substituted or unsubstituted alkylsulfonylamino group, a substituted or unsubstituted arylsulfonylamino group, a substituted or unsubstituted heteroarylsulfonylamino group, a substituted or unsubstituted aliphatic heterocycle-sulfonylamino group, or a substituted or unsubstituted alkoxycarbonylamino group.

39. The method according to any one of claims 29 to 38, wherein the peroxidative substance is peroxidase.
